(19) Europäisches Patentamt
European Patent Office
Office européen des brevets

(11) **EP 4 632 458 A1**

(12) **EUROPEAN PATENT APPLICATION**
published in accordance with Art. 153(4) EPC

(43) Date of publication:
**15.10.2025 Bulletin 2025/42**

(21) Application number: **23923887.6**

(22) Date of filing: **27.12.2023**

(51) International Patent Classification (IPC):
***G02B 13/00** (2006.01)* ***G02B 13/18** (2006.01)*
***G02B 15/14** (2006.01)* ***H04N 23/55** (2023.01)*

(52) Cooperative Patent Classification (CPC):
**G02B 13/00; G02B 13/18; G02B 15/14; H04N 23/55**

(86) International application number:
**PCT/CN2023/142537**

(87) International publication number:
**WO 2024/174724 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.02.2023 CN 202310190080**

(71) Applicant: **Huawei Technologies Co., Ltd.**
**Shenzhen, Guangdong 518129 (CN)**

(72) Inventors:
- **ZHANG, Kaiyuan**
  **Shenzhen, Guangdong 518129 (CN)**
- **ZHANG, Yi**
  **Shenzhen, Guangdong 518129 (CN)**

(74) Representative: **Gill Jennings & Every LLP**
**The Broadgate Tower**
**20 Primrose Street**
**London EC2A 2ES (GB)**

# (54) LENS ASSEMBLY, CAMERA MODULE AND ELECTRONIC DEVICE

(57) Embodiments of this application provide a lens assembly, a camera module, and an electronic device. The lens assembly includes a first lens group and a second lens group that are sequentially arranged along an optical axis from an object side to an image side. The first lens group and the second lens group have a positive focal power and a negative focal power respectively. A ratio of a focal length f1 of the first lens group to a focal length f2 of the second lens group satisfies 0.4<|f1/f2|<1.5. The focal lengths and the focal powers are properly assigned between the lens groups. As a result, a wide aperture design for the lens assembly is achieved, and therefore imaging quality is improved. **In** addition, high imaging quality in an infinity shooting scene can be achieved due to a large light intake. When the lens assembly switches from an infinity state to a macro state, the first lens group moves toward the object side along the optical axis, and a range of a movement distance of the first lens group is 1<L<3.5. This can implement a macro shooting function with a high magnification and a high resolution, and improve imaging quality in a macro shooting scene.

[FIG. 3]

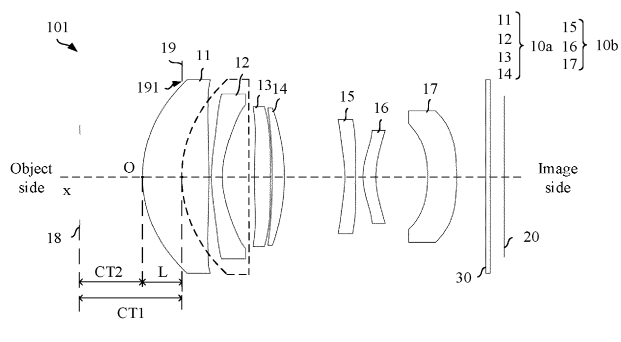


EP 4 632 458 A1

## Description

This application claims priority to Chinese Patent Application No. 202310190080.0, filed with the China National Intellectual Property Administration on February 21, 2023 and entitled "LENS ASSEMBLY, CAMERA MODULE, AND ELECTRONIC DEVICE", which is incorporated herein by reference in its entirety.

TECHNICAL FIELD

This application relates to the field of electronic device technologies, and in particular, to a lens assembly, a camera module, and an electronic device.

BACKGROUND

Camera modules have become indispensable functional components in electronic products such as mobile phones, tablet computers, notebook computers, and wearable devices. As electronic devices evolve toward multifunctionality, shooting effect of the electronic devices and shooting requirements for the electronic devices increasingly rival those of single-lens reflex cameras. Consequently, functional effect of the camera modules gradually becomes one of important characteristics of the electronic devices.

The camera module usually includes a lens assembly and an image sensor. The lens assembly is usually formed by a plurality of lenses sequentially arranged along an optical axis. Light passes through the lens assembly and is then projected onto the image sensor, to implement optical-to-electrical conversion and further implement imaging. Therefore, performance of the lens assembly directly determines imaging performance of the camera module. With pursuit of better shooting effect, there is an increasingly high requirement for an aperture of the lens assembly. A wide aperture facilitates functions of a camera such as night photography, snapshot, video, and background blurring. Besides, as functions of the camera diversify, shooting scenes to which the camera is applicable set increasingly high requirements. For example, for photographing a distant object in a dark or night shooting environment, the lens assembly needs a wide aperture, so that a light intake can be increased to achieve better shooting effect and satisfy a shooting requirement for a distant scene or an infinity scene. For shooting a close-up scene, for example, photographing a close-up object such as a flower, a doll, or an insect, a higher magnification and a higher resolution are pursued, to implement effect of capturing details of such objects in a close-up scene or a macro scene.

Therefore, there is an urgent need for a lens assembly. The lens assembly can achieve a wide aperture design, to improve overall imaging effect and quality and satisfy a shooting requirement for an infinity scene. In addition, the lens assembly has a high magnification and a high resolution, to implement good shooting effect in a macro scene.

SUMMARY

Embodiments of this application provide a lens assembly, a camera module, and an electronic device. The lens assembly achieves a wide aperture design to satisfy a requirement for an infinity shooting scene, implements a macro shooting function with a high magnification and a high resolution, and is small-sized and low-cost.

A first aspect of embodiments of this application provides a lens assembly, including a first lens group and a second lens group that are sequentially arranged along an optical axis from an object side to an image side. Each lens group includes a plurality of lenses sequentially arranged along the optical axis. The first lens group has a positive focal power, and the second lens group has a negative focal power. The focal powers are properly assigned between the lens groups. This helps achieve a wide aperture design for the lens assembly.

A focal length f1 of the first lens group and a focal length f2 of the second lens group satisfy $0.4<|f1/f2|<1.5$. The focal lengths are properly assigned between the lens groups, so that the focal powers are further assigned between the lens groups. This causes the constructed lens assembly to have a small f-number, thereby achieving the wide aperture design for the lens assembly. As a result, an overall light intake of the lens assembly is effectively increased, and imaging quality and imaging effect are effectively improved. The lens assembly with the wide aperture design can further satisfy a requirement for an infinity shooting scene (especially in a dark or night shooting environment), thereby improving shooting effect in a distant shooting scene, an infinity shooting scene, or the like. In addition, when the lens assembly is in the infinity state, it can be ensured that the lens assembly has a long focal length. This helps implement a long-focus function of the lens assembly.

The first lens group is capable of moving along the optical axis. When the lens assembly switches from the infinity state to a macro state, the first lens group moves toward the object side. This changes a distance between the first lens group and the second lens group, increases a focal length of the lens assembly, and increases a magnification of the lens assembly, so that a macro function can be implemented. In addition, the entire lens assembly is designed with a wide aperture, so that a resolution of the lens assembly can be effectively increased. As a result, a magnification and a resolution of the lens assembly in the macro state are high, and imaging quality and imaging effect in a close-up shooting scene or a macro shooting scene are improved.

When the lens assembly switches from the infinity state to the macro state, a movement distance L of the first lens group along the optical axis satisfies $1<L<3.5$. In this case, while the macro function of the lens assembly is implemented, the magnification of the lens assembly can be further improved. This helps implement a macro function with a high magnification, thereby significantly improving imaging quality and imaging effect in a close-up shooting scene or a macro shooting scene.

In a possible implementation, a light intake of the lens assembly in the macro state is less than a light intake of the lens assembly in the infinity state. As a result, a light intake of the lens assembly can be controlled in different shooting scenes, dynamic control ranges of an aperture in different scenes can be improved, and high imaging quality and good imaging effect in a plurality of scenes can be ensured.

When the lens assembly is in the infinity state, the lens assembly has a large light intake and a relatively wide aperture, so that a depth-of-field range can be reduced. This helps improve imaging brightness in an infinity shooting scene, especially in a dark or night shooting environment, and facilitates implementation of functions such as background blurring and snapshot, thereby improving the imaging quality and imaging effect.

When the lens assembly is in the macro state, the lens assembly has a small light intake and a relatively narrow aperture, so that a depth-of-field range can be increased. As a result, depiction of details of a scene or the like is more realistic, and the imaging quality and imaging effect in the macro shooting scene are improved.

In a possible implementation, an f-number F# of the lens assembly in the infinity state satisfies $1.2 \le F\# \le 3.0$. The f-number F# is small, so that the lens assembly features a wide aperture. This ensures that the lens assembly has a large light intake, thereby further improving the imaging quality and imaging effect in the infinity shooting scene.

In a possible implementation, an f-number F# of the lens assembly in the macro state satisfies $3.0 \le F\# \le 16$. As a result, the lens assembly still has a relatively wide aperture in the macro state. This ensures the light intake of the lens assembly, and further increases the resolution of the lens assembly, thereby ensuring high imaging quality and good imaging effect in the macro shooting scene.

In a possible implementation, the lens assembly further includes an aperture stop, where the aperture stop is located on a side that is of the first lens group and that faces the object side. The aperture stop may limit light entering the lens assembly, to adjust intensity of the light, and can be configured to control the light intake of the lens assembly. This helps improve the imaging quality.

In a possible implementation, the first lens group includes at least a first lens, and the first lens is located on a side that is in the first lens group and that faces the object side.

The movement distance $L=CT1-CT2$, where CT1 represents a distance, along the optical axis between an object-side surface of the first lens and the aperture stop, for the lens assembly in the infinity state; and CT2 represents a distance, along the optical axis between the object-side surface of the first lens and the aperture stop, for the lens assembly in the macro state. The movement distance of the lens assembly is set by using the distance along the optical axis between the aperture stop and the first lens as a reference. This facilitates actual assembly, simulation testing, and the like, and helps improve accuracy of assembly, simulation testing, and the like.

In a possible implementation, the aperture stop is a variable aperture stop, and a diameter of the aperture stop of the lens assembly in the macro state is less than a diameter of the aperture stop of the lens assembly in the infinity state. The light intake of the lens assembly can be controlled by changing the diameter of the aperture stop. This facilitates configuration, and helps reduce design difficulty.

In a possible implementation, the lens assembly further includes a lens barrel, where the plurality of lens groups are disposed in the lens barrel. The lens barrel is configured to accommodate and support lenses. A light transmission hole is provided on an end that is of the lens barrel and that faces the object side along the optical axis. The light transmission hole also affects the light intake. A diameter of the light transmission hole is caused to be greater than the diameter of the aperture stop of the lens assembly in the macro state, so that the light intake of the lens assembly in the macro state is controlled to be less than the light intake of the lens assembly in the infinity state.

In a possible implementation, a magnification Mag of the lens assembly in the macro state satisfies $0.1x<Mag<0.5x$. As a result, the lens assembly has a large magnification, so that a requirement for a close-up shooting scene or a macro shooting scene is satisfied, and the imaging quality and imaging effect of the lens assembly in the macro shooting scene are further improved.

In a possible implementation, the lens assembly satisfies $0.8<EFL/TTL1<1$, where EFL represents a focal length of the lens assembly in the infinity state, and TTL1 represents a total track length of the lens assembly in the infinity state. It is ensured that the lens assembly has a short total track length. This helps achieve small-sized designs of the lens assembly and the camera module. In addition, the lens assembly has a longer focal length, so that a better long-focus function can be implemented in the infinity shooting scene. In other words, the imaging quality and an imaging effect in the infinity state can be further improved while the total track length of the lens assembly is decreased.

In a possible implementation, the lens assembly satisfies $0.1<L/TTL1<0.5$, where TTL1 represents the total track length of the lens assembly in the infinity state. The lens assembly has a large movement distance and a short total track length. As a result, a length dimension of the lens assembly in the infinity state is decreased while the magnification of the lens assembly in the macro state is increased, so that the macro function with a high magnification is implemented while the small-sized design of the lens assembly is achieved. This helps satisfy a requirement for thinning the camera module.

In a possible implementation, the lens assembly satisfies $0.1<(L/C)*10<1.0$, where C represents an object distance for the lens assembly in the macro state. As a result, the first lens group has a large movement distance, and the object distance for the lens assembly in the macro state is small. This further increases the magnification of the lens assembly, so that the lens assembly can implement a macro function with a higher magnification, and the imaging quality in the macro shooting scene is further improved.

In a possible implementation, a refractive index Nd1 of the first lens satisfies $1.4<Nd1<1.85$. The first lens has a relatively low refractive index, so that image quality of a formed image can be effectively improved. This helps improve the imaging quality.

In a possible implementation, the lens is an aspherical lens. The aspherical lens may reduce or eliminate spherical aberration and distortion that are introduced by a spherical lens. This can further help achieve wide-aperture performance of the lens assembly, and also help decrease a total length of the lens assembly.

In a possible implementation, shapes of the lenses include, at least, one or a combination of the following: a circle, an ellipse, a track oval, and a square. A lens in a shape of a track oval, a square, or the like may be formed by cutting a lens in a shape of a circle or an ellipse. This can reduce a size of the lens, and reduce space occupied by the lens, so that the small-sized designs of the lens assembly and the camera module can be achieved.

A second aspect of embodiments of this application provides a camera module, including at least an image sensor and the lens assembly according to the first aspect or any one of the possible implementations of the first aspect, where the image sensor is located on a side that is of the lens assembly and that faces the image side. The lens assembly is included, where the lens assembly can achieve a wide aperture design, and has a large light intake. As a result, imaging quality and imaging effect of the camera module is improved, and a shooting requirement for a distant scene or an infinity scene can be satisfied. In addition, the lens assembly further has a high resolution and a high magnification, so that close-up shooting or macro shooting can be implemented with high imaging quality and good imaging effect. This helps diversify functions of the camera module.

A third aspect of embodiments of this application provides an electronic device, including at least a housing and the foregoing camera module, where the camera module is disposed on the housing. The camera module is included, where the camera module has high imaging quality and good imaging effect, and has diverse shooting functions that are applicable to shooting of a plurality of types of scenes. This helps improve functionality of the electronic device.

BRIEF DESCRIPTION OF DRAWINGS

FIG. 1 is a diagram of a structure of an electronic device according to an embodiment of this application;
FIG. 2 is a diagram of a structure of a camera module in which a lens assembly is in an infinity state according to an embodiment of this application;
FIG. 3 is a diagram of a structure of a camera module in which a lens assembly is in a macro state according to an embodiment of this application;
FIG. 4 is a diagram of a simulated structure of a camera module in which a lens assembly is in an infinity state according to Embodiment 1 of this application;
FIG. 5 is a diagram of a simulated structure of a camera module in which a lens assembly is in a macro state according to Embodiment 1 of this application;
FIG. 6 is a diagram of a modulation transfer function curve for a lens assembly in an infinity state according to Embodiment 1 of this application;
FIG. 7 is a diagram of a modulation transfer function curve for a lens assembly in a macro state according to Embodiment 1 of this application;
FIG. 8 is a diagram of a simulated structure of a camera module in which a lens assembly is in an infinity state according to Embodiment 2 of this application;
FIG. 9 is a diagram of a simulated structure of a camera module in which a lens assembly is in a macro state according to Embodiment 2 of this application;
FIG. 10 is a diagram of a modulation transfer function curve for a lens assembly in an infinity state according to Embodiment 2 of this application;
FIG. 11 is a diagram of a modulation transfer function curve for a lens assembly in a macro state according to Embodiment 2 of this application;
FIG. 12 is a diagram of a simulated structure of a camera module in which a lens assembly is in an infinity state according to Embodiment 3 of this application;

FIG. 13 is a diagram of a simulated structure of a camera module in which a lens assembly is in a macro state according to Embodiment 3 of this application;

FIG. 14 is a diagram of a modulation transfer function curve for a lens assembly in an infinity state according to Embodiment 3 of this application;

FIG. 15 is a diagram of a modulation transfer function curve for a lens assembly in a macro state according to Embodiment 3 of this application;

FIG. 16 is a diagram of a simulated structure of a camera module in which a lens assembly is in an infinity state according to Embodiment 4 of this application;

FIG. 17 is a diagram of a simulated structure of a camera module in which a lens assembly is in a macro state according to Embodiment 4 of this application;

FIG. 18 is a diagram of a modulation transfer function curve for a lens assembly in an infinity state according to Embodiment 4 of this application;

FIG. 19 is a diagram of a modulation transfer function curve for a lens assembly in a macro state according to Embodiment 4 of this application;

FIG. 20 is a diagram of a simulated structure of a camera module in which a lens assembly is in an infinity state according to Embodiment 5 of this application;

FIG. 21 is a diagram of a simulated structure of a camera module in which a lens assembly is in a macro state according to Embodiment 5 of this application;

FIG. 22 is a diagram of a modulation transfer function curve for a lens assembly in an infinity state according to Embodiment 5 of this application;

FIG. 23 is a diagram of a modulation transfer function curve for a lens assembly in a macro state according to Embodiment 5 of this application;

FIG. 24 is a diagram of a simulated structure of a camera module in which a lens assembly is in an infinity state according to Embodiment 6 of this application;

FIG. 25 is a diagram of a simulated structure of a camera module in which a lens assembly is in a macro state according to Embodiment 6 of this application;

FIG. 26 is a diagram of a modulation transfer function curve for a lens assembly in an infinity state according to Embodiment 6 of this application;

FIG. 27 is a diagram of a modulation transfer function curve for a lens assembly in a macro state according to Embodiment 6 of this application;

FIG. 28 is a diagram of a simulated structure of a camera module in which a lens assembly is in an infinity state according to Embodiment 7 of this application;

FIG. 29 is a diagram of a simulated structure of a camera module in which a lens assembly is in a macro state according to Embodiment 7 of this application;

FIG. 30 is a diagram of a modulation transfer function curve for a lens assembly in an infinity state according to Embodiment 7 of this application;

FIG. 31 is a diagram of a modulation transfer function curve for a lens assembly in a macro state according to Embodiment 7 of this application;

FIG. 32 is a diagram of a simulated structure of a camera module in which a lens assembly is in an infinity state according to Embodiment 8 of this application;

FIG. 33 is a diagram of a simulated structure of a camera module in which a lens assembly is in a macro state according to Embodiment 8 of this application;

FIG. 34 is a diagram of a modulation transfer function curve for a lens assembly in an infinity state according to Embodiment 8 of this application; and

FIG. 35 is a diagram of a modulation transfer function curve for a lens assembly in a macro state according to Embodiment 8 of this application.

Reference numerals:

100: electronic device;
101: camera module;
10: lens assembly;
10a: first lens group; 11: first lens; 12: second lens; 13: third lens; 14: fourth lens;
10b: second lens group; 15: fifth lens; 16: sixth lens; 17: seventh lens; 18: aperture stop; 19: lens barrel;
20: image sensor; 30: optical filter;
102: housing;
103: speaker opening;

104: data interface.

DESCRIPTION OF EMBODIMENTS

Terms used in embodiments of this application are only used to explain specific embodiments of this application, but are not intended to limit this application.

For ease of understanding, related technical terms in embodiments of this application are first explained and described.

Object side: With a lens assembly as a boundary, a side on which a photographed object is located is the object side. A surface that is of a lens or an optical element and that faces the object side is an object-side surface.

Image side: A side on which an image of the photographed object is located is the image side. A surface that is of the lens or the optical element and that faces the image side is an image-side surface.

Object distance: is a distance between the photographed object and an optical center of a lens, and is a distance between a photographed plane and a front principal plane of the lens assembly (a first lens on a side that is in the lens assembly and that faces the object side).

Optical axis: refers to light passing through centers of lenses in the lens assembly (refer to an x axis in FIG. 2).

Half image height (Image Height, IH for short): is a radius of an imaging circle, and is half of an image height of an image formed by the lens assembly.

Infinity: When the object distance exceeds a specific value, the photographed object may be considered as being captured by the lens assembly from a light point at infinity in a form of parallel light beams. When the lens assembly is in an infinity (∞) state, that is, the lens assembly is focused at "∞", all scenes at infinity can be clearly imaged.

Macro: refers to shooting at a short distance with a high magnification, making it possible to shoot an image that is the same size as or smaller than an actual object. In a macro state, the lens assembly has a magnification of 1x or higher, and a short minimum object distance. In the macro state, the lens assembly may have a focal length greater than a focal length of the lens assembly in an infinity state, and has a high resolution, so that the object is more clearly photographed.

Focal power: indicates a capability of a lens to refract incident parallel light beams.

Positive focal power: indicates that a lens has a positive focal length and has effect of converging light.

Negative focal power: indicates that a lens has a negative focal length and has effect of diverging light.

Abbe number: also referred to as a dispersion coefficient, is a difference ratio of refractive indexes of an optical material at different wavelengths, and indicates a dispersion degree of the material.

Focal length: also referred to as a focal length, is usually expressed as an effective focal length (Effective Focal Length, EFL for short), to be distinguished from parameters such as a front focal length and a back focal length. The focal length or the effective focal length is a measure of how strongly an optical system converges or diverges light, and is a vertical distance that is between an optical center of a lens or a lens group and a focal plane and that exists when a clear image of a scene at infinity is formed on the focal plane through the lens or the lens group. From a practical perspective, the focal length may be understood as a distance between a center of the lens assembly and an imaging plane.

Aperture: is an apparatus used to control an amount of light entering a photosensitive surface in a camera module through the lens or the lens group, and is usually fastened in the camera module. A size of the aperture is expressed as an F# value.

Light intake: is the amount of light transmitted to the photosensitive surface through the lens or the lens group (the lens assembly).

F-number F#: is a relative value (a reciprocal of a relative aperture) obtained by dividing a focal length of the lens assembly by a diameter of a clear aperture of the lens assembly. As the f-number F# decreases, a light intake within a same unit of time increases, and a depth of field decreases. In this case, photographed background content blurs, resulting in effect similar to that of a long-focus lens.

Total track length (Total Track Length, TTL for short): also referred to as a total height or a total length, is a total length from a vertex of the first lens disposed on the side that is in the lens assembly and that faces the object side (or a head of the lens assembly) to an imaging surface of the lens assembly, and is a main factor that defines a height of the camera module. In this application, the TTL may be a distance along the optical axis of the plurality of lenses of the lens assembly between an object-side surface of the first lens and the photosensitive surface of the image sensor.

An embodiment of this application provides an electronic device. The electronic device may include but is not limited to an electronic device with a camera module, such as a mobile phone, a tablet computer, a notebook computer, an ultra-mobile personal computer (ultra-mobile personal computer, UMPC), a handheld computer, an intercom, a netbook, a POS machine, a personal digital assistant (personal digital assistant, PDA), a wearable device, a virtual reality device, or a vehicle-mounted apparatus.

In embodiments of this application, an example in which the electronic device is a mobile phone is used. The mobile phone may be a bar phone, or the mobile phone may be a foldable phone. Specifically, the following uses an example in which the electronic device is a bar phone for description.

FIG. 1 is a diagram of a structure of an electronic device according to an embodiment of this application.

With reference to FIG. 1, an electronic device 100 may include a housing 102 and a camera module 101. The camera module 101 may be disposed on the housing 102. The camera module 101 is configured to implement image shooting functions. For example, the camera module 101 may be configured to shoot an image and record a video. Shooting scenes of the camera module 101 may include various complex and diversified shooting application scenes, such as an indoor scene, an outdoor scene, a portrait scene, and an environment scene.

The camera module 101 may be located on a front surface (a surface with a display screen) of the electronic device 100, and may be configured to take a selfie or photograph another object. Alternatively, with reference to FIG. 1, the camera module 101 may be located on a back surface (a surface opposite to the display screen) of the electronic device 100, and may be configured to photograph another object, and certainly may also be configured to take a selfie.

The electronic device 100 may include one or more camera modules 101, to satisfy different shooting requirements.

The electronic device 100 may further include another mechanical part. For example, still with reference to FIG. 1, the electronic device 100 may further include a speaker opening 103. The speaker opening 103 may be provided on the housing 102, and the speaker opening 103 may be used for playing audio and the like of the electronic device 100. A speaker may be further disposed in the housing 102. The speaker may be configured to form a sound, and the speaker may be connected to the speaker opening 103, so that the sound can be propagated through the speaker opening 103.

The electronic device 100 may be further provided with a data interface 104. The data interface 104 may be provided on the housing 102. A control circuit board may be further disposed in the housing 102. The control circuit board may be connected to the data interface 104. The data interface 104 may be used for supplying power to the electronic device 100. Alternatively, the data interface 104 may be configured to connect the electronic device 100 to a headset, an external multimedia device (such as an external camera or an external projection device), or the like.

Certainly, in some other examples, the electronic device 100 may further include another mechanical part, such as a sensor, a processor, or a drive structure, to complete a function of the electronic device 100. This is not limited in embodiments of this application.

Generally, the camera module may include a lens assembly and an image sensor. Light may enter the camera module through the lens assembly. Specifically, light reflected by a photographed object may enter the lens assembly. Then, adjustment and control of an optical path are implemented for the light through the lens assembly, to generate a light image, and the light image is projected onto a photosensitive surface of the image sensor. The image sensor can implement an optical-to-electrical conversion function. The image sensor receives the light image and converts the light image into an electrical signal for imaging and display.

Optical performance of the lens assembly greatly affects imaging quality and effect of the camera module. For example, an f-number of the lens assembly affects functions such as night photography, video, background blurring, and snapshot. Achieving a wide aperture design for the lens assembly helps increase an overall light intake of the lens assembly, to improve the imaging quality and imaging effect of the camera module.

In addition, with continuous development of image shooting technologies, shooting pursuits of the camera module in a plurality of shooting scenes are increasingly high. For example, for shooting a distant scene or an infinity scene, especially photographing a landscape, a night scene, the milky way, an aurora, or the like in a dark or night shooting environment, to achieve better shooting effect, the lens assembly needs a wide aperture, so that the light intake can be increased. However, an f-number F# of a common lens assembly in related technologies is usually 3.0 or greater, which is very unsuitable for shooting a distant night scene.

For example, for shooting a close-up scene or a macro scene, for example, photographing a small object such as a flower, an insect, a flying bird, or a fish, to fully reveal details and thus obtain a clear image, the lens assembly needs a high magnification and a high resolution, to achieve better imaging quality and imaging effect.

On this basis, an embodiment of this application provides a lens assembly. A quantity of lenses is properly controlled through proper use of an aspherical lens and coordination of focal powers of lenses or lens groups. This, along with joint cooperation of aspects such as an aperture, a focal length, a thickness, a refractive index, an Abbe number, a temperature coefficient of the refractive index, and a total track length that is of a system, can implement features of the lens assembly such as a wide aperture, a small size, low costs, and a high resolution. A wide aperture design of the lens assembly can increase an overall light intake of the lens assembly, so that imaging quality and imaging effect of a camera module are improved, and a shooting requirement for a distant scene or an infinity scene can be satisfied. In addition, the lens assembly has a high resolution and a high magnification, so that close-up shooting or macro shooting can be implemented with high imaging quality and good imaging effect ensured. This significantly improves the overall imaging quality and imaging effect of the camera module.

The following describes in detail, with reference to the accompanying drawings, the lens assembly and a camera module including the lens assembly provided in embodiments of this application.

FIG. 2 is a diagram of a structure of a camera module in which a lens assembly is in an infinity state according to an embodiment of this application.

With reference to FIG. 2, a camera module 101 includes an image sensor 20 and a lens assembly 10. The image sensor 20 is located on a side that is of the lens assembly 10 and that faces an image side. A photosensitive surface (which may also be referred to as an imaging surface) of the image sensor 20 may face the lens assembly 10. Light entering the camera module 101 passes through the lens assembly 10, and then may be transmitted to the photosensitive surface of the image sensor 20, to implement imaging of the light.

The image sensor 20 may be a charge-coupled device (charge-coupled device, CCD for short), or may be a complementary metal-oxide-semiconductor (complementary metal-oxide-semiconductor, CMOS for short), or may be another component that can implement an optical-to-electrical conversion function.

Still with reference to FIG. 2, the camera module 101 may further include an optical filter 30. The optical filter 30 may be located between the lens assembly 10 and the image sensor 20. Light passing through the lens assembly 10 passes through the optical filter 30, and then is transmitted to the photosensitive surface of the image sensor 20. The optical filter 30, having a light filtering function, allows light within a specific wavelength range to pass through, to filter out stray light that is not conducive to imaging. This helps improve imaging quality.

The camera module 101 may further include an image processor, a memory, and the like. The image sensor may transmit an electrical signal to the image processor or the memory for processing, storage, or the like. Then, an image of a photographed object is displayed on a display screen of an electronic device 100.

Certainly, in some other examples, the camera module 101 may further include other mechanical parts, such as a detection sensor, a drive motor, and a circuit board.

The lens assembly 10 may include a plurality of lens groups. A dashed line x in FIG. 2 represents an optical axis of the lens assembly 10. The plurality of lens groups may be sequentially arranged along the optical axis x from an object side to the image side. Each lens group may include a plurality of lenses. Each lens may have a focal power. The plurality of lenses in each lens group are also sequentially arranged along the optical axis x from the object side to the image side.

The lens assembly 10 may further include a lens barrel 19. FIG. 2 shows only a part of an end that is of the lens barrel 19 and that faces the object side. The plurality of lens groups may be disposed in the lens barrel 19. A light transmission hole 191 may be provided on the end that is of the lens barrel 19 and that faces the object side along the optical axis, so that light can enter the lens barrel 19 and sequentially pass through the plurality of lens groups.

The optical filter 30 may also be fastened to the lens barrel 19. For example, the optical filter 30 may be fastened to an end surface of an end that is of the lens barrel 19 and that faces the image side, and a through hole may also be provided on the end surface of the end that is of the lens barrel 19 and that faces the image side, so that light exiting the lens assembly 10 passes through the optical filter 30 and then is transmitted to the image sensor 20.

It should be noted that each lens group may include two or more lenses. All of the plurality of lens groups may include a same quantity of lenses, or different quantities of lenses. A quantity of lenses included in each lens group may be selected and set according to an actual requirement.

For example, still with reference to FIG. 2, there are two lens groups, and the plurality of lens groups may include a first lens group 10a and a second lens group 10b that are sequentially arranged along the optical axis x from the object side to the image side. In other words, the first lens group 10a is disposed closer to the object side than the second lens group 10b, and the second lens group 10b is disposed closer to the image side.

The first lens group 10a may include four lenses that are sequentially arranged, which may be, for example, a first lens 11, a second lens 12, a third lens 13, and a fourth lens 14. The first lens 11 is located on a side that is in the first lens group 10a and that faces the object side.

The second lens group 10b may include three lenses, which may be, for example, a fifth lens 15, a sixth lens 16, and a seventh lens 17. The seventh lens 17 is located on a side that is in the second lens group 10b and that faces the image side.

In other words, the lens assembly 10 may include seven lenses. The first lens 11, the second lens 12, the third lens 13, the fourth lens 14, the fifth lens 15, the sixth lens 16, and the seventh lens 17 may be sequentially arranged along the optical axis from the object side to the image side. The first lens 11 is a lens closest to the object side among the seven lenses, and the seventh lens 17 is a lens closest to the image side among the seven lenses.

Certainly, in some other examples, there may alternatively be more than two lens groups. For example, a third lens group, a fourth lens group, and the like may further be sequentially arranged along the optical axis from the second lens group 10b to the image side.

In this embodiment of this application, an example in which the plurality of lens groups include the first lens group 10a and the second lens group 10b that are sequentially arranged is used for description.

The first lens group 10a may have a positive focal power, and the second lens group 10b may have a negative focal power. The focal powers are properly assigned between the two lens groups. This helps achieve a wide aperture design for the lens assembly 10.

It should be noted that the first lens group 10a and the second lens group 10b each include a plurality of lenses. The first lens group 10a is used as an example. A plurality of lenses of the first lens group 10a may all have a positive focal power. Alternatively, a part of a plurality of lenses of the first lens group 10a may have a positive focal power, and a part of the plurality of lenses of the first lens group 10a may have a negative focal power, provided that the first lens group 10a formed by combining the plurality of lenses has a positive focal power as a whole. For example, in the first lens group 10a, the second lens 12 may have a negative focal power, and the first lens 11, the third lens 13, and the fourth lens 14 may each have a positive focal power.

Correspondingly, a plurality of lenses of the second lens group 10b may all have a negative focal power. Alternatively, a part of a plurality of lenses of the second lens group 10b may have a negative focal power, and a part of the plurality of lenses of the second lens group 10b may have a positive focal power, provided that the second lens group 10b formed by combining the plurality of lenses has a negative focal power as a whole. For example, in the second lens group 10b, the sixth lens 16 may have a positive focal power, and the fifth lens 15 and the seventh lens 17 may each have a negative focal power.

A focal length of the first lens group 10a is f1, and a focal length of the second lens group 10b is f2. The focal length f1 of the first lens group 10a and the focal length f2 of the second lens group 10b may satisfy $0.4<|f1/f2|<1.5$. The focal lengths are properly assigned between the lens groups, so that the focal powers are further properly assigned between the two lens groups. This causes the constructed lens assembly 10 to have a small f-number, thereby achieving the wide aperture design for the lens assembly 10. As a result, an overall light intake of the lens assembly 10 is effectively increased, and imaging quality and imaging effect are effectively improved. The lens assembly 10 with the wide aperture design can further satisfy a requirement for an infinity shooting scene (especially a dark or night shooting environment), thereby improving shooting effect in a distant shooting scene, an infinity shooting scene, or the like.

In addition, with reference to FIG. 2, when the lens assembly 10 is in the infinity state, the lens assembly 10 may be configured to implement shooting of a distant scene. For example, in a shooting scene of a landscape, a night scene, a starry sky, the milky way, an aurora, or the like, a fixed distance is maintained between the first lens group 10a and the second lens group 10b. The first lens group 10a and the second lens group 10b satisfy the foregoing conditional expressions, so that it can be ensured that the lens assembly 10 has a long focal length. This helps implement a long-focus function of the lens assembly 10.

FIG. 3 is a diagram of a structure of a camera module in which a lens assembly is in a macro state according to an embodiment of this application.

In this embodiment of this application, the first lens group 10a disposed close to the object side is movably disposed. With reference to FIG. 2 and FIG. 3, the first lens group 10a can move toward the object side or away from the object side along the optical axis x. Specifically, when the lens assembly 10 switches from the infinity state to the macro state, the first lens group 10a moves toward the object side along the optical axis x. This changes the distance between the first lens group 10a and the second lens group 10b, increases a focal length of the lens assembly, and increases a magnification of the lens assembly, so that a macro function can be implemented. In addition, the entire lens assembly is designed with a wide aperture, so that a resolution of the lens assembly can be effectively increased. As a result, a magnification and a resolution of the lens assembly in the macro state are high, and imaging quality and imaging effect in a close-up shooting scene or a macro shooting scene are improved.

Besides, the first lens being movably disposed can change the focal length of the lens assembly, and can also facilitate implementation of a focusing function of the lens assembly. This further helps achieve high imaging quality.

When the lens assembly is in the macro state, the lens assembly may be configured to implement shooting of a close-up scene. For example, in a shooting scene of a small object such as a flower, a flying bird, an insect, or a fish, the magnification and the resolution are high, so that details of an image shot by the lens assembly can be well revealed, and imaging effect is enriched.

For example, the end that is of the lens barrel 19 and that faces the object side may be fastened to the first lens group 10a, and the end that is of the lens barrel 19 and that faces the object side may move along the optical axis with movement of the first lens group 10a. For example, the end that is of the lens barrel 19 and that faces the object side and the end that is of the lens barrel 19 and that faces the image side may be movably disposed relative to each other, for example, may be movably disposed through sleeving, sliding rail configuration, or the like, so that the end that is of the lens barrel 19 and that faces the object side can move along the optical axis.

The first lens 11 in the first lens group 10a is a lens disposed closest to the object side among the lenses in the lens assembly. For example, the first lens 11 is used as a reference to describe movement of the first lens group 10a. For example, an arc-shaped dashed line in FIG. 3 indicates a position, of the first lens 11, for the lens assembly in the infinity state. When the lens assembly switches from the infinity state to the macro state, the lens assembly and the first lens 11 move toward the object side along the optical axis. When the lens assembly is in the macro state, the first lens 11 (the lens assembly) already moves a preset distance, for example, a distance L in FIG. 3, along the optical axis.

For example, with reference to FIG. 3, the lens assembly may further include an aperture stop 18. The aperture stop 18 may be located on a side that is of the plurality of lens groups and that faces the object side. In other words, the aperture stop 18 is disposed closer to the object side than the plurality of lens groups as a whole. Light may first pass through the aperture stop 18, and then sequentially pass through the plurality of lens groups before exiting. The aperture stop 18 may limit light entering the lens assembly, to adjust intensity of the light, and can be configured to control a light intake of the lens assembly. This helps improve the imaging quality.

The aperture stop 18 may be fastened inside the lens barrel 19, or the aperture stop 18 may be fastened outside the lens barrel 19. In this embodiment of this application, with reference to FIG. 3, for example, the aperture stop 18 is located outside the lens barrel 19. The aperture stop 18 is located on a side that is of the lens barrel 19 and that faces the object side. Light entering the camera module 101 may sequentially pass through the aperture stop 18, the light transmission hole of the lens barrel 19, the first lens 11, the second lens 12, the third lens 13, the fourth lens 14, the fifth lens 15, the sixth lens 16, the seventh lens 17, and the optical filter 30, and then may be transmitted to the image sensor 20.

The aperture stop 18 is fastened in the camera module 101. The first lens group 10a moves toward the object side along the optical axis x. In other words, the first lens group 10a moves toward the aperture stop 18 along the optical axis x. During actual assembly and testing such as simulation, a distance that the lens assembly 10 can move may be set by using a distance along the optical axis between the aperture stop 18 and the first lens 11 as a reference. This facilitates assembly, simulation testing, and the like, and helps improve accuracy of assembly, simulation testing, and the like. The distance along the optical axis between the aperture stop 18 and the first lens 11 is a distance between an intersection point (for example, a point O in FIG. 3) of an object-side surface of the first lens 11 and the optical axis and an intersection point of the aperture stop 18 and the optical axis.

With reference to FIG. 3, CT1 represents a distance, along the optical axis x between the object-side surface of the first lens 11 and the aperture stop 18, for the lens assembly in the infinity state, and CT2 represents a distance, along the optical axis x between the object-side surface of the first lens 11 and the aperture stop 18, for the lens assembly in the macro state. In this case, a difference between the two distances is a distance that the first lens 11 and the first lens group 10a move, in other words, the movement distance $L=CT1-CT2$.

When the lens assembly switches from the infinity state to the macro state, a range of the movement distance L of the first lens group 10a along the optical axis may be $1<L<3.5$. In this case, while the macro function of the lens assembly is implemented, the magnification of the lens assembly can be further improved. This helps implement a macro function with a high magnification, thereby significantly improving imaging quality and imaging effect in a close-up shooting scene or a macro shooting scene.

It may be understood that, the lens group assembly may further include a drive structure, and the drive structure may be connected to the first lens group 10a, to drive the first lens group 10a to move along the optical axis.

It should be noted that the first lens group 10a includes a plurality of lenses. The plurality of lenses may be connected to the drive structure as a whole. Driven by the drive structure, the plurality of lenses move together along the optical axis as a whole. This helps reduce a configuration of the drive structure, so that costs are reduced and occupied space is reduced.

Certainly, in some other examples, the plurality of lenses may alternatively move independently. This increases flexibility of movement configurations of the lenses, and helps expand an application scenario of the lens assembly and diversify functions of the lens assembly. For example, the plurality of lenses may be separately connected to the drive structure. Driven by the drive structure, the plurality of lenses may separately move along the optical axis.

In this embodiment of this application, the light intake of the lens assembly may vary in different shooting scenes, where the light intake of the lens assembly is an amount of light entering and passing through the plurality of lens groups. As a result, the light intake of the lens assembly can be controlled in different shooting scenes, dynamic control ranges of an aperture in different scenes can be improved, and high imaging quality and good imaging effect in a plurality of scenes can be ensured.

Specifically, for example, a light intake of the lens assembly in the macro state may be less than a light intake of the lens assembly in the infinity state. In other words, when the lens assembly is in the infinity state, the lens assembly has a large light intake and a relatively wide aperture, so that a depth-of-field range can be reduced. This helps improve imaging brightness in an infinity shooting scene, especially in a dark or night shooting environment, and facilitates implementation of functions such as background blurring and snapshot, thereby improving the imaging quality and imaging effect.

When the lens assembly is in the macro state, the lens assembly has a small light intake and a relatively narrow aperture, so that a depth-of-field range can be increased. As a result, depiction of details of a scene or the like is more realistic, and the imaging quality and imaging effect in the macro shooting scene are improved.

Specifically, light first passes through the aperture stop 18 and then sequentially passes through the plurality of lens groups. Therefore, the light intake may be controlled through the aperture stop 18. For example, the aperture stop 18 may be a variable aperture stop. In other words, a diameter of the aperture stop 18 may be changed, to change the light intake of the lens assembly.

Specifically, a diameter of the aperture stop of the lens assembly in the macro state may be less than a diameter of the aperture stop of the lens assembly in the infinity state. As a result, the light intake of the lens assembly in the macro state is less than the light intake of the lens assembly in the infinity state. This facilitates configuration, and helps reduce design difficulty.

It may be understood that, with reference to FIG. 3, the light transmission hole 191 of the lens barrel 19 also affects the light intake. To facilitate control of the light intake through the variable aperture stop, a diameter of the light transmission hole 191 may be caused to be greater than the diameter of the aperture stop 18 of the lens assembly in the macro state, so that the light intake of the lens assembly in the macro state is less than the light intake of the lens assembly in the infinity state.

It should be noted that, the diameter of the light transmission hole may be greater than the diameter of the aperture stop of the lens assembly in the infinity state, or the diameter of the light transmission hole may be less than the diameter of the aperture stop of the lens assembly in the infinity state provided that the diameter of the light transmission hole can be greater than the diameter of the aperture stop of the lens assembly in the macro state.

Specifically, for example, the diameter of the aperture stop of the lens assembly in the infinity state may be greater than the diameter of the light transmission hole. In this case, the light transmission hole blocks light, and the aperture stop cannot implement a light blocking function. Consequently, all light transmitted to the aperture stop can pass through the aperture stop. The light intake of the lens assembly depends on the diameter of the light transmission hole. When the lens assembly switches to the macro state, the diameter of the aperture stop is less than the diameter of the light transmission hole, and the aperture stop blocks light. In this case, the diameter of the aperture stop in the macro state being less than the diameter of the aperture stop in the infinity state ensures that the light intake of the lens assembly in the macro state is less than the light intake of the lens assembly in the infinity state.

For example, an aperture stop is not shown in the camera module 101 shown in FIG. 2, and a diameter of the aperture stop is greater than the diameter of the light transmission hole 191 of the lens barrel 19. In this case, the light transmission hole 191 actually blocks light. The light intake of the lens assembly depends on the diameter of the light transmission hole 191. With reference to FIG. 3, when the lens assembly 10 is in the macro state, the light intake of the lens assembly depends on the diameter of the aperture stop 18.

Conversely, the diameter of the aperture stop of the lens assembly in the infinity state may be less than the diameter of the light transmission hole. In this case, the aperture stop blocks light. The light intake of the lens assembly depends on the diameter of the aperture stop. When the lens assembly switches to the macro state, the diameter of the aperture stop is further decreased, and the light intake still depends on the aperture stop. In this case, the diameter of the aperture stop in the macro state being less than the diameter of the aperture stop in the infinity state can ensure that the light intake of the lens assembly in the macro state is less than the light intake of the lens assembly in the infinity state.

A range of an f-number F# of the lens assembly in the infinity state may be $1.2 \leq F\# \leq 3.0$. The f-number F# is small, so that the lens assembly features a wide aperture. This ensures that the lens assembly has a large light intake, thereby further improving the imaging quality and imaging effect in the infinity shooting scene.

A range of an f-number F# of the lens assembly in the macro state may be $3.0 \leq F\# \leq 16$. As a result, the lens assembly still has a relatively wide aperture in the macro state. This ensures the light intake of the lens assembly, and further increases the resolution of the lens assembly, thereby ensuring high imaging quality and good imaging effect in the macro shooting scene. In addition, an aperture of the lens assembly in the macro state may be smaller than an aperture of the lens assembly in the infinity state, so that the light intake and a depth of field are adjusted in different scenes, and the dynamic control ranges of the aperture in different scenes are improved. As a result, the lens assembly can achieve high imaging quality and good imaging effect in all of a plurality of scenes such as the macro shooting scene and the infinity shooting scene.

A magnification of the lens assembly in the macro state is Mag, where the magnification Mag is a ratio of an image length to an object length. A range of the magnification Mag of the lens assembly in the macro state may be $0.1x < Mag < 0.5x$. As a result, the lens assembly has a large magnification, so that a requirement for a close-up shooting scene or a macro shooting scene is satisfied, and the imaging quality and imaging effect of the lens assembly in the macro shooting scene are further improved.

When the lens assembly switches from the infinity state to the macro state, a distance that the first lens group moves toward the object side is L, an object distance for the lens assembly in the macro state is C, and the movement distance L of the first lens group and the object distance C for the lens assembly in the macro state may satisfy $0.1 < (L/C) * 10 < 1.0$. As a result, the first lens group has a large movement distance, and the object distance for the lens assembly in the macro state is small. This further increases the magnification of the lens assembly, so that the lens assembly can implement a macro function with a higher magnification, and the imaging quality in the macro shooting scene is further improved.

A total track length of the lens assembly in the infinity state is TTL1, and a range of a ratio of the movement distance L of the first lens group to the total track length TTL of the lens assembly in the infinity state may be $0.1 < L/TTL1 < 0.5$. The lens assembly has a large movement distance and a short total track length. As a result, a length dimension of the lens assembly in the infinity state is decreased while the magnification of the lens assembly in the macro state is increased, so that the macro function with a high magnification is implemented while a small-sized design of the lens assembly is achieved. This helps satisfy a requirement for thinning the camera module.

It may be understood that, the lens assembly switches from the infinity state to the macro state, and the first lens group moves the preset distance. In this case, a total track length of the lens assembly in the macro state is a difference between the total track length of the lens assembly in the infinity state and the movement distance. The total track length of the lens assembly in the macro state is TTL2. In this case, TTL2=TTL1-L.

A focal length of the lens assembly in the infinity state is EFL. For further thinning of the camera module, a range of a ratio of the focal length EFL of the lens assembly in the infinity state to the total track length TTL1 of the lens assembly in the infinity state may be $0.8<EFL/TTL1<1$. It is ensured that the lens assembly has a short total track length. This helps achieve small-sized designs of the lens assembly and the camera module. In addition, the lens assembly has a longer focal length, so that a better long-focus function can be implemented in the infinity shooting scene. In other words, the imaging quality and an imaging effect in the infinity state can be further improved while the total track length of the lens assembly is decreased.

In this embodiment of this application, the lenses included in each lens group may each be an aspherical lens, for example, an aspherical lens. The aspherical lens may reduce or eliminate spherical aberration and distortion that are introduced by a spherical lens. This can further help achieve wide-aperture performance of the lens assembly, and also help decrease a total length of the lens assembly.

A refractive index of the first lens is Nd, and a value range of the refractive index Nd of the first lens may be $1.4<Nd<1.85$. The first lens has a relatively low refractive index, so that image quality of a formed image can be effectively improved. This helps improve the imaging quality.

It should be noted that, in this embodiment of this application, refractive indexes of the second lens and the third lens are not limited, and may be specifically selected and set based on an actual situation.

The lenses included in the lens assembly may be all a plastic lens or a glass lens. Alternatively, a part of the lenses included in the lens assembly may be a plastic lens, and a part of the lenses included in the lens assembly may be a glass lens.

The plastic lens is relatively low-cost. Therefore, the lenses included in the lens assembly being all a plastic lens or the lenses included in the lens assembly being a combination of a glass lens and a plastic lens help reduce costs of the lens assembly while optical performance is ensured.

Besides, the lenses in the lens assembly being a combination of a glass lens and a plastic lens can increase a resolution of the lens, and helps reduce a size of the lens. In addition, mutual compensation can be implemented through coordination of a temperature coefficient of a refractive index of the glass lens and a temperature coefficient of a refractive index of the plastic lens, so that thermal aberration of the lens assembly is reduced, an athermalization design is achieved, and stability and reliability of the lens assembly are improved.

Shapes of the plurality of lenses in the lens assembly may be the same or different.

For example, the shape of the lens may be a circle or an ellipse, which provides a wide range of applicability and is easy to implement in production.

Alternatively, in some other examples, the shape of the lens may be a track oval. For example, a lens in a shape of a circle (or an ellipse) may be cut in an ICUT cutting manner. To be specific, edges on two opposite sides of the lens in the shape of a circle are cut off, so that a periphery of the lens includes two opposite arc-shaped side walls and two opposite flat side walls, and an overall shape of the lens is a track oval. Compared with the lens in the shape of a circle, the lens in the shape of a track oval can reduce a size of the lens, and reduce space occupied by the lens, so that the small-sized designs of the lens assembly and the camera module can be achieved.

Alternatively, in some other examples, the shape of the lens may be a square. For example, a lens in a shape of a circle (or an ellipse) may be cut in an SCUT cutting manner. To be specific, edges on a periphery of the lens in the shape of a circle are cut, so that an overall shape of the lens is a square, and the periphery of the lens includes four flat side walls. The lens in the shape of a square can also reduce a size of the lens.

Certainly, in some other examples, the shape of the lens may alternatively be another regular or irregular shape, and the lens in another regular or irregular shape may be formed by cutting a lens in a shape of a circle.

In this embodiment of this application, shapes of image-side surfaces and object-side surfaces of the plurality of lenses in the lens assembly are not limited. At least a part that is of the image-side surface of the lens and that corresponds to the optical axis may be convex or concave, and at least a part that is of the object-side surface of the lens and that corresponds to the optical axis may be convex or concave. Specific shapes may be selected and set according to on an actual requirement for lens combination.

The following describes a structure and performance of the lens assembly provided in this application with reference to specific embodiments.

Embodiment 1

FIG. 4 is a diagram of a simulated structure of a camera module in which a lens assembly is in an infinity state according to Embodiment 1 of this application. FIG. 5 is a diagram of a simulated structure of a camera module in which a lens assembly is in a macro state according to Embodiment 1 of this application.

In this embodiment of this application, with reference to FIG. 4 and FIG. 5, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 5, not shown in FIG. 4), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a positive focal power, the fourth lens 14 has a positive focal power, and the first lens group 10a has a positive focal power as a whole.

The fifth lens 15 has a negative focal power, the sixth lens 16 has a positive focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is concave. At least a part that is of an object-side surface of the fourth lens 14 and that corresponds to the optical axis is concave, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is concave. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 4, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 5, the first lens group 10a is disposed closer to the object side (the aperture stop 18), and the aperture stop 18 actually blocks light.

A ratio of a focal length f1 of the first lens group 10a to a focal length f2 of the second lens group 10b $|f1/f2|=0.93$.

A distance, along the optical axis between the object-side surface of the first lens and the aperture stop, for the lens assembly in the infinity state CT1=4.89 mm. A distance, along the optical axis between the obj ect-side surface of the first lens and the aperture stop, for the lens assembly in the macro state CT2=2.89 mm. A movement distance, of the first lens group along the optical axis, for the lens assembly switching from the infinity state to the macro state L=2 mm.

An f-number of the lens assembly in the infinity state F#=1.57, and an f-number of the lens assembly in the macro state F#=3.9.

A magnification of the lens assembly in the macro state Mag=0.3x.

A focal length of the lens assembly in the infinity state EFL=14.15 mm, a total track length of the lens assembly in the infinity state TTL1=14.7 mm, and a ratio of the focal length EFL of the lens assembly to the total track length TTL1 of the lens assembly EFL/TTL1=0.96.

A total track length of the lens assembly in the macro state TTL2=16.7 mm.

A ratio of the movement distance L of the first lens group to the total track length TTL1 of the lens assembly in the infinity state L/TTL1=0.14.

An object distance for the lens assembly in the macro state C=52.7 mm. The movement distance L of the first lens group and the object side C for the lens assembly in the macro state satisfy (L/C)*10=0.38.

A refractive index of the first lens Nd1=1.584.

Table 1.1 shows optical parameters of optical elements in the camera module according to Embodiment 1 of this application.

| | Surface number | Surface profile | Curvature radius | Thickness | Material | Y semi-aperture |
|---|---|---|---|---|---|---|
| Aperture stop | S0 | - | - | -1.86 | - | 4.50 |

(continued)

| | Surface number | Surface profile | Curvature radius | Thickness | Material | Y semi-aperture |
|---|---|---|---|---|---|---|
| L1 | S1 | Aspherical | 5.72 | 3.07 | 584.671 | 4.50 |
| | S2 | Aspherical | -36.87 | 0.12 | | 4.16 |
| L2 | S3 | Aspherical | 7.89 | 0.50 | 676.192 | 3.84 |
| | S4 | Aspherical | 4.12 | 1.49 | | 3.35 |
| L3 | S5 | Aspherical | 40.09 | 0.74 | 666.198 | 3.26 |
| | S6 | Aspherical | -34.71 | 0.08 | | 3.24 |
| L4 | S7 | Aspherical | -22.96 | 0.56 | 545.561 | 3.20 |
| | S8 | Aspherical | -9.43 | 0.81 | | 3.18 |
| L5 | S9 | Aspherical | -4.87 | 0.48 | 537.542 | 2.66 |
| | S10 | Aspherical | -106.67 | 0.35 | | 2.52 |
| L6 | S11 | Aspherical | 2.90 | 0.60 | 545.561 | 2.14 |
| | S12 | Aspherical | 4.15 | 2.39 | | 2.16 |
| L7 | S13 | Aspherical | -5.69 | 1.34 | 536.556 | 2.47 |
| | S14 | Aspherical | -13.58 | 1.34 | | 3.06 |
| IR | S15 | Spherical | - | 0.21 | 518.641 | 4.50 |
| | S16 | Spherical | - | 0.65 | | 4.50 |
| Photosensitive surface | S17 | Spherical | - | 0.00 | - | 3.75 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

S0 represents the aperture stop 18. S1 and S2 represent the object-side surface and the image-side surface of the first lens 11 respectively. S3 and S4 represent the object-side surface and the image-side surface of the second lens 12 respectively. S5 and S6 represent the object-side surface and the image-side surface of the third lens 13 respectively. S7 and S8 represent the object-side surface and the image-side surface of the fourth lens 14 respectively. S9 and S10 represent the object-side surface and the image-side surface of the fifth lens 15 respectively. S11 and S12 represent the object-side surface and the image-side surface of the sixth lens 16 respectively. S13 and S14 represent the object-side surface and the image-side surface of the seventh lens 17 respectively. S15 and S16 represent an object-side surface and an image-side surface of the optical filter 30 respectively. S17 represents a photosensitive surface of the image sensor 20.

The thickness is a thickness of an optical element along the optical axis or a thickness of an air gap between optical elements. A thickness corresponding to the aperture stop 18 is a distance along the optical axis between the aperture stop 18 and the object-side surface of the first lens 11, a thickness corresponding to the object-side surface of the first lens 11 is a thickness of the first lens 11 along the optical axis, a thickness corresponding to the image-side surface of the first lens 11 is a distance along the optical axis between the image-side surface of the first lens 11 and the object-side surface of the second lens 12, and so on.

The material refers to a refractive index and an Abbe number of a lens. It should be noted that a notation combining the refractive index and the Abbe number is used for a value for the material in Table 1. To be specific, a sum of 1.000 and a part that is of the value for the material in the table and that precedes a decimal point is the refractive index of the lens, and a product of 0.01 and a part that is of the value for the material in the table and that follows the decimal point is the Abbe number of the lens. For example, for the first lens 11 (L1), if a value of a material of the first lens is 498.816, the refractive index of the first lens is 1.498 and an Abbe number of the first lens is 81.6. This also applies to other lenses.

The Y semi-aperture refers to a radius of the lens.

Table 1.2 shows aspherical coefficients of the lenses in the lens assembly according to Embodiment 1 of this application.

| | | k | A4 | A6 | A8 | A10 |
|---|---|---|---|---|---|---|
| L1 | S1 | 0 | -1.14E-04 | 6.23E-06 | -1.16E-06 | -3.09E-07 |
| | S2 | 0 | 2.78E-03 | -1.30E-03 | 4.53E-04 | -9.00E-05 |
| L2 | S3 | 0 | -3.67E-03 | -1.58E-03 | 6.44E-04 | -1.36E-04 |
| | S4 | 0 | -6.24E-03 | -6.56E-04 | 6.23E-06 | 2.40E-04 |
| L3 | S5 | 0 | 4.27E-03 | -4.11E-03 | 2.69E-03 | -1.49E-03 |
| | S6 | 0 | 1.86E-02 | -2.94E-02 | 2.80E-02 | -1.75E-02 |
| L4 | S7 | 0 | 1.85E-02 | -3.54E-02 | 3.66E-02 | -2.36E-02 |
| | S8 | 0 | 1.11E-03 | -5.38E-03 | 7.05E-03 | -5.11E-03 |
| L5 | S9 | 0 | 3.75E-02 | -2.31E-02 | 1.71E-02 | -1.07E-02 |
| | S10 | 0 | 1.73E-02 | -2.26E-02 | 1.71E-02 | -6.69E-03 |
| L6 | S11 | 0 | -1.90E-02 | -1.13E-02 | 1.57E-02 | -1.67E-02 |
| | S12 | 0 | -4.13E-03 | 6.72E-04 | -8.92E-03 | 1.26E-02 |
| L7 | S13 | 0 | -8.93E-03 | 9.01E-04 | -5.82E-04 | -1.40E-04 |
| | S14 | 0 | -8.03E-03 | 1.13E-03 | -1.06E-03 | 7.87E-04 |
| | | A12 | A14 | A16 | A18 | A20 |
| L1 | S1 | 1.19E-07 | -1.71E-08 | 1.36E-09 | -6.69E-11 | 2.17E-12 |
| | S2 | 1.07E-05 | -7.79E-07 | 3.41E-08 | -8.24E-10 | 8.51E-12 |
| L2 | S3 | 3.55E-05 | -1.20E-05 | 2.99E-06 | -4.82E-07 | 5.19E-08 |
| | S4 | -1.48E-04 | 5.65E-05 | -1.63E-05 | 3.53E-06 | -5.53E-07 |
| L3 | S5 | 6.11E-04 | -1.78E-04 | 3.62E-05 | -4.99E-06 | 4.55E-07 |
| | S6 | 7.43E-03 | -2.21E-03 | 4.72E-04 | -7.28E-05 | 8.16E-06 |
| L4 | S7 | 1.02E-02 | -3.07E-03 | 6.67E-04 | -1.06E-04 | 1.22E-05 |
| | S8 | 2.43E-03 | -8.13E-04 | 1.98E-04 | -3.56E-05 | 4.73E-06 |
| L5 | S9 | 5.23E-03 | -1.96E-03 | 5.58E-04 | -1.19E-04 | 1.88E-05 |
| | S10 | -1.12E-03 | 3.32E-03 | -2.29E-03 | 9.43E-04 | -2.61E-04 |
| L6 | S11 | 1.35E-02 | -8.33E-03 | 3.85E-03 | -1.33E-03 | 3.38E-04 |
| | S12 | -1.01E-02 | 4.84E-03 | -1.14E-03 | -1.24E-04 | 1.97E-04 |
| L7 | S13 | 4.67E-04 | -3.14E-04 | 9.09E-05 | -9.16E-07 | -8.23E-06 |
| | S14 | -4.43E-04 | -3.14E-04 | 9.09E-05 | -9.16E-07 | -8.23E-06 |
| | | A22 | A24 | A26 | A28 | A30 |
| L1 | S1 | -4.64E-14 | 5.02E-16 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | -3.79E-09 | 1.87E-10 | -5.99E-12 | 1.13E-13 | -9.53E-16 |
| | S4 | 6.07E-08 | -4.55E-09 | 2.21E-10 | -6.27E-12 | 7.89E-14 |
| L3 | S5 | -2.54E-08 | 6.45E-10 | 1.10E-11 | -1.18E-12 | 2.35E-14 |
| | S6 | -6.57E-07 | 3.71E-08 | -1.40E-09 | 3.19E-11 | -3.30E-13 |
| L4 | S7 | -1.03E-06 | 6.15E-08 | -2.46E-09 | 5.96E-11 | -6.58E-13 |
| | S8 | -4.59E-07 | 3.14E-08 | -1.43E-09 | 3.89E-11 | -4.75E-13 |

(continued)

| | | A22 | A24 | A26 | A28 | A30 |
|---|---|---|---|---|---|---|
| L5 | S9 | -2.17E-06 | 1.76E-07 | -9.55E-09 | 3.10E-10 | -4.56E-12 |
| | S10 | 4.98E-05 | -6.49E-06 | 5.52E-07 | -2.77E-08 | 6.22E-10 |
| L6 | S11 | -6.25E-05 | 8.15E-06 | -7.08E-07 | 3.67E-08 | -8.55E-10 |
| | S12 | -7.35E-05 | 1.54E-05 | -1.93E-06 | 1.37E-07 | -4.26E-09 |
| L7 | S13 | 2.95E-06 | -5.36E-07 | 5.62E-08 | -3.24E-09 | 7.98E-11 |
| | S14 | 2.95E-06 | -5.36E-07 | 5.62E-08 | -3.24E-09 | 7.98E-11 |

It can be learned from Table 1.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x, y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 4 and FIG. 5.

For optical parameters of the lens assembly including the foregoing lenses, refer to Table 1.3.

Table 1.3 shows the optical parameters of the lens assembly according to Embodiment 1 of this application.

| | |
|---|---|
| F-number F# in the infinity state | 1.57 |
| F-number F# in the macro state | 3.9 |
| Focal length in the infinity state/mm | 14.15 |
| Half image height/mm | 3.75 |
| Magnification in the macro state | 0.3x |
| Object distance in the macro state/mm | 52.7 |
| Movement distance of the first lens group/mm | 2 |
| Total track length in the infinity state/mm | 14.7 |
| Total track length in the macro state/mm | 16.7 |

It can be learned from Table 1.3 that, the lens assembly according to Embodiment 1 of this application features a wide aperture, so that a requirement for an infinity shooting scene can be satisfied, and a magnification and a resolution in a macro shooting scene can be high. In addition, the lens assembly has a short total track length, so that small-sized designs of the lens assembly and the camera module can be implemented.

FIG. 6 is a diagram of a modulation transfer function curve for a lens assembly in an infinity state according to Embodiment 1 of this application. FIG. 7 is a diagram of a modulation transfer function curve for a lens assembly in a macro state according to Embodiment 1 of this application.

In FIG. 6 and FIG. 7, horizontal coordinates represent different frequencies, and vertical coordinates represent modulation contrasts. Solid lines in the figures represent sagittal fields, and dashed lines in the figures represent tangential fields. It can be learned from FIG. 6 and FIG. 7 that the lens assembly has a good resolution and a good contrast, thereby ensuring high imaging quality and good imaging effect.

Embodiment 2

FIG. 8 is a diagram of a simulated structure of a camera module in which a lens assembly is in an infinity state according to Embodiment 2 of this application. FIG. 9 is a diagram of a simulated structure of a camera module in which a lens assembly is in a macro state according to Embodiment 2 of this application.

In this embodiment of this application, with reference to FIG. 8 and FIG. 9, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 9, not shown in FIG. 8), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a positive focal power, the fourth lens 14 has a positive focal power, and the first lens group 10a has a positive focal power as a whole.

The fifth lens 15 has a negative focal power, the sixth lens 16 has a positive focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is concave. At least a part that is of an object-side surface of the fourth lens 14 and that corresponds to the optical axis is concave, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is convex. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 8, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 9, the first lens group 10a is disposed closer to the object side (the aperture stop 18), and the aperture stop 18 actually blocks light.

A ratio of a focal length f1 of the first lens group 10a to a focal length f2 of the second lens group 10b $|f1/f2|=0.90$.

A distance, along the optical axis between the object-side surface of the first lens and the aperture stop, for the lens assembly in the infinity state CT1=4.15 mm. A distance, along the optical axis between the object-side surface of the first lens and the aperture stop, for the lens assembly in the macro state CT2=2.23 mm. A movement distance, of the first lens group along the optical axis, for the lens assembly switching from the infinity state to the macro state L=1.92 mm.

An f-number of the lens assembly in the infinity state F#=1.49, and an f-number of the lens assembly in the macro state F#=3.88.

A magnification of the lens assembly in the macro state Mag=0.3x.

A focal length of the lens assembly in the infinity state EFL=13.80 mm, a total track length of the lens assembly in the infinity state TTL1=14.7 mm, and a ratio of the focal length EFL of the lens assembly to the total track length TTL1 of the lens assembly EFL/TTL1=0.94.

A total track length of the lens assembly in the macro state TTL2=16.6 mm.

A ratio of the movement distance L of the first lens group to the total track length TTL1 of the lens assembly in the infinity state L/TTL1=0.13.

An object distance for the lens assembly in the macro state C=51.7 mm. The movement distance L of the first lens group and the object side C for the lens assembly in the macro state satisfy (L/C)*10=0.37.

A refractive index of the first lens Nd1=1.596.

Table 2.1 shows optical parameters of optical elements in the camera module according to Embodiment 2 of this application.

| | Surface number | Surface profile | Curvature radius | Thickness | Material | Y semi-aperture |
|---|---|---|---|---|---|---|
| Aperture stop | S0 | - | - | -2.05 | | 4.63 |
| L1 | S1 | Aspherical | 5.88 | 3.00 | 596.658 | 4.63 |
| | S2 | Aspherical | -33.87 | 0.04 | | 4.33 |
| L2 | S3 | Aspherical | 7.57 | 0.59 | 677.192 | 4.01 |
| | S4 | Aspherical | 4.12 | 1.44 | | 3.44 |
| L3 | S5 | Aspherical | 45.16 | 0.71 | 673.194 | 3.38 |
| | S6 | Aspherical | -202.06 | 0.09 | | 3.38 |
| L4 | S7 | Aspherical | -47.33 | 0.70 | 545.561 | 3.39 |
| | S8 | Aspherical | -8.90 | 0.75 | | 3.42 |
| L5 | S9 | Aspherical | -4.21 | 0.55 | 536.556 | 2.79 |
| | S10 | Aspherical | 27.69 | 0.31 | | 2.59 |
| L6 | S11 | Aspherical | 2.60 | 0.64 | 545.561 | 2.52 |
| | S12 | Aspherical | 4.73 | 2.58 | | 2.42 |
| L7 | S13 | Aspherical | -6.64 | 1.30 | 536.556 | 2.78 |
| | S14 | Aspherical | -17.65 | 1.24 | | 3.24 |
| IR | S15 | Spherical | - | 0.21 | 518.641 | 3.63 |
| | S16 | Spherical | - | 0.55 | | 3.65 |
| Photosensitive surface | S17 | Spherical | - | 0.00 | - | 3.75 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

For specific descriptions of S0 to S17, refer to Embodiment 1. Details are not described again in this embodiment.

For meanings of parameters such as the curvature radius, the thickness, the material, and the Y semi-aperture, also refer to Embodiment 1. Details are not described again in this embodiment.

Table 2.2 shows aspherical coefficients of the lenses in the lens assembly according to Embodiment 2 of this application.

| | | k | A4 | A6 | A8 | A10 |
|---|---|---|---|---|---|---|
| L1 | S1 | 0 | 1.14E-02 | -9.16E-02 | 4.59E-01 | -3.79E+00 |
| | S2 | 0 | 1.44E+00 | -1.41E+01 | 1.02E+02 | -4.15E+02 |
| L2 | S3 | 0 | -1.78E+00 | -3.01E+00 | -8.91E+00 | 4.23E+02 |
| | S4 | 0 | -1.06E+00 | 1.04E+00 | -4.24E+00 | -8.52E+00 |
| L3 | S5 | 0 | 4.87E-02 | -4.59E-01 | 1.35E+01 | -1.40E+02 |
| | S6 | 0 | -3.64E-01 | 1.01E+00 | -5.35E+00 | 2.16E+02 |
| L4 | S7 | 0 | -5.90E-01 | 2.85E+00 | -5.18E+01 | 8.35E+02 |
| | S8 | 0 | -1.27E-01 | 3.62E+00 | -6.78E+01 | 6.96E+02 |
| L5 | S9 | 0 | 1.47E+00 | 2.93E+00 | -5.62E+01 | 4.00E+02 |
| | S10 | 0 | -1.01E+00 | 1.15E+01 | -8.55E+01 | 4.53E+02 |
| L6 | S11 | 0 | -1.92E+00 | 7.07E+00 | -3.00E+01 | 2.75E+01 |

(continued)

| | | k | A4 | A6 | A8 | A10 |
|---|---|---|---|---|---|---|
| | S12 | 0 | -1.05E-01 | -4.17E-01 | 1.02E+01 | -1.11E+02 |
| L7 | S13 | 0 | -4.82E-01 | 1.58E+00 | -2.20E+01 | 1.84E+02 |
| | S14 | 0 | -7.12E-01 | 4.07E-01 | -3.93E+00 | 1.05E+01 |
| | | A12 | A14 | A16 | A18 | A20 |
| L1 | S1 | 2.44E+01 | -8.19E+01 | 1.56E+02 | -1.85E+02 | 1.47E+02 |
| | S2 | 1.02E+03 | -1.55E+03 | 1.42E+03 | -7.33E+02 | 1.62E+02 |
| L2 | S3 | -3.31E+03 | 1.48E+04 | -4.63E+04 | 1.09E+05 | -1.96E+05 |
| | S4 | 2.23E+02 | -1.40E+03 | 5.10E+03 | -1.24E+04 | 2. 1 OE+04 |
| L3 | S5 | 6.82E+02 | -2.09E+03 | 4.37E+03 | -6.01E+03 | 4.40E+03 |
| | S6 | -2.39E+03 | 1.31E+04 | -4.37E+04 | 9.73E+04 | -1.49E+05 |
| L4 | S7 | -7.04E+03 | 3.55E+04 | -1.17E+05 | 2.64E+05 | -4. 11E+05 |
| | S8 | -4.49E+03 | 1.99E+04 | -6.28E+04 | 1.43E+05 | -2.33E+05 |
| L5 | S9 | -1.85E+03 | 6.05E+03 | -1.44E+04 | 2.52E+04 | -3.24E+04 |
| | S10 | -1.74E+03 | 4.89E+03 | -1.01E+04 | 1.54E+04 | -1.70E+04 |
| L6 | S11 | 5.71E+02 | -4.29E+03 | 1.68E+04 | -4.31E+04 | 7.61E+04 |
| | S12 | 6.93E+02 | -2.84E+03 | 8.09E+03 | -1.65E+04 | 2.44E+04 |
| L7 | S13 | -1.04E+03 | 4.21E+03 | -1.24E+04 | 2.70E+04 | -4.29E+04 |
| | S14 | 7.00E+01 | -7.52E+02 | 3.40E+03 | -9.49E+03 | 1.79E+04 |
| | | A22 | A24 | A26 | A28 | A30 |
| L1 | S1 | -7.80E+01 | 2.13E+01 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | 2.66E+05 | -2.57E+05 | 1.66E+05 | -6.34E+04 | 1.08E+04 |
| | S4 | -2.48E+04 | 2.01E+04 | -1.06E+04 | 3.27E+03 | -4.46E+02 |
| L3 | S5 | 5.68E+02 | -4.64E+03 | 4.46E+03 | -1.95E+03 | 3.43E+02 |
| | S6 | 1.60E+05 | -1.16E+05 | 5.52E+04 | -1.53E+04 | 1.89E+03 |
| L4 | S7 | 4.41E+05 | -3.18E+05 | 1.45E+05 | -3.75E+04 | 4.01E+03 |
| | S8 | 2.69E+05 | -2.13E+05 | 1.10E+05 | -3.32E+04 | 4.43E+03 |
| L5 | S9 | 3.01E+04 | -1.96E+04 | 8.49E+03 | -2.19E+03 | 2.53E+02 |
| | S10 | 1.31E+04 | -6.70E+03 | 2.01E+03 | -2.48E+02 | -8.76E+00 |
| L6 | S11 | -9.39E+04 | 7.95E+04 | -4.41E+04 | 1.45E+04 | -2.13E+03 |
| | S12 | -2.58E+04 | 1.90E+04 | -9.26E+03 | 2.68E+03 | -3.49E+02 |
| L7 | S13 | 4.91E+04 | -3.93E+04 | 2.08E+04 | -6.56E+03 | 9.27E+02 |
| | S14 | -2.31E+04 | 2.04E+04 | -1.16E+04 | 3.90E+03 | -5.80E+02 |

It can be learned from Table 2.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x, y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 8 and FIG. 9.

For optical parameters of the lens assembly including the foregoing lenses, refer to Table 2.3.

Table 2.3 shows the optical parameters of the lens assembly according to Embodiment 2 of this application.

| | |
|---|---|
| F-number F# in the infinity state | 1.49 |
| F-number F# in the macro state | 3.88 |
| Focal length in the infinity state/mm | 13.8 |
| Half image height/mm | 3.75 |
| Magnification in the macro state | 0.3x |
| Object distance in the macro state/mm | 51.7 |
| Movement distance of the first lens group/mm | 1.92 |
| Total track length in the infinity state/mm | 14.7 |
| Total track length in the macro state/mm | 16.6 |

It can be learned from Table 2.3 that, the lens assembly according to Embodiment 2 of this application features a wide aperture, so that a requirement for an infinity shooting scene can be satisfied, and a magnification and a resolution in a macro shooting scene can be high. In addition, the lens assembly has a short total track length, so that small-sized designs of the lens assembly and the camera module can be implemented.

FIG. 10 is a diagram of a modulation transfer function curve for a lens assembly in an infinity state according to Embodiment 2 of this application. FIG. 11 is a diagram of a modulation transfer function curve for a lens assembly in a macro state according to Embodiment 2 of this application.

In FIG. 10 and FIG. 11, horizontal coordinates represent different frequencies, and vertical coordinates represent modulation contrasts. Solid lines in the figures represent sagittal fields, and dashed lines in the figures represent tangential fields. It can be learned from FIG. 10 and FIG. 11 that the lens assembly has a good resolution and a good contrast, thereby ensuring high imaging quality and good imaging effect.

Embodiment 3

FIG. 12 is a diagram of a simulated structure of a camera module in which a lens assembly is in an infinity state according to Embodiment 3 of this application. FIG. 13 is a diagram of a simulated structure of a camera module in which a lens assembly is in a macro state according to Embodiment 3 of this application.

In this embodiment of this application, with reference to FIG. 12 and FIG. 13, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 13, not shown in FIG. 12), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a negative focal power, the fourth lens 14 has a positive focal power, and the first lens group 10a has a positive focal power as a whole.

The fifth lens 15 has a negative focal power, the sixth lens 16 has a positive focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is convex. At least a part that is of an object-side surface of the fourth lens 14 and that corresponds to the optical axis is concave, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is convex. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 12, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 13, the first lens group 10a is disposed closer to the object side (the aperture stop 18), and the aperture stop 18 actually blocks light.

A ratio of a focal length f1 of the first lens group 10a to a focal length f2 of the second lens group 10b |f1/f2|=0.91.

A distance, along the optical axis between the object-side surface of the first lens and the aperture stop, for the lens assembly in the infinity state CT1=4.26 mm. A distance, along the optical axis between the object-side surface of the first lens and the aperture stop, for the lens assembly in the macro state CT2=2.28 mm. A movement distance, of the first lens group along the optical axis, for the lens assembly switching from the infinity state to the macro state L=1.98 mm.

An f-number of the lens assembly in the infinity state F#=1.49, and an f-number of the lens assembly in the macro state F#=3.80.

A magnification of the lens assembly in the macro state Mag=0.3x.

A focal length of the lens assembly in the infinity state EFL=13.50 mm, a total track length of the lens assembly in the infinity state TTL1=14.6 mm, and a ratio of the focal length EFL of the lens assembly to the total track length TTL1 of the lens assembly EFL/TTL1=0.92.

A total track length of the lens assembly in the macro state TTL2=16.6 mm.

A ratio of the movement distance L of the first lens group to the total track length TTL1 of the lens assembly in the infinity state L/TTL1=0.14.

An object distance for the lens assembly in the macro state C=50.7 mm. The movement distance L of the first lens group and the object side C for the lens assembly in the macro state satisfy (L/C)*10=0.39.

A refractive index of the first lens Nd1=1.596.

Table 3.1 shows optical parameters of optical elements in the camera module according to Embodiment 3 of this application.

| | Surface number | Surface profile | Curvature radius | Thickness | Material | Y semi-aperture |
|---|---|---|---|---|---|---|
| Aperture stop | S0 | - | - | -1.99 | | 4.53 |
| L1 | S1 | Aspherical | 5.87 | 3.00 | 596.648 | 4.53 |
| | S2 | Aspherical | -34.65 | 0.05 | | 4.20 |
| L2 | S3 | Aspherical | 7.42 | 0.58 | 675.193 | 3.87 |
| | S4 | Aspherical | 4.08 | 1.44 | | 3.33 |
| L3 | S5 | Aspherical | 38.65 | 0.78 | 665.199 | 3.27 |
| | S6 | Aspherical | 11.87 | 0.08 | | 3.26 |
| L4 | S7 | Aspherical | 10.64 | 0.75 | 545.561 | 3.24 |
| | S8 | Aspherical | -9.92 | 0.67 | | 3.22 |
| L5 | S9 | Aspherical | -4.22 | 0.56 | 536.556 | 2.77 |
| | S10 | Aspherical | 20.75 | 0.28 | | 2.59 |
| L6 | S11 | Aspherical | 2.39 | 0.65 | 545.561 | 2.56 |
| | S12 | Aspherical | 4.41 | 2.56 | | 2.45 |

(continued)

| | Surface number | Surface profile | Curvature radius | Thickness | Material | Y semi-aperture |
|---|---|---|---|---|---|---|
| L7 | S13 | Aspherical | -7.06 | 1.34 | 536.556 | 2.86 |
| | S14 | Aspherical | -24.27 | 1.18 | | 3.28 |
| IR | S15 | Spherical | - | 0.21 | 518.641 | 3.64 |
| | S16 | Spherical | - | 0.49 | | 3.66 |
| Photosensitive surface | S17 | Spherical | - | 0.00 | - | 3.75 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

For specific descriptions of S0 to S17, refer to Embodiment 1. Details are not described again in this embodiment.

For meanings of parameters such as the curvature radius, the thickness, the material, and the Y semi-aperture, also refer to Embodiment 1. Details are not described again in this embodiment.

Table 3.2 shows aspherical coefficients of the lenses in the lens assembly according to Embodiment 3 of this application.

| | | k | A4 | A6 | A8 | A10 |
|---|---|---|---|---|---|---|
| L1 | S1 | 0 | 1.40E-04 | -7.06E-05 | 2.25E-05 | -4.26E-06 |
| | S2 | 0 | 3.91E-03 | -1.71E-03 | 5.03E-04 | -8.48E-05 |
| L2 | S3 | 0 | -5.64E-03 | 2.25E-03 | -1.88E-03 | 7.63E-04 |
| | S4 | 0 | -1.10E-02 | 6.56E-03 | -4.74E-03 | 1.93E-03 |
| L3 | S5 | 0 | -1.52E-02 | 2.82E-02 | -2.67E-02 | 1.59E-02 |
| | S6 | 0 | -1.59E-01 | 2.72E-01 | -2.70E-01 | 1.73E-01 |
| L4 | S7 | 0 | -1.98E-01 | 3.37E-01 | -3.39E-01 | 2.20E-01 |
| | S8 | 0 | -2.24E-02 | 4.09E-02 | -4.57E-02 | 3.28E-02 |
| L5 | S9 | 0 | 2.27E-02 | 1.76E-02 | -3.94E-02 | 4.24E-02 |
| | S10 | 0 | -2.93E-02 | 5.49E-02 | -7.70E-02 | 7.97E-02 |
| L6 | S11 | -1 | -4.78E-02 | 4.43E-02 | -4.89E-02 | 4.41E-02 |
| | S12 | 0 | -3.63E-03 | 6.11E-03 | -9.77E-03 | 8.70E-03 |
| L7 | S13 | 0 | -7.83E-03 | 2.09E-03 | -3.00E-03 | 2.60E-03 |
| | S14 | 0 | -6.65E-03 | 2.67E-04 | 2.49E-04 | -6.09E-04 |
| | | A12 | A14 | A16 | A18 | A20 |
| L1 | S1 | 5.15E-07 | -4.13E-08 | 2.25E-09 | -8.78E-11 | 2.54E-12 |
| | S2 | 8.71E-06 | -5.58E-07 | 2.17E-08 | -4.73E-10 | 4.43E-12 |
| L2 | S3 | -1.72E-04 | 2.19E-05 | -1.12E-06 | -1.15E-07 | 2.86E-08 |
| | S4 | -4.78E-04 | 7.47E-05 | -7.46E-06 | 5.41E-07 | -5.47E-08 |
| L3 | S5 | -6.58E-03 | 1.95E-03 | -4.27E-04 | 6.92E-05 | -8.30E-06 |
| | S6 | -7.52E-02 | 2.31E-02 | -5.13E-03 | 8.32E-04 | -9.84E-05 |
| L4 | S7 | -9.73E-02 | 3.03E-02 | -6.79E-03 | 1.11E-03 | -1.32E-04 |
| | S8 | -1.58E-02 | 5.36E-03 | -1.30E-03 | 2.29E-04 | -2.92E-05 |
| L5 | S9 | -2.97E-02 | 1.45E-02 | -5.06E-03 | 1.29E-03 | -2.38E-04 |
| | S10 | -5.94E-02 | 3.20E-02 | -1.26E-02 | 3.61E-03 | -7.60E-04 |

(continued)

| | | k | A4 | A6 | A8 | A10 |
|---|---|---|---|---|---|---|
| L6 | S11 | -2.94E-02 | 1.41E-02 | -4.86E-03 | 1.19E-03 | -2.03E-04 |
| | S12 | -3.94E-03 | -9.18E-05 | 1.28E-03 | -8.45E-04 | 3.06E-04 |
| L7 | S13 | -1.48E-03 | 5.95E-04 | -1.74E-04 | 3.79E-05 | -6.25E-06 |
| | S14 | 5.14E-04 | -2.52E-04 | 8.09E-05 | -1.79E-05 | 2.79E-06 |
| | | A22 | A24 | A26 | A28 | A30 |
| L1 | S1 | -5.15E-14 | 5.28E-16 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | -2.83E-09 | 1.67E-10 | -6.06E-12 | 1.27E-13 | -1.17E-15 |
| | S4 | 8.38E-09 | -9.40E-10 | 6.22E-11 | -2.21E-12 | 3.30E-14 |
| L3 | S5 | 7.27E-07 | -4.52E-08 | 1.89E-09 | -4.74E-11 | 5.43E-13 |
| | S6 | 8.40E-06 | -5.04E-07 | 2.02E-08 | -4.84E-10 | 5.26E-12 |
| L4 | S7 | 1.13E-05 | -6.78E-07 | 2.72E-08 | -6.50E-10 | 7.04E-12 |
| | S8 | 2.68E-06 | -1.72E-07 | 7.38E-09 | -1.89E-10 | 2.18E-12 |
| L5 | S9 | 3.17E-05 | -2.97E-06 | 1.85E-07 | -6.90E-09 | 1.16E-10 |
| | S10 | 1.16E-04 | -1.24E-05 | 8.81E-07 | -3.75E-08 | 7.23E-10 |
| L6 | S11 | 2.32E-05 | -1.60E-06 | 4.74E-08 | 9.88E-10 | -8.00E-11 |
| | S12 | -7.09E-05 | 1.08E-05 | -1.04E-06 | 5.80E-08 | -1.43E-09 |
| L7 | S13 | 7.72E-07 | -6.98E-08 | 4.37E-09 | -1.68E-10 | 3.00E-12 |
| | S14 | -3.05E-07 | 2.29E-08 | -1.13E-09 | 3.28E-11 | -4.25E-13 |

It can be learned from Table 3.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x,y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 12 and FIG. 13.

For optical parameters of the lens assembly including the foregoing lenses, refer to Table 3.3.

Table 3.3 shows the optical parameters of the lens assembly according to Embodiment 3 of this application.

| | |
|---|---|
| F-number F# in the infinity state | 1.49 |
| F-number F# in the macro state | 3.8 |
| Focal length in the infinity state/mm | 13.5 |
| Half image height/mm | 3.75 |
| Magnification in the macro state | 0.3x |
| Object distance in the macro state/mm | 50.7 |
| Movement distance of the first lens group/mm | 1.98 |
| Total track length in the infinity state/mm | 14.6 |

(continued)

| | |
|---|---|
| Total track length in the macro state/mm | 16.6 |

It can be learned from Table 3.3 that, the lens assembly according to Embodiment 3 of this application features a wide aperture, so that a requirement for an infinity shooting scene can be satisfied, and a magnification and a resolution in a macro shooting scene can be high. In addition, the lens assembly has a short total track length, so that small-sized designs of the lens assembly and the camera module can be implemented.

FIG. 14 is a diagram of a modulation transfer function curve for a lens assembly in an infinity state according to Embodiment 3 of this application. FIG. 15 is a diagram of a modulation transfer function curve for a lens assembly in a macro state according to Embodiment 3 of this application.

In FIG. 14 and FIG. 15, horizontal coordinates represent different frequencies, and vertical coordinates represent modulation contrasts. Solid lines in the figures represent sagittal fields, and dashed lines in the figures represent tangential fields. It can be learned from FIG. 14 and FIG. 15 that the lens assembly has a good resolution and a good contrast, thereby ensuring high imaging quality and good imaging effect.

Embodiment 4

FIG. 16 is a diagram of a simulated structure of a camera module in which a lens assembly is in an infinity state according to Embodiment 4 of this application. FIG. 17 is a diagram of a simulated structure of a camera module in which a lens assembly is in a macro state according to Embodiment 4 of this application.

In this embodiment of this application, with reference to FIG. 16 and FIG. 17, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 17, not shown in FIG. 16), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a positive focal power, the fourth lens 14 has a negative focal power, and the first lens group 10a has a positive focal power as a whole.

The fifth lens 15 has a negative focal power, the sixth lens 16 has a positive focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is concave. At least a part that is of an object-side surface of the fourth lens 14 and that corresponds to the optical axis is concave, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is convex. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 16, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 17, the first lens group 10a is disposed closer to the object side (the aperture stop 18), and the aperture stop 18 actually blocks light.

A ratio of a focal length f1 of the first lens group 10a to a focal length f2 of the second lens group 10b $|f1/f2|=0.96$.

A distance, along the optical axis between the object-side surface of the first lens and the aperture stop, for the lens assembly in the infinity state CT1=4.01 mm. A distance, along the optical axis between the object-side surface of the first lens and the aperture stop, for the lens assembly in the macro state CT2=2.06 mm. A movement distance, of the first lens group along the optical axis, for the lens assembly switching from the infinity state to the macro state L=1.95 mm.

An f-number of the lens assembly in the infinity state F#=1.54, and an f-number of the lens assembly in the macro state F#=3.97.

A magnification of the lens assembly in the macro state Mag=0.3x.

A focal length of the lens assembly in the infinity state EFL=14.07 mm, a total track length of the lens assembly in the infinity state TTL1=14.65 mm, and a ratio of the focal length EFL of the lens assembly to the total track length TTL1 of the lens assembly EFL/TTL1=0.96.

A total track length of the lens assembly in the macro state TTL2=16.6 mm.

A ratio of the movement distance L of the first lens group to the total track length TTL1 of the lens assembly in the infinity state L/TTL1=0.13.

An object distance for the lens assembly in the macro state C=52.7 mm. The movement distance L of the first lens group and the object side C for the lens assembly in the macro state satisfy (L/C)*10=0.37.

A refractive index of the first lens Nd1=1.584.

Table 4.1 shows optical parameters of optical elements in the camera module according to Embodiment 4 of this application.

| | Surface number | Surface profile | Curvature radius | Thickness | Material | Y semi-aperture |
|---|---|---|---|---|---|---|
| Aperture stop | S0 | - | - | -0.60 | | 4.56 |
| L1 | S1 | Aspherical | 5.73 | 3.02 | 584.671 | 4.58 |
| | S2 | Aspherical | -41.49 | 0.11 | | 4.28 |
| L2 | S3 | Aspherical | 7.73 | 0.51 | 677.192 | 3.99 |
| | S4 | Aspherical | 4.11 | 1.43 | | 3.47 |
| L3 | S5 | Aspherical | 48.01 | 0.70 | 661.207 | 3.41 |
| | S6 | Aspherical | -9.16 | 0.08 | | 3.39 |
| L4 | S7 | Aspherical | -6.67 | 0.63 | 545.561 | 3.37 |
| | S8 | Aspherical | -8.23 | 0.86 | | 3.37 |
| L5 | S9 | Aspherical | -4.88 | 0.46 | 542.538 | 2.89 |
| | S10 | Aspherical | 19.58 | 0.31 | | 2.81 |
| L6 | S11 | Aspherical | 2.50 | 0.60 | 545.561 | 2.60 |
| | S12 | Aspherical | 4.21 | 2.41 | | 2.47 |
| L7 | S13 | Aspherical | -6.62 | 1.36 | 536.556 | 2.79 |
| | S14 | Aspherical | -21.15 | 1.33 | | 3.34 |
| IR | S15 | Spherical | - | 0.21 | 518.641 | 3.64 |
| | S16 | Spherical | - | 0.64 | | 3.66 |
| Photosensitive surface | S17 | Spherical | - | 0.00 | - | 3.75 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

For specific descriptions of S0 to S17, refer to Embodiment 1. Details are not described again in this embodiment.

For meanings of parameters such as the curvature radius, the thickness, the material, and the Y semi-aperture, also refer to Embodiment 1. Details are not described again in this embodiment.

Table 4.2 shows aspherical coefficients of the lenses in the lens assembly according to Embodiment 4 of this application.

| | | k | A4 | A6 | A8 | A10 |
|---|---|---|---|---|---|---|
| L1 | S1 | 0 | -1.14E-04 | 4.88E-06 | -4.87E-07 | -5.00E-07 |
| | S2 | 0 | 2.47E-03 | -1.26E-03 | 4.62E-04 | -9.55E-05 |
| L2 | S3 | 0 | -2.95E-03 | -2.98E-03 | 1.67E-03 | -5.36E-04 |
| | S4 | 0 | -5.39E-03 | -1.86E-03 | 1.35E-04 | 9.76E-04 |
| L3 | S5 | 0 | 1.76E-02 | -2.89E-02 | 2.70E-02 | -1.65E-02 |
| | S6 | 0 | 1.60E-01 | -2.64E-01 | 2.54E-01 | -1.58E-01 |
| L4 | S7 | 0 | 1.96E-01 | -3.29E-01 | 3.22E-01 | -2.04E-01 |
| | S8 | 0 | 1.96E-02 | -3.55E-02 | 3.75E-02 | -2.53E-02 |
| L5 | S9 | 0 | 2.09E-02 | -4.09E-05 | -1.54E-03 | -7.17E-04 |
| | S10 | 0 | -3.43E-02 | 4.59E-02 | -4.59E-02 | 3.44E-02 |
| L6 | S11 | -1 | -4.88E-02 | 2.72E-02 | -1.22E-02 | -3.76E-03 |
| | S12 | 0 | -8.14E-03 | 1.58E-03 | -1.53E-03 | 7.24E-05 |
| L7 | S13 | 0 | -1.16E-02 | 5.38E-03 | -8.18E-03 | 8.25E-03 |
| | S14 | 0 | -1.12E-02 | 5.36E-03 | -5.24E-03 | 3.40E-03 |
| | | A12 | A14 | A16 | A18 | A20 |
| L1 | S1 | 1.55E-07 | -2.13E-08 | 1.66E-09 | -8.12E-11 | 2.63E-12 |
| | S2 | 1.18E-05 | -9.00E-07 | 4.13E-08 | -1.05E-09 | 1.14E-11 |
| L2 | S3 | 1.25E-04 | -2.27E-05 | 3.14E-06 | -3.12E-07 | 2.08E-08 |
| | S4 | -8.13E-04 | 3.57E-04 | -1.02E-04 | 2.04E-05 | -2.87E-06 |
| L3 | S5 | 6.96E-03 | -2.09E-03 | 4.56E-04 | -7.29E-05 | 8.53E-06 |
| | S6 | 6.72E-02 | -2.03E-02 | 4.46E-03 | -7.18E-04 | 8.48E-05 |
| L4 | S7 | 8.80E-02 | -2.70E-02 | 6.02E-03 | -9.84E-04 | 1.18E-04 |
| | S8 | 1.16E-02 | -3.76E-03 | 8.80E-04 | -1.50E-04 | 1.88E-05 |
| L5 | S9 | 1.46E-03 | -9.25E-04 | 3.51E-04 | -9.04E-05 | 1.64E-05 |
| | S10 | -1.98E-02 | 8.74E-03 | -2.94E-03 | 7.47E-04 | -1.41E-04 |
| L6 | S11 | 1.07E-02 | -8.87E-03 | 4.46E-03 | -1.52E-03 | 3.65E-04 |
| | S12 | 6.22E-04 | -5.26E-04 | 2.39E-04 | -6.80E-05 | 1.17E-05 |
| L7 | S13 | -5.62E-03 | 2.67E-03 | -9.07E-04 | 2.24E-04 | -4.06E-05 |
| | S14 | -1.48E-03 | 4.43E-04 | -9.32E-05 | 1.37E-05 | -1.39E-06 |
| | | A22 | A24 | A26 | A28 | A30 |
| L1 | S1 | -5.69E-14 | 6.35E-16 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | -8.08E-10 | 9.99E-12 | 5.48E-13 | -2.54E-14 | 3.31E-16 |
| | S4 | 2.85E-07 | -1.96E-08 | 8.89E-10 | -2.39E-11 | 2.89E-13 |
| L3 | S5 | -7.21E-07 | 4.29E-08 | -1.70E-09 | 4.04E-11 | -4.34E-13 |
| | S6 | -7.25E-06 | 4.37E-07 | -1.76E-08 | 4.27E-10 | -4.68E-12 |
| L4 | S7 | -1.02E-05 | 6.26E-07 | -2.56E-08 | 6.28E-10 | -6.98E-12 |
| | S8 | -1.70E-06 | 1.08E-07 | -4.56E-09 | 1.15E-10 | -1.32E-12 |

(continued)

| | | A22 | A24 | A26 | A28 | A30 |
|---|---|---|---|---|---|---|
| L5 | S9 | -2.13E-06 | 1.93E-07 | -1.16E-08 | 4.22E-10 | -6.97E-12 |
| | S10 | 1.96E-05 | -1.91E-06 | 1.25E-07 | -4.92E-09 | 8.74E-11 |
| L6 | S11 | -6.17E-05 | 7.20E-06 | -5.52E-07 | 2.50E-08 | -5.09E-10 |
| | S12 | -9.59E-07 | -4.45E-08 | 1.88E-08 | -1.73E-09 | 5.75E-11 |
| L7 | S13 | 5.33E-06 | -4.95E-07 | 3.09E-08 | -1.16E-09 | 1.97E-11 |
| | S14 | 9.03E-08 | -3.12E-09 | 3.34E-12 | 3.67E-12 | -9.14E-14 |

It can be learned from Table 4.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x, y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 16 and FIG. 17.

For optical parameters of the lens assembly including the foregoing lenses, refer to Table 4.3.

Table 4.3 shows the optical parameters of the lens assembly according to Embodiment 4 of this application.

| | |
|---|---|
| F-number F# in the infinity state | 1.54 |
| F-number F# in the macro state | 3.97 |
| Focal length in the infinity state/mm | 14.07 |
| Half image height/mm | 3.75 |
| Magnification in the macro state | 0.3x |
| Object distance in the macro state/mm | 52.7 |
| Movement distance of the first lens group/mm | 1.95 |
| Total track length in the infinity state/mm | 14.65 |
| Total track length in the macro state/mm | 16.6 |

It can be learned from Table 4.3 that, the lens assembly according to Embodiment 4 of this application features a wide aperture, so that a requirement for an infinity shooting scene can be satisfied, and a magnification and a resolution in a macro shooting scene can be high. In addition, the lens assembly has a short total track length, so that small-sized designs of the lens assembly and the camera module can be implemented.

FIG. 18 is a diagram of a modulation transfer function curve for a lens assembly in an infinity state according to Embodiment 4 of this application. FIG. 19 is a diagram of a modulation transfer function curve for a lens assembly in a macro state according to Embodiment 4 of this application.

In FIG. 18 and FIG. 19, horizontal coordinates represent different frequencies, and vertical coordinates represent modulation contrasts. Solid lines in the figures represent sagittal fields, and dashed lines in the figures represent tangential fields. It can be learned from FIG. 18 and FIG. 19 that the lens assembly has a good resolution and a good contrast, thereby ensuring high imaging quality and good imaging effect.

Embodiment 5

FIG. 20 is a diagram of a simulated structure of a camera module in which a lens assembly is in an infinity state according to Embodiment 5 of this application. FIG. 21 is a diagram of a simulated structure of a camera module in which a lens assembly is in a macro state according to Embodiment 5 of this application.

In this embodiment of this application, with reference to FIG. 20 and FIG. 21, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 21, not shown in FIG. 20), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a positive focal power, the fourth lens 14 has a positive focal power, and the first lens group 10a has a positive focal power as a whole.

The fifth lens 15 has a negative focal power, the sixth lens 16 has a negative focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is concave. At least a part that is of an object-side surface of the fourth lens 14 and that corresponds to the optical axis is concave, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is convex. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 20, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 21, the first lens group 10a is disposed closer to the object side (the aperture stop 18), and the aperture stop 18 actually blocks light.

A ratio of a focal length f1 of the first lens group 10a to a focal length f2 of the second lens group 10b $|f1/f2|=0.82$.

A distance, along the optical axis between the object-side surface of the first lens and the aperture stop, for the lens assembly in the infinity state CT1=3.95 mm. A distance, along the optical axis between the object-side surface of the first lens and the aperture stop, for the lens assembly in the macro state CT2=2.03 mm. A movement distance, of the first lens group along the optical axis, for the lens assembly switching from the infinity state to the macro state L=1.92 mm.

An f-number of the lens assembly in the infinity state F#=1.61, and an f-number of the lens assembly in the macro state F#=4.00.

A magnification of the lens assembly in the macro state Mag=0.275x.

A focal length of the lens assembly in the infinity state EFL=14.32 mm, a total track length of the lens assembly in the infinity state TTL1=14.76 mm, and a ratio of the focal length EFL of the lens assembly to the total track length TTL1 of the lens assembly EFL/TTL1=0.97.

A total track length of the lens assembly in the macro state TTL2=16.68 mm.

A ratio of the movement distance L of the first lens group to the total track length TTL1 of the lens assembly in the infinity state L/TTL1=0.13.

An object distance for the lens assembly in the macro state C=58 mm. The movement distance L of the first lens group and the object side C for the lens assembly in the macro state satisfy $(L/C)*10=0.33$.

A refractive index of the first lens Nd1=1.581.

Table 5.1 shows optical parameters of optical elements in the camera module according to Embodiment 5 of this application.

| | Surface number | Surface profile | Curvature radius | Thickness | Material | Y semi-aperture |
|---|---|---|---|---|---|---|
| Aperture stop | S0 | - | - | -2.09 | | 4.53 |
| L1 | S1 | Aspherical | 5.60 | 3.06 | 581.673 | 4.53 |
| | S2 | Aspherical | -29.59 | 0.11 | | 4.19 |
| L2 | S3 | Aspherical | 8.64 | 0.47 | 659.208 | 3.85 |
| | S4 | Aspherical | 4.15 | 1.62 | | 3.34 |
| L3 | S5 | Aspherical | 120.76 | 0.53 | 673.194 | 3.23 |
| | S6 | Aspherical | -53.38 | 0.08 | | 3.22 |
| L4 | S7 | Aspherical | -291.69 | 0.70 | 545.561 | 3.17 |
| | S8 | Aspherical | -11.07 | 0.60 | | 3.12 |
| L5 | S9 | Aspherical | -16.85 | 0.50 | 536.556 | 2.50 |
| | S10 | Aspherical | 97.68 | 0.52 | | 2.32 |
| L6 | S11 | Aspherical | 3.32 | 0.52 | 545.561 | 2.04 |
| | S12 | Aspherical | 2.92 | 2.17 | | 2.06 |
| L7 | S13 | Aspherical | -5.54 | 1.68 | 536.556 | 2.97 |
| | S14 | Aspherical | -8.99 | 1.34 | | 3.03 |
| IR | S15 | Spherical | - | 0.21 | 518.641 | 4.50 |
| | S16 | Spherical | - | 0.65 | | 4.50 |
| Photosensitive surface | S17 | Spherical | - | 0.00 | | 7.30 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

For specific descriptions of S0 to S17, refer to Embodiment 1. Details are not described again in this embodiment.

For meanings of parameters such as the curvature radius, the thickness, the material, and the Y semi-aperture, also refer to Embodiment 1. Details are not described again in this embodiment.

Table 5.2 shows aspherical coefficients of the lenses in the lens assembly according to Embodiment 5 of this application.

| | | k | A4 | A6 | A8 | A10 |
|---|---|---|---|---|---|---|
| L1 | S1 | 0 | -1.97E-04 | 4.26E-05 | -1.25E-05 | 1.77E-06 |
| | S2 | 0 | 2.62E-03 | -8.54E-04 | 2.45E-04 | -4.26E-05 |
| L2 | S3 | 0 | -2.06E-03 | -3.79E-03 | 2.28E-03 | -8.87E-04 |
| | S4 | 0 | -2.47E-03 | -6.95E-03 | 6.04E-03 | -3.58E-03 |
| L3 | S5 | 0 | 7.05E-03 | 1.25E-05 | -4.95E-03 | 4.61E-03 |
| | S6 | 0 | -1.26E-02 | 3.97E-02 | -5.16E-02 | 4.00E-02 |
| L4 | S7 | 0 | -3.20E-02 | 5.61E-02 | -6.37E-02 | 4.82E-02 |
| | S8 | 0 | -5.62E-03 | 1.72E-03 | 4.31E-04 | -6.78E-05 |
| L5 | S9 | 0 | 4.99E-02 | -5.23E-02 | 5.16E-02 | -3.76E-02 |
| | S10 | 0 | 6.73E-02 | -8.96E-02 | 1.01E-01 | -8.54E-02 |

(continued)

| | | k | A4 | A6 | A8 | A10 |
|---|---|---|---|---|---|---|
| L6 | S11 | 0 | 2.26E-02 | -7.93E-02 | 1.19E-01 | -1.43E-01 |
| | S12 | 0 | -6.78E-04 | -2.60E-02 | 9.17E-03 | 3.30E-02 |
| L7 | S13 | 0 | -3.07E-02 | 8.37E-02 | -1.87E-01 | 2.63E-01 |
| | S14 | 0 | 5.93E-03 | -3.31E-02 | 4.70E-02 | -4.17E-02 |
| | | A12 | A14 | A16 | A18 | A20 |
| L1 | S1 | -1.37E-07 | 5.67E-09 | -1.85E-10 | 1.39E-11 | -9.86E-13 |
| | S2 | 4.53E-06 | -2.95E-07 | 1.15E-08 | -2.45E-10 | 2.20E-12 |
| L2 | S3 | 2.55E-04 | -5.47E-05 | 8.65E-06 | -1.00E-06 | 8.34E-08 |
| | S4 | 1.52E-03 | -4.66E-04 | 1.03E-04 | -1.67E-05 | 1.95E-06 |
| L3 | S5 | -2.42E-03 | 8.50E-04 | -2.12E-04 | 3.80E-05 | -4.93E-06 |
| | S6 | -2.07E-02 | 7.46E-03 | -1.92E-03 | 3.58E-04 | -4.83E-05 |
| L4 | S7 | -2.50E-02 | 9.13E-03 | -2.38E-03 | 4.46E-04 | -6.05E-05 |
| | S8 | -4.12E-04 | 3.27E-04 | -1.27E-04 | 3.04E-05 | -4.89E-06 |
| L5 | S9 | 1.99E-02 | -7.70E-03 | 2.20E-03 | -4.66E-04 | 7.30E-05 |
| | S10 | 5.31E-02 | -2.43E-02 | 8.25E-03 | -2.07E-03 | 3.80E-04 |
| L6 | S11 | 1.32E-01 | -9.28E-02 | 4.90E-02 | -1.93E-02 | 5.61E-03 |
| | S12 | -7.04E-02 | 7.49E-02 | -5.16E-02 | 2.47E-02 | -8.42E-03 |
| L7 | S13 | -2.50E-01 | 1.66E-01 | -7.84E-02 | 2.67E-02 | -6.58E-03 |
| | S14 | 2.47E-02 | -1.01E-02 | 2.96E-03 | -6.23E-04 | 9.45E-05 |
| | | A22 | A24 | A26 | A28 | A30 |
| L1 | S1 | 3.82E-14 | -8.12E-16 | 8.25E-18 | 0.00E+00 | 0.00E+00 |
| | S2 | -6.11E-17 | 0.00E+00 | 0.00E+00 | 0.00E+00 | 0.00E+00 |
| L2 | S3 | -4.94E-09 | 2.00E-10 | -5.21E-12 | 7.71E-14 | -4.72E-16 |
| | S4 | -1.63E-07 | 9.49E-09 | -3.65E-10 | 8.33E-12 | -8.54E-14 |
| L3 | S5 | 4.56E-07 | -2.93E-08 | 1.24E-09 | -3.10E-11 | 3.48E-13 |
| | S6 | 4.67E-06 | -3.15E-07 | 1.41E-08 | -3.77E-10 | 4.54E-12 |
| L4 | S7 | 5.87E-06 | -3.97E-07 | 1.78E-08 | -4.75E-10 | 5.71E-12 |
| | S8 | 5.39E-07 | -4.05E-08 | 1.99E-09 | -5.78E-11 | 7.57E-13 |
| L5 | S9 | -8.35E-06 | 6.77E-07 | -3.70E-08 | 1.22E-09 | -1.84E-11 |
| | S10 | -5.05E-05 | 4.71E-06 | -2.92E-07 | 1.08E-08 | -1.81E-10 |
| L6 | S11 | -1.19E-03 | 1.78E-04 | -1.78E-05 | 1.07E-06 | -2.95E-08 |
| | S12 | 2.03E-03 | -3.40E-04 | 3.75E-05 | -2.45E-06 | 7.20E-08 |
| L7 | S13 | 1.16E-03 | -1.41E-04 | 1.13E-05 | -5.31E-07 | 1.12E-08 |
| | S14 | -1.02E-05 | 7.71E-07 | -3.83E-08 | 1.13E-09 | -1.48E-11 |

It can be learned from Table 5.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x,y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 20 and FIG. 21.

For optical parameters of the lens assembly including the foregoing lenses, refer to Table 5.3.

Table 5.3 shows the optical parameters of the lens assembly according to Embodiment 5 of this application.

| | |
|---|---|
| F-number F# in the infinity state | 1.61 |
| F-number F# in the macro state | 4.00 |
| Focal length in the infinity state/mm | 14.32 |
| Half image height/mm | 3.75 |
| Magnification in the macro state | 0.275x |
| Object distance in the macro state/mm | 58 |
| Movement distance of the first lens group/mm | 1.92 |
| Total track length in the infinity state/mm | 14.76 |
| Total track length in the macro state/mm | 16.68 |

It can be learned from Table 5.3 that, the lens assembly according to Embodiment 5 of this application features a wide aperture, so that a requirement for an infinity shooting scene can be satisfied, and a magnification and a resolution in a macro shooting scene can be high. In addition, the lens assembly has a short total track length, so that small-sized designs of the lens assembly and the camera module can be implemented.

FIG. 22 is a diagram of a modulation transfer function curve for a lens assembly in an infinity state according to Embodiment 5 of this application. FIG. 23 is a diagram of a modulation transfer function curve for a lens assembly in a macro state according to Embodiment 5 of this application.

In FIG. 22 and FIG. 23, horizontal coordinates represent different frequencies, and vertical coordinates represent modulation contrasts. Solid lines in the figures represent sagittal fields, and dashed lines in the figures represent tangential fields. It can be learned from FIG. 22 and FIG. 23 that the lens assembly has a good resolution and a good contrast, thereby ensuring high imaging quality and good imaging effect.

Embodiment 6

FIG. 24 is a diagram of a simulated structure of a camera module in which a lens assembly is in an infinity state according to Embodiment 6 of this application. FIG. 25 is a diagram of a simulated structure of a camera module in which a lens assembly is in a macro state according to Embodiment 6 of this application.

In this embodiment of this application, with reference to FIG. 24 and FIG. 25, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 25, not shown in FIG. 24), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a positive focal power, the fourth lens 14 has a positive focal power, and the first lens group 10a has a positive focal power as a whole.

The fifth lens 15 has a negative focal power, the sixth lens 16 has a negative focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is convex. At least a part that is of an object-side surface of the fourth lens 14 and that corresponds to the optical axis is concave, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is convex. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 24, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 25, the first lens group 10a is disposed closer to the object side (the aperture stop 18), and the aperture stop 18 actually blocks light.

A ratio of a focal length f1 of the first lens group 10a to a focal length f2 of the second lens group 10b |f1/f2|=0.4.

A distance, along the optical axis between the object-side surface of the first lens and the aperture stop, for the lens assembly in the infinity state CT1=3.98 mm. A distance, along the optical axis between the object-side surface of the first lens and the aperture stop, for the lens assembly in the macro state CT2=2.04 mm. A movement distance, of the first lens group along the optical axis, for the lens assembly switching from the infinity state to the macro state L=1.94 mm.

An f-number of the lens assembly in the infinity state F#=1.39, and an f-number of the lens assembly in the macro state F#=3.83.

A magnification of the lens assembly in the macro state Mag=0.275x.

A focal length of the lens assembly in the infinity state EFL=13.6 mm, a total track length of the lens assembly in the infinity state TTL1=14.72 mm, and a ratio of the focal length EFL of the lens assembly to the total track length TTL1 of the lens assembly EFL/TTL1=0.92.

A total track length of the lens assembly in the macro state TTL2=16.66 mm.

A ratio of the movement distance L of the first lens group to the total track length TTL1 of the lens assembly in the infinity state L/TTL1=0.13.

An object distance for the lens assembly in the macro state C=55.73 mm. The movement distance L of the first lens group and the object side C for the lens assembly in the macro state satisfy (L/C)*10=0.35.

A refractive index of the first lens Nd1=1.596.

Table 6.1 shows optical parameters of optical elements in the camera module according to Embodiment 6 of this application.

| | Surface number | Surface profile | Curvature radius | Thickness | Material | Y semi-aperture |
|---|---|---|---|---|---|---|
| Aperture stop | S0 | - | - | -2.36 | | 4.89 |
| L1 | S1 | Aspherical | 5.86 | 3.28 | 596.658 | 4.89 |
| | S2 | Aspherical | -43.37 | 0.05 | | 4.55 |
| L2 | S3 | Aspherical | 7.37 | 0.61 | 677.192 | 4.15 |
| | S4 | Aspherical | 4.04 | 1.48 | | 3.52 |
| L3 | S5 | Aspherical | 27.60 | 0.83 | 668.197 | 3.41 |
| | S6 | Aspherical | 182.69 | 0.18 | | 3.35 |
| L4 | S7 | Aspherical | -106.67 | 0.73 | 545.561 | 3.31 |
| | S8 | Aspherical | -10.67 | 0.66 | | 3.27 |
| L5 | S9 | Aspherical | -4.27 | 0.43 | 536.556 | 2.73 |
| | S10 | Aspherical | 14.01 | 0.31 | | 2.50 |

(continued)

| | Surface number | Surface profile | Curvature radius | Thickness | Material | Y semi-aperture |
|---|---|---|---|---|---|---|
| L6 | S11 | Aspherical | 2.40 | 0.65 | 545.561 | 2.45 |
| | S12 | Aspherical | 5.17 | 2.49 | | 2.39 |
| L7 | S13 | Aspherical | -6.20 | 1.36 | 536.556 | 2.77 |
| | S14 | Aspherical | -18.25 | 1.08 | | 3.30 |
| IR | S15 | Spherical | - | 0.21 | 518.641 | 3.66 |
| | S16 | Spherical | - | 0.39 | | 3.68 |
| Photosensitive surface | S17 | Spherical | - | 0.00 | | 3.75 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

For specific descriptions of S0 to S17, refer to Embodiment 1. Details are not described again in this embodiment.

For meanings of parameters such as the curvature radius, the thickness, the material, and the Y semi-aperture, also refer to Embodiment 1. Details are not described again in this embodiment.

Table 6.2 shows aspherical coefficients of the lenses in the lens assembly according to Embodiment 6 of this application.

| | | k | A4 | A6 | A8 | A10 |
|---|---|---|---|---|---|---|
| L1 | S1 | 0 | 1.70E-06 | -5.74E-06 | 1.46E-06 | -1.45E-07 |
| | S2 | 0 | 1.63E-03 | -4.41E-04 | 1.31E-04 | -2.26E-05 |
| L2 | S3 | 0 | -4.78E-03 | -1.95E-04 | 8.55E-05 | -1.90E-05 |
| | S4 | 0 | -6.86E-03 | 5.01E-04 | -7.30E-04 | 5.90E-04 |
| L3 | S5 | 0 | 2.43E-03 | -1.11E-03 | 2.75E-04 | -9.82E-05 |
| | S6 | 0 | 4.14E-03 | -3.69E-03 | 1.83E-03 | -6.68E-04 |
| L4 | S7 | 0 | 1.75E-03 | -3.98E-03 | 2.09E-03 | -5.82E-04 |
| | S8 | 0 | -4.70E-04 | -8.51E-04 | 4.37E-04 | -4.16E-05 |
| L5 | S9 | 0 | 2.61E-02 | 7.61E-04 | -5.85E-03 | 4.86E-03 |
| | S10 | 0 | -3.05E-02 | 3.52E-02 | -2.85E-02 | 1.78E-02 |
| L6 | S11 | -1 | -4.31E-02 | 2.60E-02 | -1.57E-02 | 7.93E-03 |
| | S12 | 0 | 3.37E-03 | -2.99E-03 | 3.00E-03 | -2.33E-03 |
| L7 | S13 | 0 | -6.40E-03 | 4.70E-04 | -1.02E-04 | -5.93E-04 |
| | S14 | 0 | -5.85E-03 | 2.46E-04 | -4.72E-04 | 4.88E-04 |
| | | A12 | A14 | A16 | A18 | A20 |
| L1 | S1 | -1.04E-08 | 4.26E-09 | -4.72E-10 | 2.61E-11 | -7.32E-13 |
| | S2 | 2.39E-06 | -1.55E-07 | 6.06E-09 | -1.31E-10 | 1.20E-12 |
| L2 | S3 | 1.17E-05 | -4.85E-06 | 1.16E-06 | -1.76E-07 | 1.80E-08 |
| | S4 | -3.12E-04 | 1.17E-04 | -3.19E-05 | 6.27E-06 | -8.89E-07 |
| L3 | S5 | 2.33E-05 | 4.53E-07 | -2.75E-06 | 1.05E-06 | -2.08E-07 |
| | S6 | 1.24E-04 | 3.17E-05 | -3.14E-05 | 1.09E-05 | -2.19E-06 |
| L4 | S7 | -1.66E-05 | 1.17E-04 | -6.39E-05 | 1.92E-05 | -3.65E-06 |
| | S8 | -8.22E-05 | 6.69E-05 | -2.82E-05 | 7.57E-06 | -1.36E-06 |

(continued)

| | | A12 | A14 | A16 | A18 | A20 |
|---|---|---|---|---|---|---|
| L5 | S9 | -2.67E-03 | 1.09E-03 | -3.43E-04 | 8.18E-05 | -1.46E-05 |
| | S10 | -8.66E-03 | 3.27E-03 | -9.54E-04 | 2.12E-04 | -3.54E-05 |
| L6 | S11 | -3.37E-03 | 1.22E-03 | -3.75E-04 | 9.37E-05 | -1.81E-05 |
| | S12 | 1.01E-03 | -7.13E-05 | -1.95E-04 | 1.33E-04 | -4.74E-05 |
| L7 | S13 | 8.17E-04 | -5.56E-04 | 2.38E-04 | -6.90E-05 | 1.40E-05 |
| | S14 | -3.23E-04 | 1.42E-04 | -4.30E-05 | 9. 16E-06 | -1.38E-06 |
| | | A22 | A24 | A26 | A28 | A30 |
| L1 | S1 | 8.31E-15 | 0.00E+00 | 0.00E+00 | 0.00E+00 | 0.00E+00 |
| | S2 | 0.00E+00 | 0.00E+00 | 0.00E+00 | 0.00E+00 | 0.00E+00 |
| L2 | S3 | -1.26E-09 | 6.05E-11 | -1.90E-12 | 3.50E-14 | -2.89E-16 |
| | S4 | 8.96E-08 | -6.24E-09 | 2.86E-10 | -7.72E-12 | 9.31E-14 |
| L3 | S5 | 2.53E-08 | -1.94E-09 | 9.21E-11 | -2.48E-12 | 2.91E-14 |
| | S6 | 2.82E-07 | -2.35E-08 | 1.23E-09 | -3.71E-11 | 4.89E-13 |
| L4 | S7 | 4.58E-07 | -3.78E-08 | 1.98E-09 | -5.96E-11 | 7.88E-13 |
| | S8 | 1.67E-07 | -1.37E-08 | 7.21E-10 | -2.21E-11 | 2.99E-13 |
| L5 | S9 | 1.92E-06 | -1.77E-07 | 1.09E-08 | -4.03E-10 | 6.70E-12 |
| | S10 | 4.36E-06 | -3.81E-07 | 2.24E-08 | -7.87E-10 | 1.25E-11 |
| L6 | S11 | 2.54E-06 | -2.46E-07 | 1.53E-08 | -5.31E-10 | 7.47E-12 |
| | S12 | 1.08E-05 | -1.61E-06 | 1.55E-07 | -8.69E-09 | 2.16E-10 |
| L7 | S13 | -1.97E-06 | 1.92E-07 | -1.22E-08 | 4.57E-10 | -7.65E-12 |
| | S14 | 1.48E-07 | -1.09E-08 | 5.28E-10 | -1.51E-11 | 1.94E-13 |

It can be learned from Table 6.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x, y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 24 and FIG. 25.

For optical parameters of the lens assembly including the foregoing lenses, refer to Table 6.3.

Table 6.3 shows the optical parameters of the lens assembly according to Embodiment 6 of this application.

| | |
|---|---|
| F-number F# in the infinity state | 1.39 |
| F-number F# in the macro state | 3.83 |
| Focal length in the infinity state/mm | 13.6 |
| Half image height/mm | 3.75 |
| Magnification in the macro state | 0.275x |
| Object distance in the macro state/mm | 55.73 |

(continued)

| | |
|---|---|
| Movement distance of the first lens group/mm | 1.94 |
| Total track length in the infinity state/mm | 14.72 |
| Total track length in the macro state/mm | 16.66 |

It can be learned from Table 6.3 that, the lens assembly according to Embodiment 6 of this application features a wide aperture, so that a requirement for an infinity shooting scene can be satisfied, and a magnification and a resolution in a macro shooting scene can be high. In addition, the lens assembly has a short total track length, so that small-sized designs of the lens assembly and the camera module can be implemented.

FIG. 26 is a diagram of a modulation transfer function curve for a lens assembly in an infinity state according to Embodiment 6 of this application. FIG. 27 is a diagram of a modulation transfer function curve for a lens assembly in a macro state according to Embodiment 6 of this application.

In FIG. 26 and FIG. 27, horizontal coordinates represent different frequencies, and vertical coordinates represent modulation contrasts. Solid lines in the figures represent sagittal fields, and dashed lines in the figures represent tangential fields. It can be learned from FIG. 26 and FIG. 27 that the lens assembly has a good resolution and a good contrast, thereby ensuring high imaging quality and good imaging effect.

Embodiment 7

FIG. 28 is a diagram of a simulated structure of a camera module in which a lens assembly is in an infinity state according to Embodiment 7 of this application. FIG. 29 is a diagram of a simulated structure of a camera module in which a lens assembly is in a macro state according to Embodiment 7 of this application.

In this embodiment of this application, with reference to FIG. 28 and FIG. 29, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 29, not shown in FIG. 28), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a positive focal power, the fourth lens 14 has a positive focal power, and the first lens group 10a has a positive focal power as a whole.

The fifth lens 15 has a negative focal power, the sixth lens 16 has a negative focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is convex. At least a part that is of an object-side surface of the fourth lens 14 and that corresponds to the optical axis is convex, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is convex. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 28, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 29, the first lens group 10a is disposed closer to the object side (the aperture stop 18), and the aperture stop 18 actually blocks light.

A ratio of a focal length f1 of the first lens group 10a to a focal length f2 of the second lens group 10b |f1/f2|=0.4.

A distance, along the optical axis between the object-side surface of the first lens and the aperture stop, for the lens assembly in the infinity state CT1=3.72 mm. A distance, along the optical axis between the object-side surface of the first lens and the aperture stop, for the lens assembly in the macro state CT2=1.94 mm. A movement distance, of the first lens group along the optical axis, for the lens assembly switching from the infinity state to the macro state L=1.78 mm.

An f-number of the lens assembly in the infinity state F#=1.37, and an f-number of the lens assembly in the macro state F#=3.92.

A magnification of the lens assembly in the macro state Mag=0.25x.

A focal length of the lens assembly in the infinity state EFL=13.4 mm, a total track length of the lens assembly in the infinity state TTL1=15.07 mm, and a ratio of the focal length EFL of the lens assembly to the total track length TTL1 of the lens assembly EFL/TTL1=0.89.

A total track length of the lens assembly in the macro state TTL2=16.85 mm.

A ratio of the movement distance L of the first lens group to the total track length TTL1 of the lens assembly in the infinity state L/TTL1=0.12.

An object distance for the lens assembly in the macro state C=62.5 mm. The movement distance L of the first lens group and the object side C for the lens assembly in the macro state satisfy (L/C)*10=0.28.

A refractive index of the first lens Nd1=1.598.

Table 7.1 shows optical parameters of optical elements in the camera module according to Embodiment 7 of this application.

| | Surface number | Surface profile | Curvature radius | Thickness | Material | Y semi-aperture |
|---|---|---|---|---|---|---|
| Aperture stop | S0 | - | - | -2.60 | | 5.08 |
| L1 | S1 | Aspherical | 5.90 | 3.47 | 598.656 | 5.08 |
| | S2 | Aspherical | -53.02 | 0.05 | | 4.71 |
| L2 | S3 | Aspherical | 7.09 | 0.63 | 677.192 | 4.25 |
| | S4 | Aspherical | 4.02 | 1.52 | | 3.58 |
| L3 | S5 | Aspherical | 25.21 | 0.95 | 661.205 | 3.45 |
| | S6 | Aspherical | 56.57 | 0.10 | | 3.38 |
| L4 | S7 | Aspherical | 82.19 | 0.75 | 545.561 | 3.36 |
| | S8 | Aspherical | -13.03 | 0.70 | | 3.34 |
| L5 | S9 | Aspherical | -3.59 | 0.44 | 536.556 | 2.81 |
| | S10 | Aspherical | 11.64 | 0.21 | | 2.58 |
| L6 | S11 | Aspherical | 2.02 | 0.81 | 545.561 | 2.22 |
| | S12 | Aspherical | 4.38 | 2.61 | | 2.20 |
| L7 | S13 | Aspherical | -3.64 | 1.84 | 536.556 | 2.63 |
| | S14 | Aspherical | -4.59 | 0.74 | | 3.34 |
| IR | S15 | Spherical | - | 0.21 | 518.641 | 3.75 |
| | S16 | Spherical | - | 0.05 | | 3.77 |
| Photosensitive surface | S17 | Spherical | - | 0.00 | | 3.78 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

For specific descriptions of S0 to S17, refer to Embodiment 1. Details are not described again in this embodiment.

For meanings of parameters such as the curvature radius, the thickness, the material, and the Y semi-aperture, also refer to Embodiment 1. Details are not described again in this embodiment.

Table 7.2 shows aspherical coefficients of the lenses in the lens assembly according to Embodiment 7 of this application.

| | | k | A4 | A6 | A8 | A10 |
|---|---|---|---|---|---|---|
| L1 | S1 | 0 | -2.49E-06 | -1.10E-05 | 4.15E-06 | -7.59E-07 |
| | S2 | 0 | -2.35E-04 | 5.80E-04 | -1.40E-04 | 1.91E-05 |
| L2 | S3 | 0 | -5.54E-03 | 1.28E-04 | 1.32E-04 | -6.97E-05 |
| | S4 | 0 | -5.60E-03 | -9.35E-05 | -7.12E-04 | 7.77E-04 |
| L3 | S5 | 0 | 4.31E-03 | -1.66E-03 | 4.09E-04 | -1.80E-04 |
| | S6 | 0 | 4.61E-03 | -4.44E-03 | 4.02E-03 | -3.05E-03 |
| L4 | S7 | 0 | -2.14E-03 | -2.98E-03 | 4.19E-03 | -3.43E-03 |
| | S8 | 0 | -3.30E-03 | 9.68E-04 | -5.42E-04 | 3.05E-04 |
| L5 | S9 | 0 | 3.48E-02 | 3.41E-03 | -1.49E-02 | 1.48E-02 |
| | S10 | 0 | -8.02E-02 | 1.09E-01 | -1.12E-01 | 8.88E-02 |
| L6 | S11 | -1 | -9.26E-02 | 8.30E-02 | -6.76E-02 | 4.08E-02 |
| | S12 | 0 | 6.61E-03 | -1.02E-02 | 1.79E-02 | -2.54E-02 |
| L7 | S13 | 0 | 3.98E-04 | -1.47E-03 | 5.96E-03 | -1.12E-02 |
| | S14 | 0 | 1.16E-02 | -1.73E-02 | 1.76E-02 | -1.20E-02 |
| | | A12 | A14 | A16 | A18 | A20 |
| L1 | S1 | 9.24E-08 | -8.76E-09 | 7.02E-10 | -4.76E-11 | 2.52E-12 |
| | S2 | -1.61E-06 | 8.49E-08 | -2.74E-09 | 5.00E-11 | -3.93E-13 |
| L2 | S3 | 2.09E-05 | -4.34E-06 | 6.75E-07 | -8.00E-08 | 7.07E-09 |
| | S4 | -4.60E-04 | 1.79E-04 | -4.84E-05 | 9.32E-06 | -1.29E-06 |
| L3 | S5 | 7.44E-05 | -2.36E-05 | 5.51E-06 | -9.13E-07 | 1.07E-07 |
| | S6 | 1.56E-03 | -5.22E-04 | 1.12E-04 | -1.47E-05 | 9.73E-07 |
| L4 | S7 | 1.83E-03 | -6.33E-04 | 1.39E-04 | -1.90E-05 | 1.37E-06 |
| | S8 | -9.33E-05 | 1.29E-05 | 9.01E-08 | -2.83E-07 | 3.65E-08 |
| L5 | S9 | -9.57E-03 | 4.42E-03 | -1.51E-03 | 3.80E-04 | -7.08E-05 |
| | S10 | -5.42E-02 | 2.52E-02 | -8.90E-03 | 2.37E-03 | -4.71E-04 |
| L6 | S11 | -1.49E-02 | 1.94E-04 | 3.45E-03 | -2.30E-03 | 8.59E-04 |
| | S12 | 2.68E-02 | -2.11E-02 | 1.24E-02 | -5.44E-03 | 1.75E-03 |
| L7 | S13 | 1.17E-02 | -7.77E-03 | 3.52E-03 | -1.12E-03 | 2.53E-04 |
| | S14 | 5.61E-03 | -1.84E-03 | 4.35E-04 | -7.49E-05 | 9.40E-06 |
| | | A22 | A24 | A26 | A28 | A30 |
| L1 | S1 | -9.60E-14 | 2.41E-15 | -3.57E-17 | 2.40E-19 | 0.00E+00 |
| | S2 | 0.00E+00 | 0.00E+00 | 0.00E+00 | 0.00E+00 | 0.00E+00 |
| L2 | S3 | -4.53E-10 | 2.03E-11 | -5.99E-13 | 1.05E-14 | -8.23E-17 |
| | S4 | 1.26E-07 | -8.60E-09 | 3.86E-10 | -1.03E-11 | 1.22E-13 |
| L3 | S5 | -8.86E-09 | 5.32E-10 | -2.29E-11 | 6.47E-13 | -8.93E-15 |
| | S6 | 1.16E-08 | -8.02E-09 | 6.71E-10 | -2.56E-11 | 3.92E-13 |
| L4 | S7 | -6.64E-09 | -8.28E-09 | 7.51E-10 | -2.96E-11 | 4.60E-13 |
| | S8 | -1.11E-09 | -1.66E-10 | 1.96E-11 | -8.62E-13 | 1.45E-14 |

(continued)

| | | A22 | A24 | A26 | A28 | A30 |
|---|---|---|---|---|---|---|
| L5 | S9 | 9.58E-06 | -9.14E-07 | 5.82E-08 | -2.22E-09 | 3.82E-11 |
| | S10 | 6.88E-05 | -7.15E-06 | 5.00E-07 | -2.11E-08 | 4.05E-10 |
| L6 | S11 | -2.09E-04 | 3.39E-05 | -3.55E-06 | 2.18E-07 | -5.94E-09 |
| | S12 | -4.08E-04 | 6.67E-05 | -7.22E-06 | 4.65E-07 | -1.34E-08 |
| L7 | S13 | -4.05E-05 | 4.51E-06 | -3.31E-07 | 1.44E-08 | -2.84E-10 |
| | S14 | -8.51E-07 | 5.40E-08 | -2.28E-09 | 5.76E-11 | -6.57E-13 |

It can be learned from Table 7.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x,y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 28 and FIG. 29.

For optical parameters of the lens assembly including the foregoing lenses, refer to Table 7.3.

Table 7.3 shows the optical parameters of the lens assembly according to Embodiment 7 of this application.

| | |
|---|---|
| F-number F# in the infinity state | 1.37 |
| F-number F# in the macro state | 3.92 |
| Focal length in the infinity state/mm | 13.4 |
| Half image height/mm | 3.75 |
| Magnification in the macro state | 0.25x |
| Object distance in the macro state/mm | 62.5 |
| Movement distance of the first lens group/mm | 1.78 |
| Total track length in the infinity state/mm | 15.07 |
| Total track length in the macro state/mm | 16.85 |

It can be learned from Table 7.3 that, the lens assembly according to Embodiment 7 of this application features a wide aperture, so that a requirement for an infinity shooting scene can be satisfied, and a magnification and a resolution in a macro shooting scene can be high. In addition, the lens assembly has a short total track length, so that small-sized designs of the lens assembly and the camera module can be implemented.

FIG. 30 is a diagram of a modulation transfer function curve for a lens assembly in an infinity state according to Embodiment 7 of this application. FIG. 31 is a diagram of a modulation transfer function curve for a lens assembly in a macro state according to Embodiment 7 of this application.

In FIG. 30 and FIG. 31, horizontal coordinates represent different frequencies, and vertical coordinates represent modulation contrasts. Solid lines in the figures represent sagittal fields, and dashed lines in the figures represent tangential fields. It can be learned from FIG. 30 and FIG. 31 that the lens assembly has a good resolution and a good contrast, thereby ensuring high imaging quality and good imaging effect.

Embodiment 8

FIG. 32 is a diagram of a simulated structure of a camera module in which a lens assembly is in an infinity state according to Embodiment 8 of this application. FIG. 33 is a diagram of a simulated structure of a camera module in which a lens assembly is in a macro state according to Embodiment 8 of this application.

In this embodiment of this application, with reference to FIG. 32 and FIG. 33, a lens assembly 10 may include a first lens group 10a and a second lens group 10b. The first lens group 10a may include four lenses, which may be, for example, a first lens 11, a second lens 12, a third lens 13, and a fourth lens 14 sequentially from an object side to an image side. The second lens group 10b may include three lenses, which may be, for example, a fifth lens 15, a sixth lens 16, and a seventh lens 17 sequentially from the object side to the image side.

In other words, an aperture stop 18 (shown in FIG. 33, not shown in FIG. 32), the first lens 11, the second lens 12, the third lens 13, the fourth lens 14, the fifth lens 15, the sixth lens 16, the seventh lens 17, an optical filter 30, and an image sensor 20 are sequentially arranged along an optical axis x from the object side to the image side. Light entering a camera module 101 passes through the lens assembly 10 and the optical filter 30 in the foregoing sequence, is transmitted to the image sensor 20, and finally forms an image on the image sensor 20.

The first lens 11 has a positive focal power, the second lens 12 has a negative focal power, the third lens 13 has a positive focal power, the fourth lens 14 has a positive focal power, and the first lens group 10a has a positive focal power as a whole.

The fifth lens 15 has a negative focal power, the sixth lens 16 has a negative focal power, the seventh lens 17 has a negative focal power, and the second lens group 10b has a negative focal power as a whole.

At least a part that is of an object-side surface of the first lens 11 and that corresponds to the optical axis is convex, and at least a part that is of an image-side surface of the first lens 11 and that corresponds to the optical axis is concave. At least a part that is of an object-side surface of the second lens 12 and that corresponds to the optical axis is convex, and at least a part that is of an image-side surface of the second lens 12 and that corresponds to the optical axis is convex. At least a part that is of an object-side surface of the third lens 13 and that corresponds to the optical axis is convex, and at least a part that is of an image-side surface of the third lens 13 and that corresponds to the optical axis is concave. At least a part that is of an object-side surface of the fourth lens 14 and that corresponds to the optical axis is concave, and at least a part that is of an image-side surface of the fourth lens 14 and that corresponds to the optical axis is concave.

At least a part that is of an object-side surface of the fifth lens 15 and that corresponds to the optical axis is concave, and at least a part that is of an image-side surface of the fifth lens 15 and that corresponds to the optical axis is convex. At least a part that is of an object-side surface of the sixth lens 16 and that corresponds to the optical axis is convex, and at least a part that is of an image-side surface of the sixth lens 16 and that corresponds to the optical axis is convex. At least a part that is of an object-side surface of the seventh lens 17 and that corresponds to the optical axis is concave, and at least a part that is of an image-side surface of the seventh lens 17 and that corresponds to the optical axis is concave.

With reference to FIG. 32, when the lens assembly 10 is in the infinity state, an end that is of a lens barrel 19 and that faces the object side is fastened to the first lens 11, and a light transmission hole actually blocks light. When the lens assembly 10 switches from the infinity state to the macro state, the first lens group 10a moves toward the object side along the optical axis. With reference to FIG. 33, the first lens group 10a is disposed closer to the object side (the aperture stop 18), and the aperture stop 18 actually blocks light.

A ratio of a focal length f1 of the first lens group 10a to a focal length f2 of the second lens group 10b $|f1/f2|=0.48$.

A distance, along the optical axis between the object-side surface of the first lens and the aperture stop, for the lens assembly in the infinity state CT1=6.82 mm. A distance, along the optical axis between the object-side surface of the first lens and the aperture stop, for the lens assembly in the macro state CT2=4.04 mm. A movement distance, of the first lens group along the optical axis, for the lens assembly switching from the infinity state to the macro state L=2.78 mm.

An f-number of the lens assembly in the infinity state F#=1.37, and an f-number of the lens assembly in the macro state F#=3.92.

A magnification of the lens assembly in the macro state Mag=0.45x.

A focal length of the lens assembly in the infinity state EFL=14 mm, a total track length of the lens assembly in the infinity state TTL1=14.71 mm, and a ratio of the focal length EFL of the lens assembly to the total track length TTL1 of the lens assembly EFL/TTL1=0.95.

A total track length of the lens assembly in the macro state TTL2=17.5 mm.

A ratio of the movement distance L of the first lens group to the total track length TTL1 of the lens assembly in the infinity state L/TTL1=0.19.

An object distance for the lens assembly in the macro state C=34.85 mm. The movement distance L of the first lens group and the object side C for the lens assembly in the macro state satisfy (L/C)*10=0.80.

A refractive index of the first lens Nd1=1.601.

Table 8.1 shows optical parameters of optical elements in the camera module according to Embodiment 8 of this application.

| | Surface number | Surface profile | Curvature radius | Thickness | Material | Y semi-aperture |
|---|---|---|---|---|---|---|
| Aperture stop | S0 | - | - | -2.63 | | 5.08 |
| L1 | S1 | Aspherical | 5.84 | 3.47 | 601.652 | 5.08 |
| | S2 | Aspherical | -32.23 | 0.03 | | 4.75 |
| L2 | S3 | Aspherical | 7.48 | 0.63 | 677.192 | 4.28 |
| | S4 | Aspherical | 4.02 | 1.51 | | 3.60 |
| L3 | S5 | Aspherical | 26.64 | 0.86 | 627.237 | 3.45 |
| | S6 | Aspherical | -159.13 | 0.07 | | 3.40 |
| L4 | S7 | Aspherical | -179.81 | 0.69 | 545.561 | 3.33 |
| | S8 | Aspherical | -12.00 | 0.72 | | 3.29 |
| L5 | S9 | Aspherical | -3.06 | 0.35 | 540.558 | 2.68 |
| | S10 | Aspherical | 16.81 | 0.24 | | 2.67 |
| L6 | S11 | Aspherical | 2.09 | 0.76 | 545.561 | 2.00 |
| | S12 | Aspherical | 4.70 | 2.64 | | 2.23 |
| L7 | S13 | Aspherical | -3.78 | 2.05 | 536.556 | 2.73 |
| | S14 | Aspherical | -4.84 | 0.46 | | 3.42 |
| IR | S15 | Spherical | - | 0.21 | 518.641 | 3.75 |
| | S16 | Spherical | - | 0.03 | | 3.77 |
| Photosensitive surface | S17 | Spherical | - | 0.00 | | 3.78 |

L1 represents the first lens 11. L2 represents the second lens 12. L3 represents the third lens 13. L4 represents the fourth lens 14. L5 represents the fifth lens 15. L6 represents the sixth lens 16. L7 represents the seventh lens 17. IR represents the optical filter 30.

For specific descriptions of S0 to S17, refer to Embodiment 1. Details are not described again in this embodiment.

For meanings of parameters such as the curvature radius, the thickness, the material, and the Y semi-aperture, also refer to Embodiment 1. Details are not described again in this embodiment.

Table 8.2 shows aspherical coefficients of the lenses in the lens assembly according to Embodiment 8 of this application.

| | | k | A4 | A6 | A8 | A10 |
|---|---|---|---|---|---|---|
| L1 | S1 | 0 | -4.21E-05 | -4.55E-06 | 2.63E-06 | -5.42E-07 |
| | S2 | 0 | 1.64E-04 | 5.85E-04 | -1.56E-04 | 2.23E-05 |
| L2 | S3 | 0 | -5.46E-03 | -4.86E-05 | 3.02E-04 | -1.39E-04 |
| | S4 | 0 | -5.99E-03 | 3.14E-06 | -8.24E-04 | 9.51E-04 |
| L3 | S5 | 0 | 5.64E-03 | -3.11E-03 | 1.79E-03 | -9.68E-04 |
| | S6 | 0 | 1.63E-02 | -2.33E-02 | 2.08E-02 | -1.16E-02 |
| L4 | S7 | 0 | 1.20E-02 | -2.60E-02 | 2.50E-02 | -1.43E-02 |
| | S8 | 0 | -1.47E-03 | -1.43E-03 | 1.61E-03 | -9.36E-04 |
| L5 | S9 | 0 | 4.80E-02 | 2.02E-03 | -1.75E-02 | 1.67E-02 |
| | S10 | 0 | -7.06E-02 | 1.12E-01 | -1.22E-01 | 9.76E-02 |

(continued)

| | | k | A4 | A6 | A8 | A10 |
|---|---|---|---|---|---|---|
| L6 | S11 | -1 | -9.34E-02 | 8.33E-02 | -6.77E-02 | 4.11E-02 |
| | S12 | 0 | 5.21E-03 | -4.94E-03 | 3.46E-03 | 1.67E-03 |
| L7 | S13 | 0 | -5.14E-04 | -3.33E-04 | 2.66E-03 | -5.37E-03 |
| | S14 | 0 | 9.33E-03 | -1.03E-02 | 7.71E-03 | -3.95E-03 |
| | | A12 | A14 | A16 | A18 | A20 |
| L1 | S1 | 7.32E-08 | -7.82E-09 | 6.88E-10 | -4.87E-11 | 2.61E-12 |
| | S2 | -1.92E-06 | 1.02E-07 | -3.33E-09 | 6.09E-11 | -4.82E-13 |
| L2 | S3 | 3.67E-05 | -6.63E-06 | 8.99E-07 | -9.48E-08 | 7.70E-09 |
| | S4 | -5.75E-04 | 2.23E-04 | -5.91E-05 | 1.11E-05 | -1.50E-06 |
| L3 | S5 | 3.79E-04 | -1.13E-04 | 2.64E-05 | -4.75E-06 | 6.41E-07 |
| | S6 | 4.06E-03 | -8.81E-04 | 9.88E-05 | 2.35E-06 | -2.76E-06 |
| L4 | S7 | 5.23E-03 | -1.21E-03 | 1.59E-04 | -4.24E-06 | -2.45E-06 |
| | S8 | 3.48E-04 | -7.71E-05 | 6.83E-06 | 1.21E-06 | -4.95E-07 |
| L5 | S9 | -9.85E-03 | 4.12E-03 | -1.27E-03 | 2.91E-04 | -4.98E-05 |
| | S10 | -5.89E-02 | 2.69E-02 | -9.27E-03 | 2.40E-03 | -4.65E-04 |
| L6 | S11 | -1.67E-02 | 3.04E-03 | 1.09E-03 | -1.07E-03 | 4.25E-04 |
| | S12 | -7.11E-03 | 8.04E-03 | -5.26E-03 | 2.27E-03 | -6.68E-04 |
| L7 | S13 | 5.51E-03 | -3.51E-03 | 1.50E-03 | -4.44E-04 | 9.26E-05 |
| | S14 | 1.33E-03 | -2.96E-04 | 4.12E-05 | -2.87E-06 | -9.11E-08 |
| | | A22 | A24 | A26 | A28 | A30 |
| L1 | S1 | -9.93E-14 | 2.49E-15 | -3.68E-17 | 2.47E-19 | 0.00E+00 |
| | S2 | 0.00E+00 | 0.00E+00 | 0.00E+00 | 0.00E+00 | 0.00E+00 |
| L2 | S3 | -4.66E-10 | 2.01E-11 | -5.77E-13 | 9.88E-15 | -7.60E-17 |
| | S4 | 1.44E-07 | -9.61E-09 | 4.23E-10 | -1.10E-11 | 1.29E-13 |
| L3 | S5 | -6.31E-08 | 4.40E-09 | -2.04E-10 | 5.68E-12 | -7.13E-14 |
| | S6 | 4.72E-07 | -4.38E-08 | 2.41E-09 | -7.43E-11 | 9.91E-13 |
| L4 | S7 | 4.95E-07 | -4.85E-08 | 2.75E-09 | -8.63E-11 | 1.17E-12 |
| | S8 | 7.87E-08 | -7.29E-09 | 4.09E-10 | -1.30E-11 | 1.79E-13 |
| L5 | S9 | 6.25E-06 | -5.59E-07 | 3.36E-08 | -1.22E-09 | 2.02E-11 |
| | S10 | 6.60E-05 | -6.65E-06 | 4.50E-07 | -1.84E-08 | 3.40E-10 |
| L6 | S11 | -1.05E-04 | 1.69E-05 | -1.76E-06 | 1.07E-07 | -2.88E-09 |
| | S12 | 1.35E-04 | -1.86E-05 | 1.64E-06 | -8.27E-08 | 1.80E-09 |
| L7 | S13 | -1.36E-05 | 1.37E-06 | -9.09E-08 | 3.56E-09 | -6.27E-11 |
| | S14 | 4.29E-08 | -4.60E-09 | 2.62E-10 | -8.08E-12 | 1.07E-13 |

It can be learned from Table 8.2 that the lenses in the lens assembly are all an aspherical lens, in other words, the lens assembly includes 14 aspherical surfaces. An aspherical surface profile Z of each lens in the lens assembly may be obtained through calculation according to the following aspherical formula:

$$Z = \frac{cr^2}{1+\sqrt{1-(1+k)c^2r^2}} + \sum_{i=1}^{n} A_I E_I(x,y)$$

The parameter c=1/R. R represents a curvature radius. r represents a distance between a point on an optical surface and the optical axis. Z represents an aspherical sagittal height of the point along an optical axis. k represents a quadratic coefficient of the surface. i represents an aspherical coefficient term, where i is 30 in this embodiment. Ai represents an aspherical coefficient. Each lens may be simulated according to the obtained aspherical surface profile and the like to finally obtain the camera module shown in FIG. 32 and FIG. 33.

For optical parameters of the lens assembly including the foregoing lenses, refer to Table 8.3.

Table 8.3 shows the optical parameters of the lens assembly according to Embodiment 8 of this application.

| | |
|---|---|
| F-number F# in the infinity state | 1.37 |
| F-number F# in the macro state | 3.92 |
| Focal length in the infinity state/mm | 14 |
| Half image height/mm | 3.75 |
| Magnification in the macro state | 0.45x |
| Object distance in the macro state/mm | 34.85 |
| Movement distance of the first lens group/mm | 2.78 |
| Total track length in the infinity state/mm | 14.71 |
| Total track length in the macro state/mm | 17.5 |

It can be learned from Table 8.3 that, the lens assembly according to Embodiment 8 of this application features a wide aperture, so that a requirement for an infinity shooting scene can be satisfied, and a magnification and a resolution in a macro shooting scene can be high. **In** addition, the lens assembly has a short total track length, so that small-sized designs of the lens assembly and the camera module can be implemented.

FIG. 34 is a diagram of a modulation transfer function curve for a lens assembly in an infinity state according to Embodiment 8 of this application. FIG. 35 is a diagram of a modulation transfer function curve for a lens assembly in a macro state according to Embodiment 8 of this application.

**In** FIG. 34 and FIG. 35, horizontal coordinates represent different frequencies, and vertical coordinates represent modulation contrasts. Solid lines in the figures represent sagittal fields, and dashed lines in the figures represent tangential fields. It can be learned from FIG. 34 and FIG. 35 that the lens assembly has a good resolution and a good contrast, thereby ensuring high imaging quality and good imaging effect.

In the description of embodiments of this application, it should be noted that, unless otherwise explicitly stipulated and restricted, terms "installation", "joint connection", and "connection" should be understood in a broad sense. For example, the connection may be a fixed connection, or an indirect connection through an intermediate medium, or internal communication between two components, or an interaction relationship between two components. Persons of ordinary skill in the art may understand specific meanings of the foregoing terms in embodiments of this application based on specific cases. The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, the persons of ordinary skill in the art should understand that they may still make modifications to the technical solutions described in the foregoing embodiments, or make equivalent replacements to some or all of technical features. However, these modifications or replacements do not depart from the scope of the technical solutions in embodiments of this application.

## Claims

1. A lens assembly, comprising a first lens group and a second lens group that are sequentially arranged along an optical axis from an object side to an image side, wherein each lens group comprises a plurality of lenses sequentially arranged along the optical axis, the first lens group has a positive focal power, and the second lens group has a negative focal power;

a focal length f1 of the first lens group and a focal length f2 of the second lens group satisfy a conditional expression: $0.4<|f1/f2|<1.5$;
the first lens group is capable of moving along the optical axis, and when the lens assembly switches from an infinity state to a macro state, the first lens group moves toward the object side; and
when the lens assembly switches from the infinity state to the macro state, a movement distance L of the first lens group along the optical axis satisfies a conditional expression: $1<L<3.5$.

**2.** The lens assembly according to claim 1, wherein a light intake of the lens assembly in the macro state is less than a light intake of the lens assembly in the infinity state.

**3.** The lens assembly according to claim 1 or 2, wherein an f-number F# of the lens assembly in the infinity state satisfies a conditional expression: $1.2\leq F\#\leq 3.0$.

**4.** The lens assembly according to any one of claims 1 to 3, wherein an f-number F# of the lens assembly in the macro state satisfies a conditional expression:

$$3.0\leq F\#\leq 16.$$

**5.** The lens assembly according to any one of claims 2 to 4, further comprising an aperture stop, wherein the aperture stop is located on a side that is of the first lens group and that faces the object side.

**6.** The lens assembly according to claim 5, wherein the first lens group comprises at least a first lens, and the first lens is located on a side that is in the first lens group and that faces the object side; and

the movement distance L satisfies a conditional expression: $L=CT1-CT2$, wherein CT1 represents a distance, along the optical axis between an object-side surface of the first lens and the aperture stop, for the lens assembly in the infinity state; and
CT2 represents a distance, along the optical axis between the object-side surface of the first lens and the aperture stop, for the lens assembly in the macro state.

**7.** The lens assembly according to claim 5 or 6, wherein the aperture stop is a variable aperture stop, and a diameter of the aperture stop of the lens assembly in the macro state is less than a diameter of the aperture stop of the lens assembly in the infinity state.

**8.** The lens assembly according to claim 7, further comprising a lens barrel, wherein the plurality of lens groups are disposed in the lens barrel; and
a light transmission hole is provided on an end that is of the lens barrel and that faces the object side along the optical axis, and a diameter of the light transmission hole is greater than the diameter of the aperture stop of the lens assembly in the macro state.

**9.** The lens assembly according to any one of claims 1 to 8, wherein a magnification Mag of the lens assembly in the macro state satisfies a conditional expression:

$$0.1x<Mag<0.5x.$$

**10.** The lens assembly according to any one of claims 1 to 9, wherein the lens assembly satisfies a conditional expression: $0.8<EFL/TTL1<1$, wherein EFL represents a focal length of the lens assembly in the infinity state, and TTL1 represents a total track length of the lens assembly in the infinity state.

**11.** The lens assembly according to any one of claims 1 to 10, wherein the lens assembly satisfies a conditional expression: $0.1<L/TTL1<0.5$, wherein TTL1 represents the total track length of the lens assembly in the infinity state.

**12.** The lens assembly according to any one of claims 1 to 11, wherein the lens assembly satisfies a conditional expression: $0.1<(L/C)*10<1.0$, wherein C represents an object distance for the lens assembly in the macro state.

13. The lens assembly according to claim 6, wherein a refractive index Nd1 of the first lens satisfies a conditional expression: $1.4<Nd1<1.85$.

14. The lens assembly according to any one of claims 1 to 13, wherein the lens is an aspherical lens.

15. The lens assembly according to any one of claims 1 to 14, wherein shapes of the lenses comprise, at least, one or a combination of the following: a circle, an ellipse, a track oval, and a square.

16. A camera module, comprising at least an image sensor and the lens assembly according to any one of claims 1 to 15, wherein the image sensor is located on a side that is of the lens assembly and that faces the image side.

17. An electronic device, comprising at least a housing and the camera module according to claim 16, wherein the camera module is disposed on the housing.

[FIG. 1]

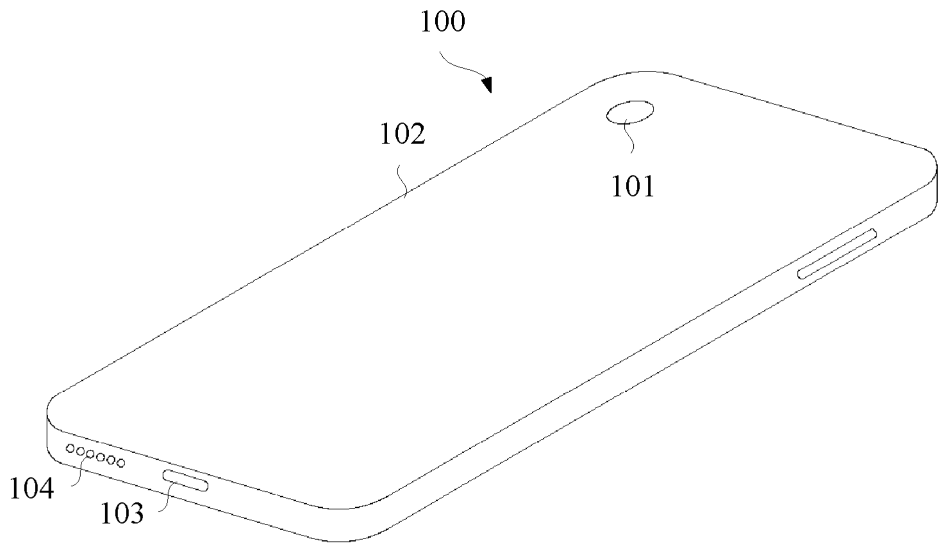
100
102
101
104
103

[FIG. 2]

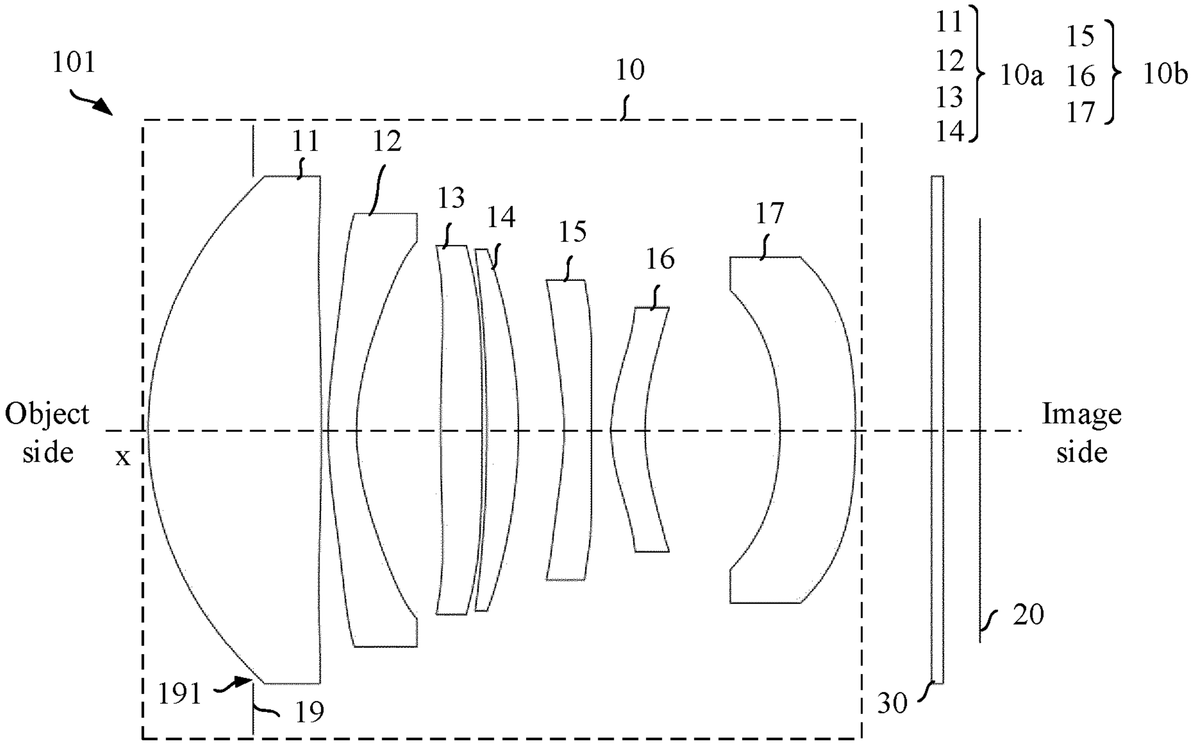
101
10
11
12
13
14
10a
15
16
17
10b
11
12
13
14
15
16
17
Object side
x
Image side
20
191
19
30

[FIG. 3]

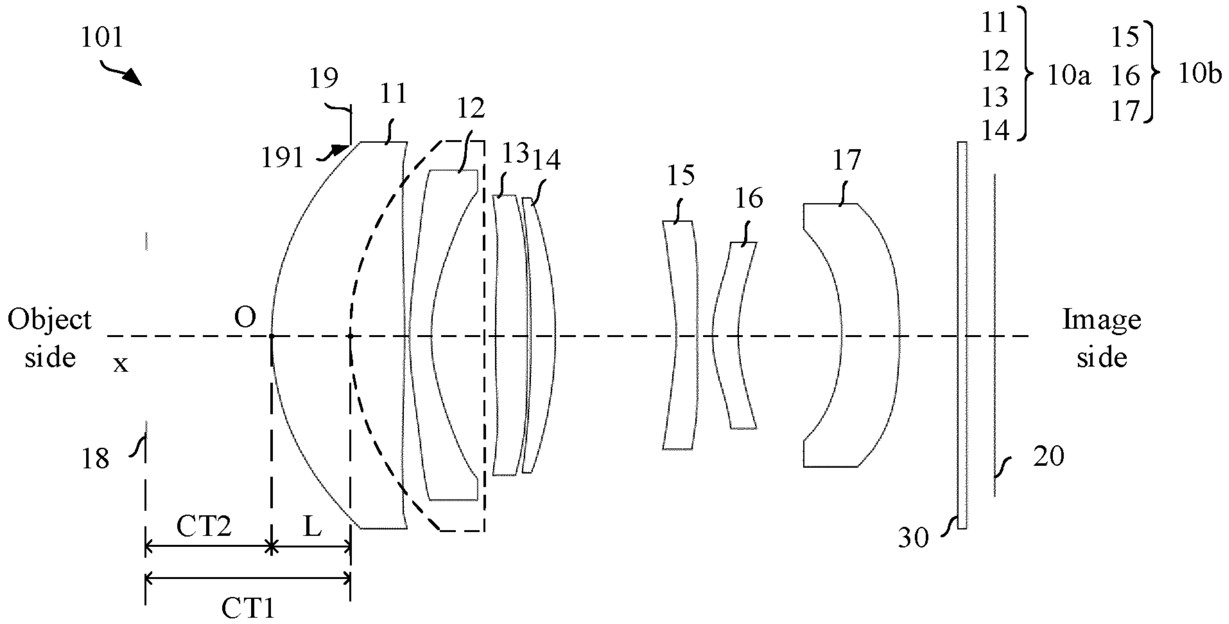
101
19
11
12
191
13
14
15
16
17
11
12
13
14
10a
15
16
17
10b
Object side
x
O
Image side
18
CT2
L
CT1
20
30

[FIG. 4]

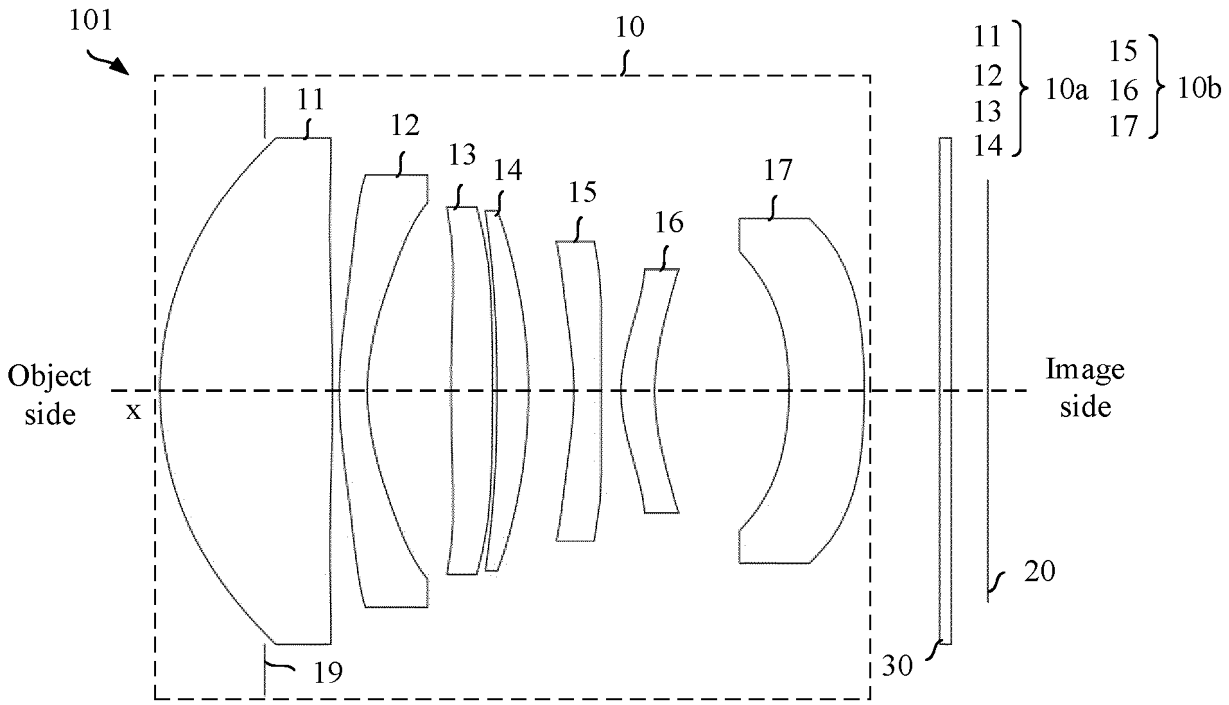
101
10
11
12
13
14
15
16
17
11
12
13
14
10a
15
16
17
10b
Object side
x
Image side
20
19
30

[FIG. 5]

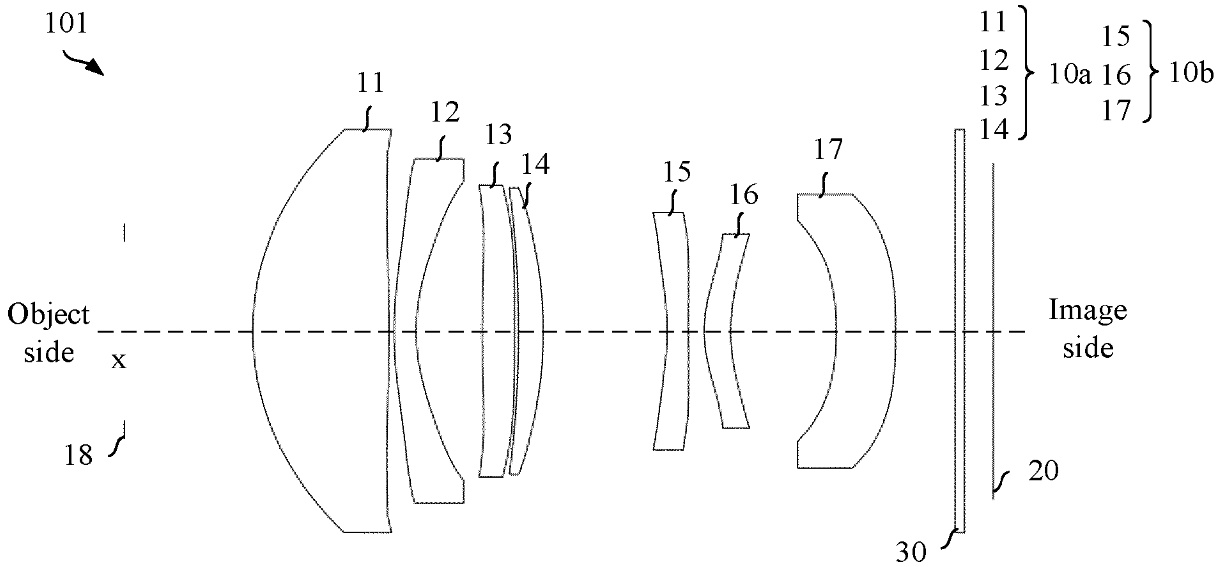
101
11
12
13
14
15
16
17
Object side
x
18
Image side
20
30
11
12
13
14
10a
15
16
17
10b

[FIG. 6]

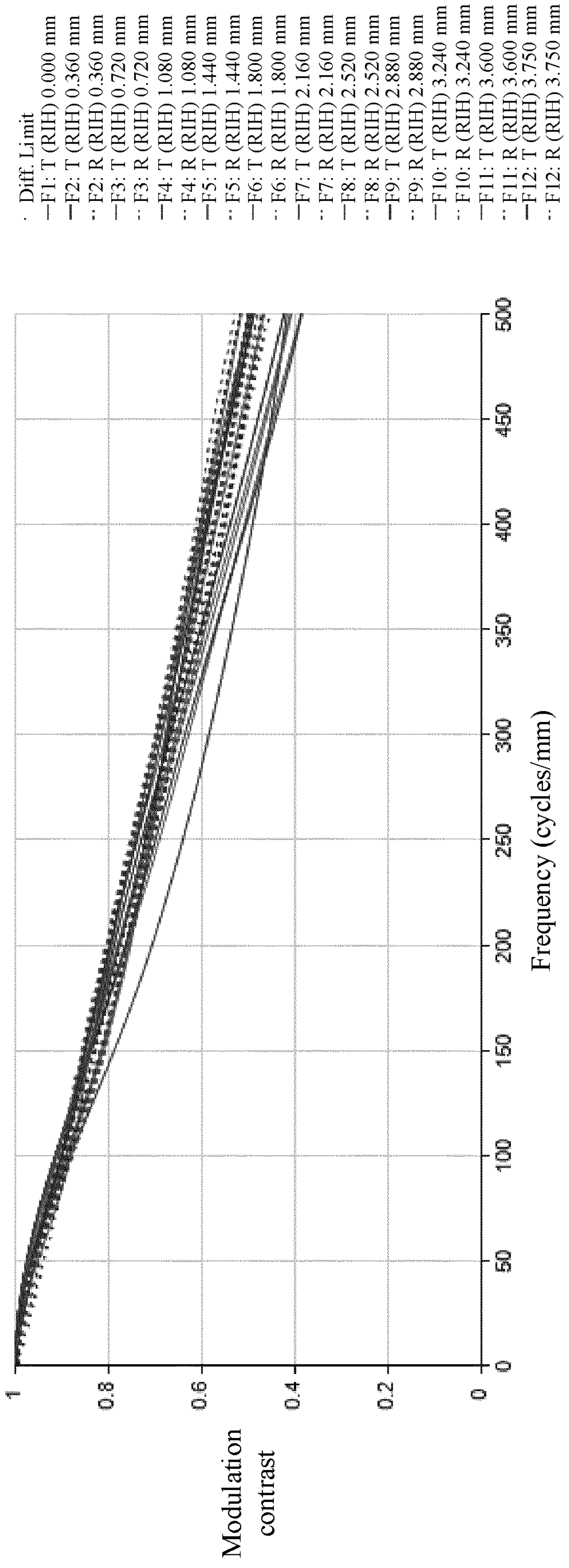


Rule 26,
15.03.2024

[FIG. 7]

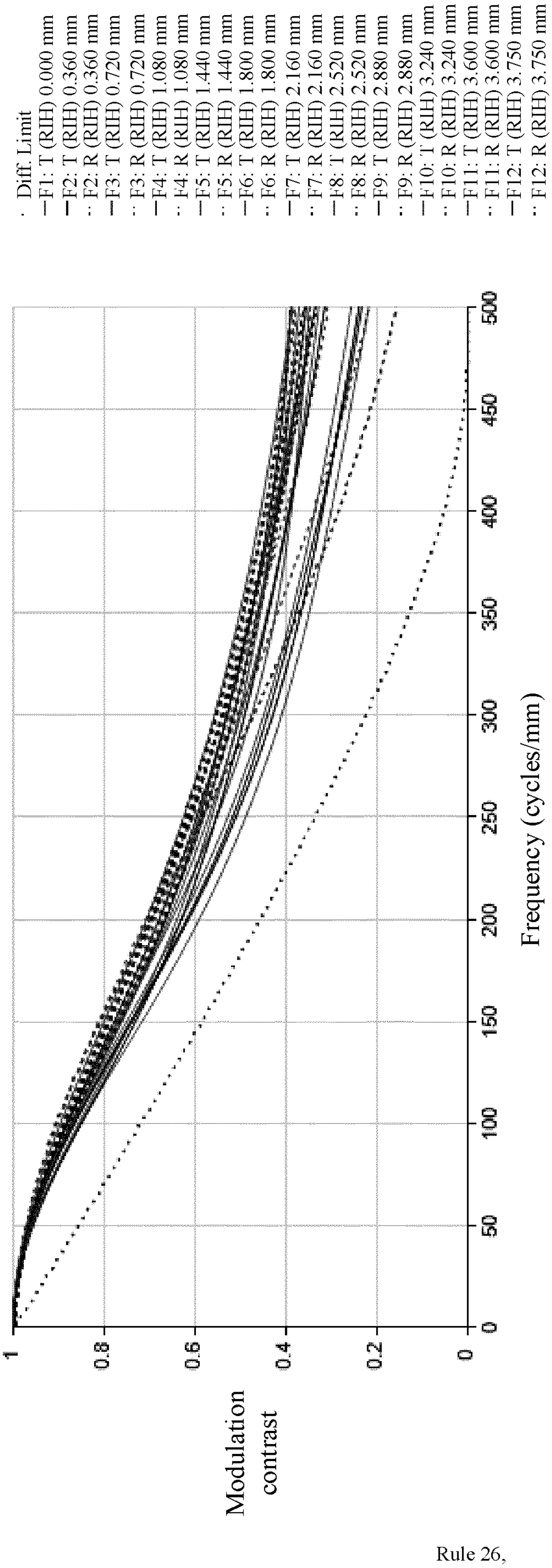


Rule 26,
15.03.2024

[FIG. 8]

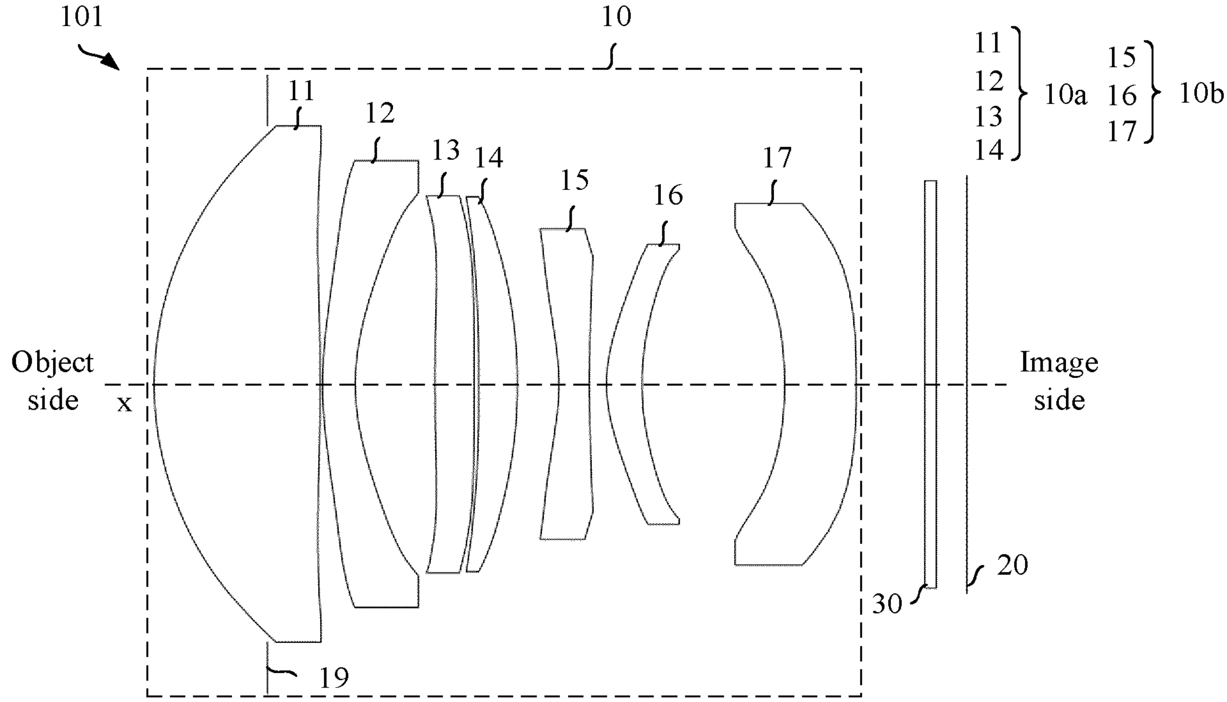
101
10
11
12
13
14
10a
15
16
17
10b
11
12
13
14
15
16
17
Object side
x
Image side
19
30
20

[FIG. 9]

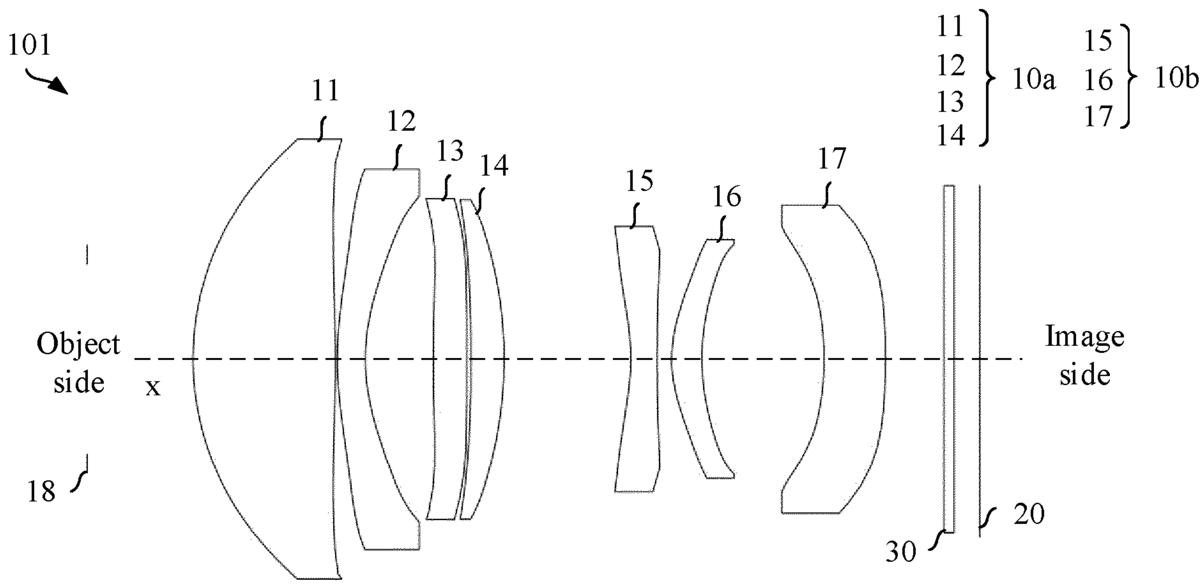
101
11
12
13
14
10a
15
16
17
10b
11
12
13
14
15
16
17
Object side
x
Image side
18
30
20

[FIG. 10]

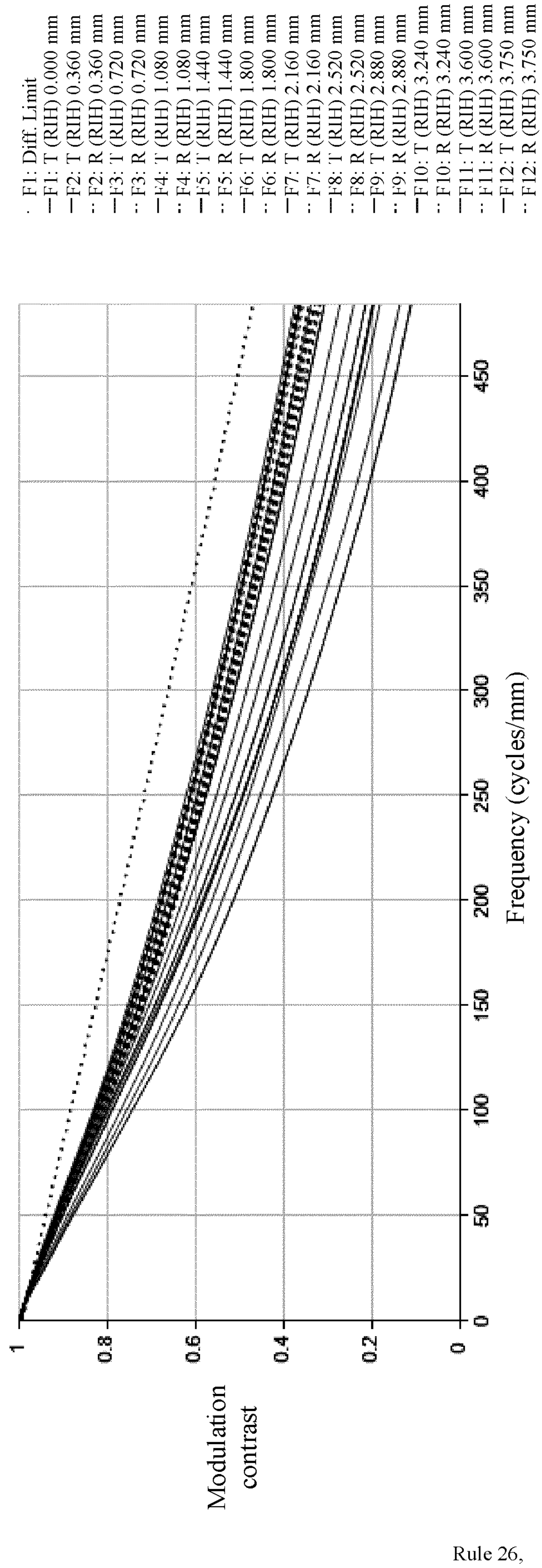


Rule 26,
15.03.2024

[FIG. 11]

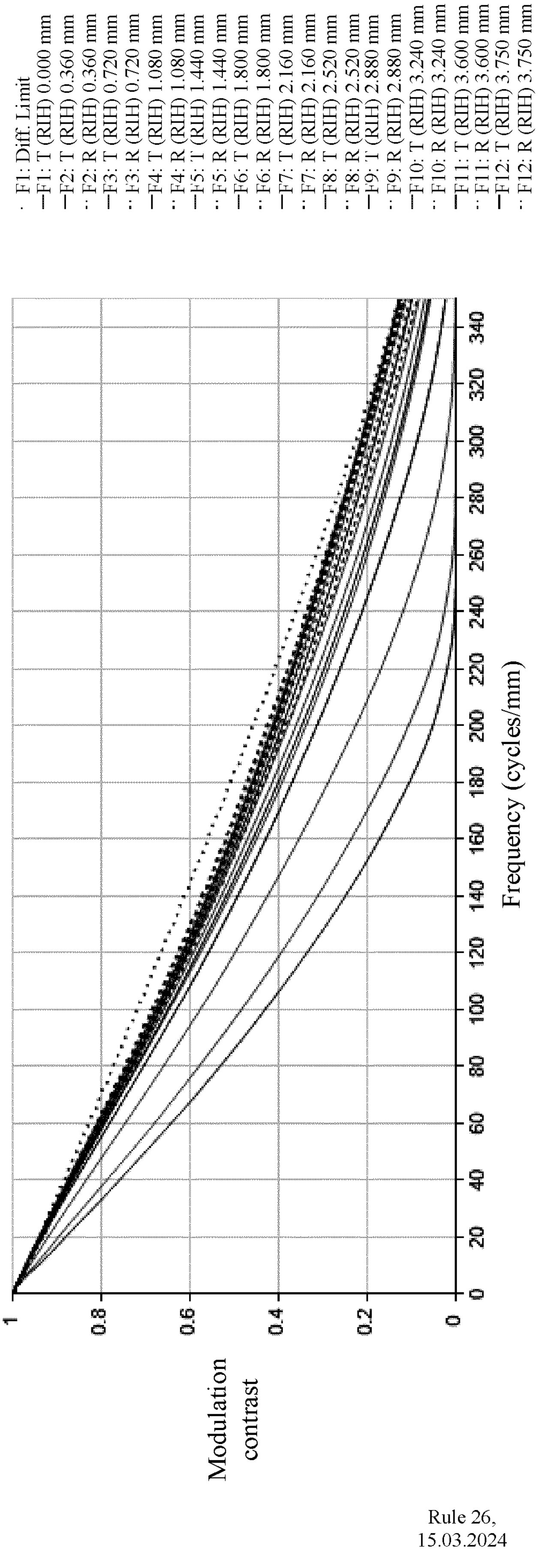


Rule 26,
15.03.2024

[FIG. 12]

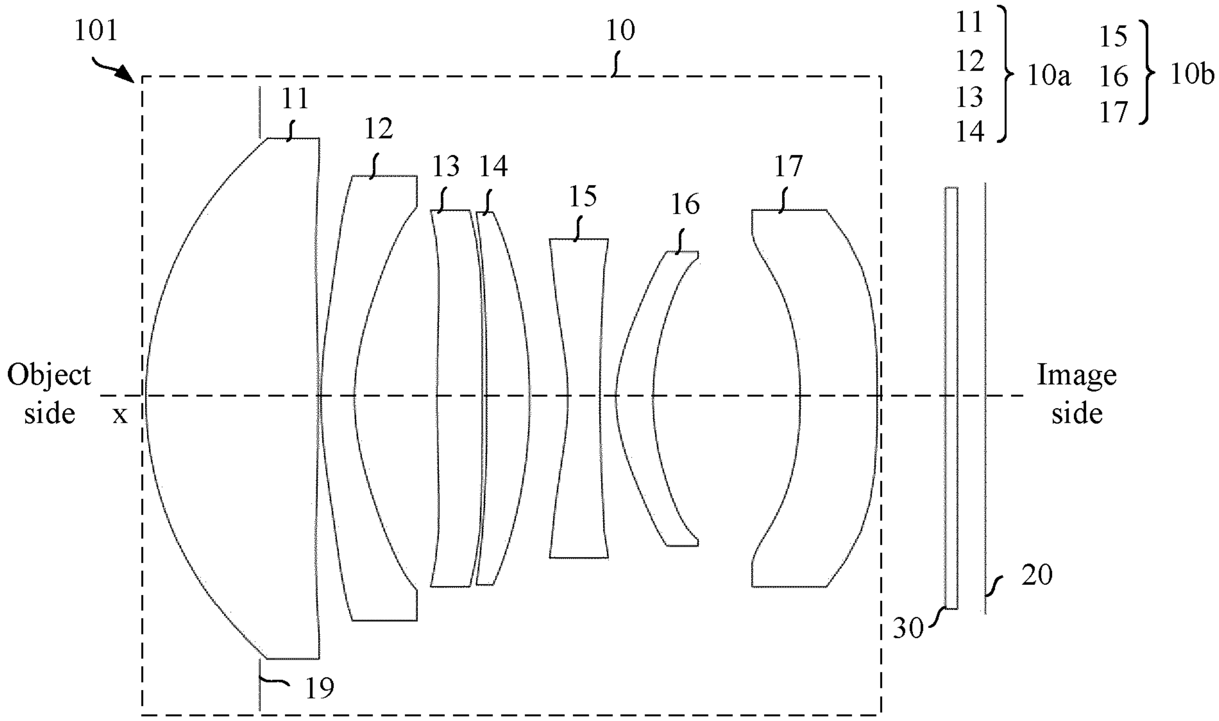
101
10
11
12
13
14
10a
15
16
17
10b
11
12
13
14
15
16
17
Object side
x
Image side
20
30
19

[FIG. 13]

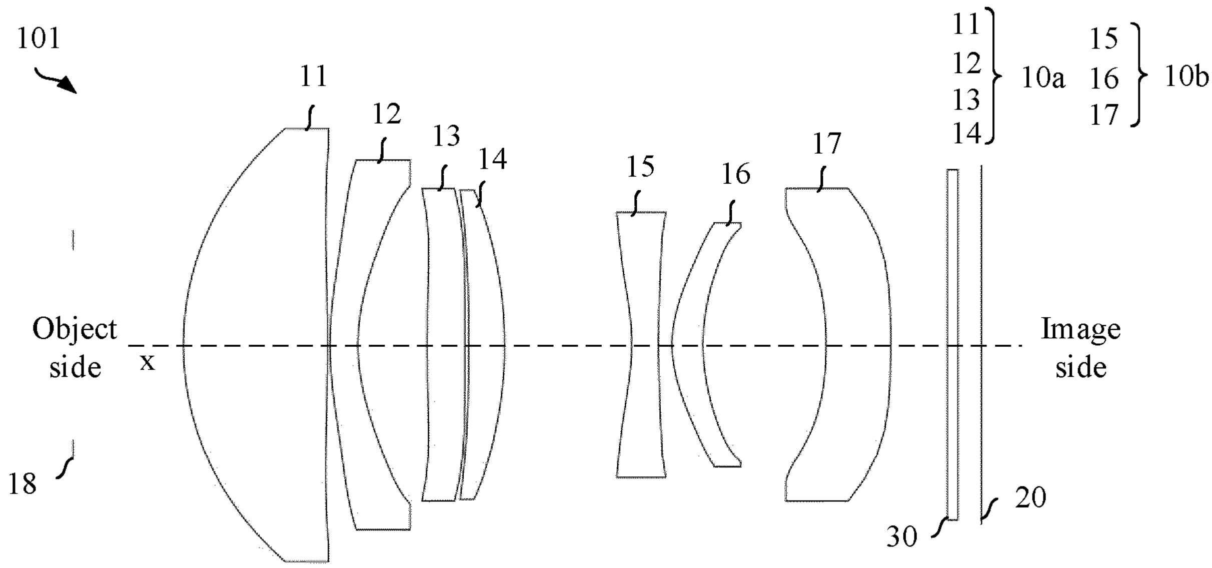
101
11
12
13
14
10a
15
16
17
10b
11
12
13
14
15
16
17
Object side
x
Image side
18
20
30

[FIG. 14]

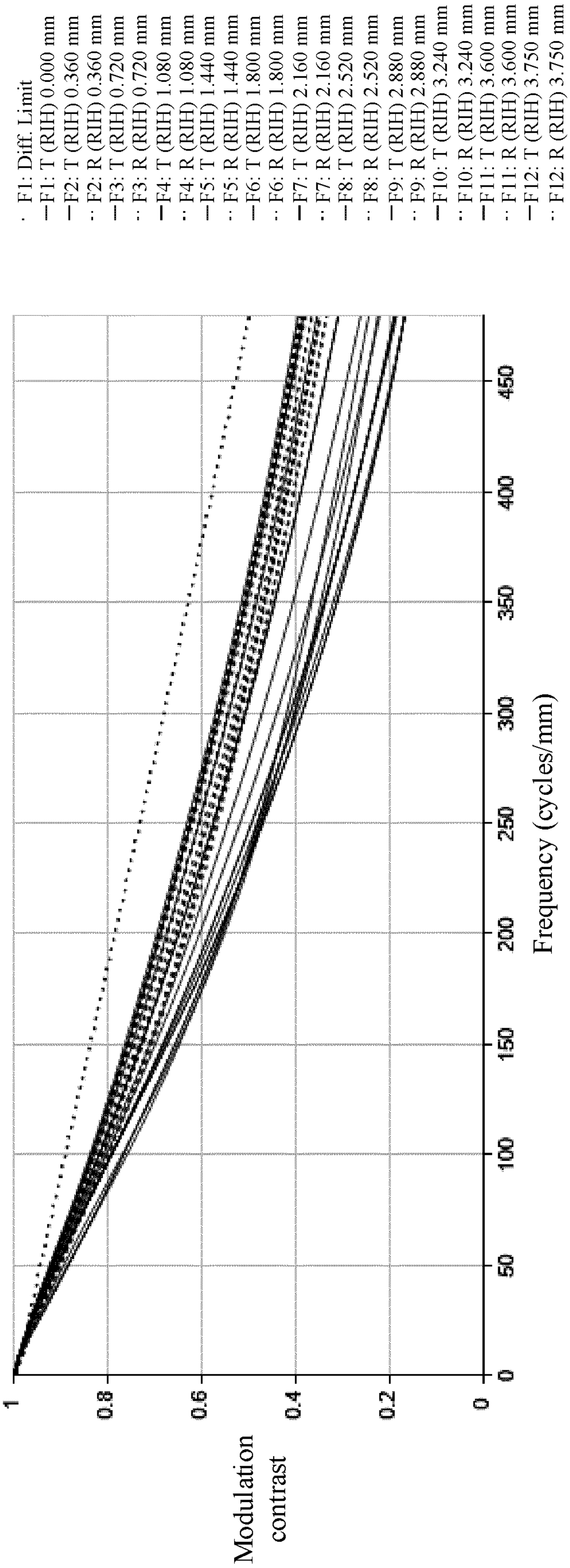


Rule 26,
15.03.2024

[FIG. 15]

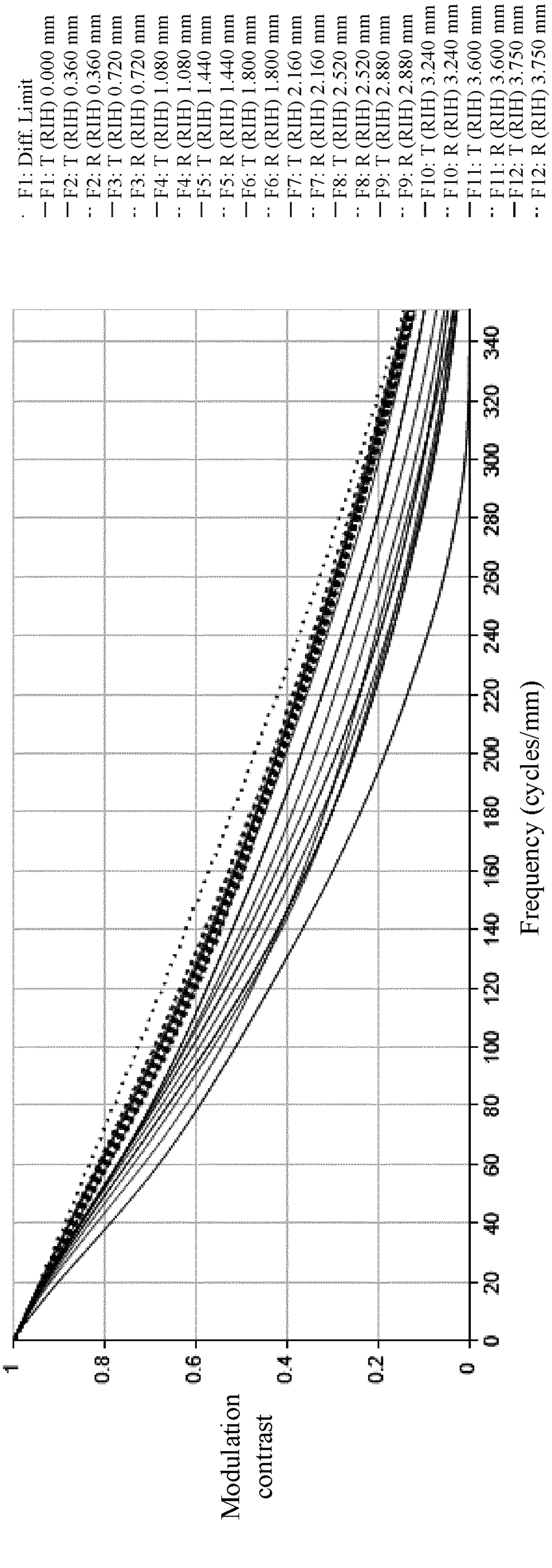


Rule 26,
15.03.2024

[FIG. 16]

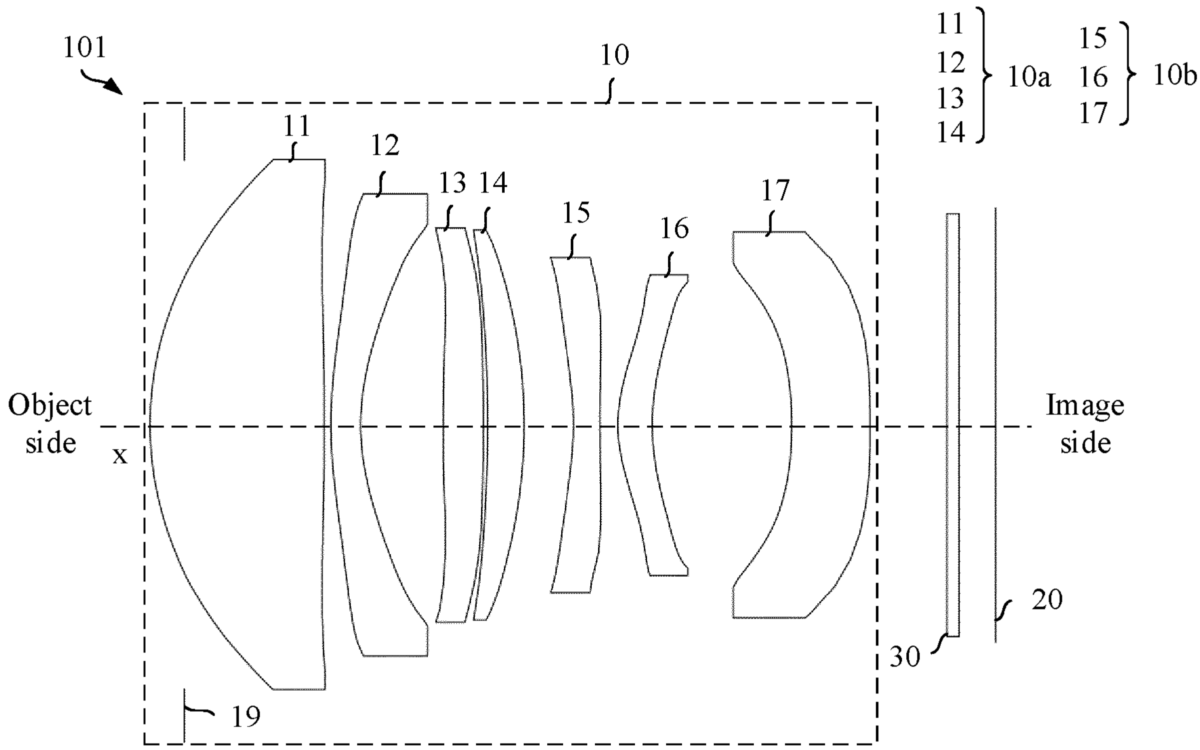
101
10
11
12
13
14
15
16
17
10a
10b
Object side
x
Image side
19
20
30

[FIG. 17]

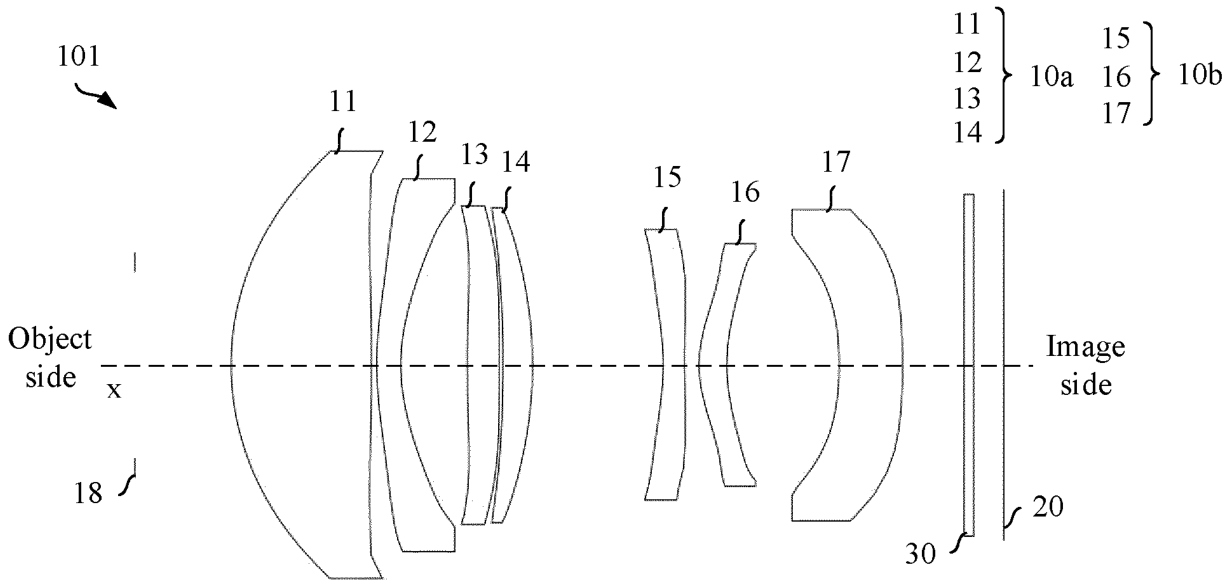
101
11
12
13
14
15
16
17
10a
10b
Object side
x
Image side
18
20
30

[FIG. 18]

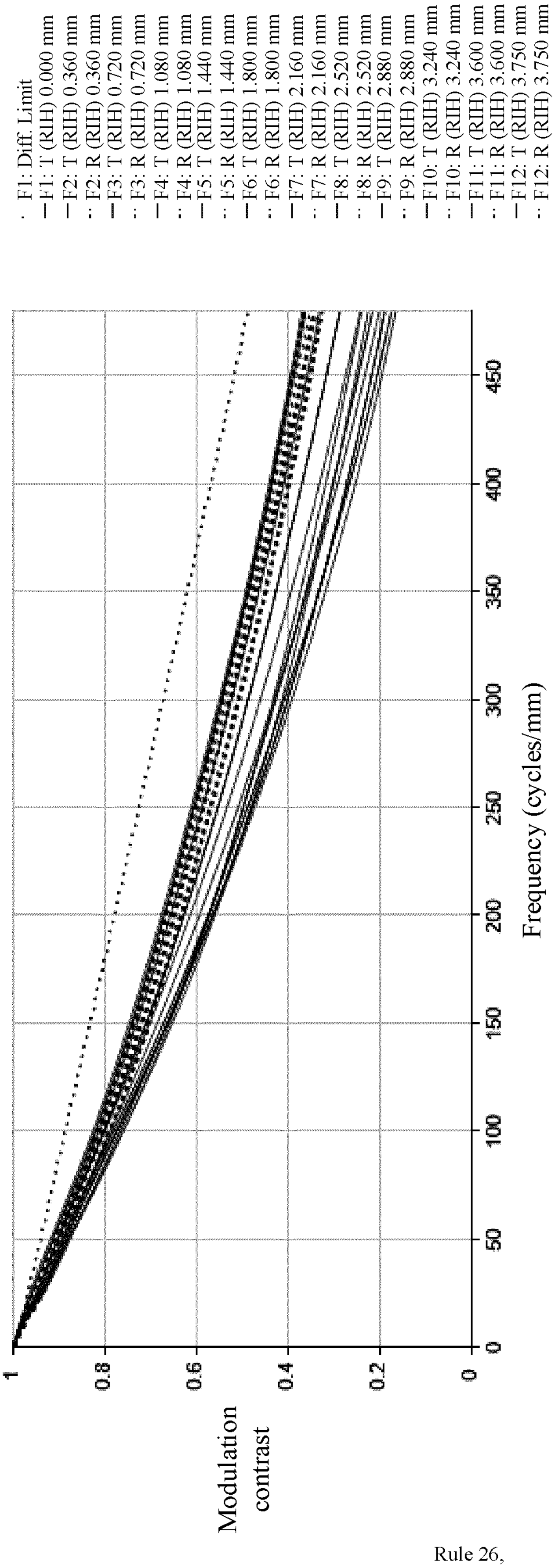


Rule 26,
15.03.2024

[FIG. 19]

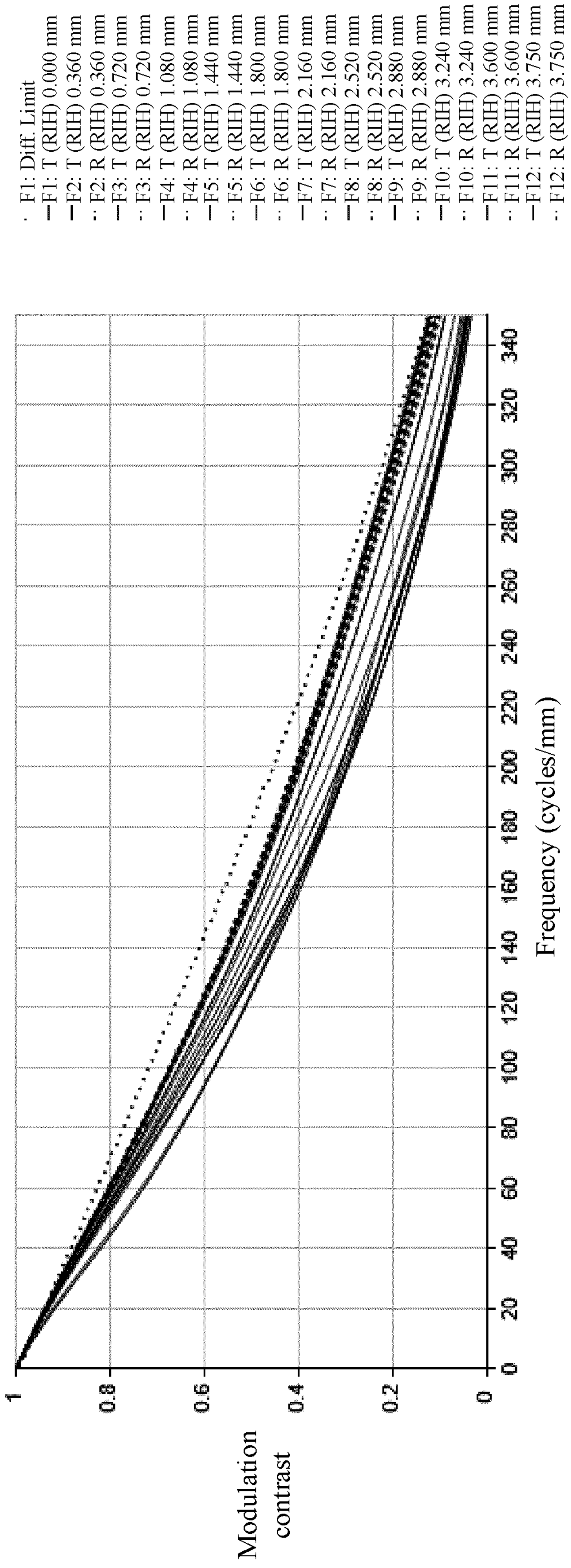


Rule 26,
15.03.2024

[FIG. 20]

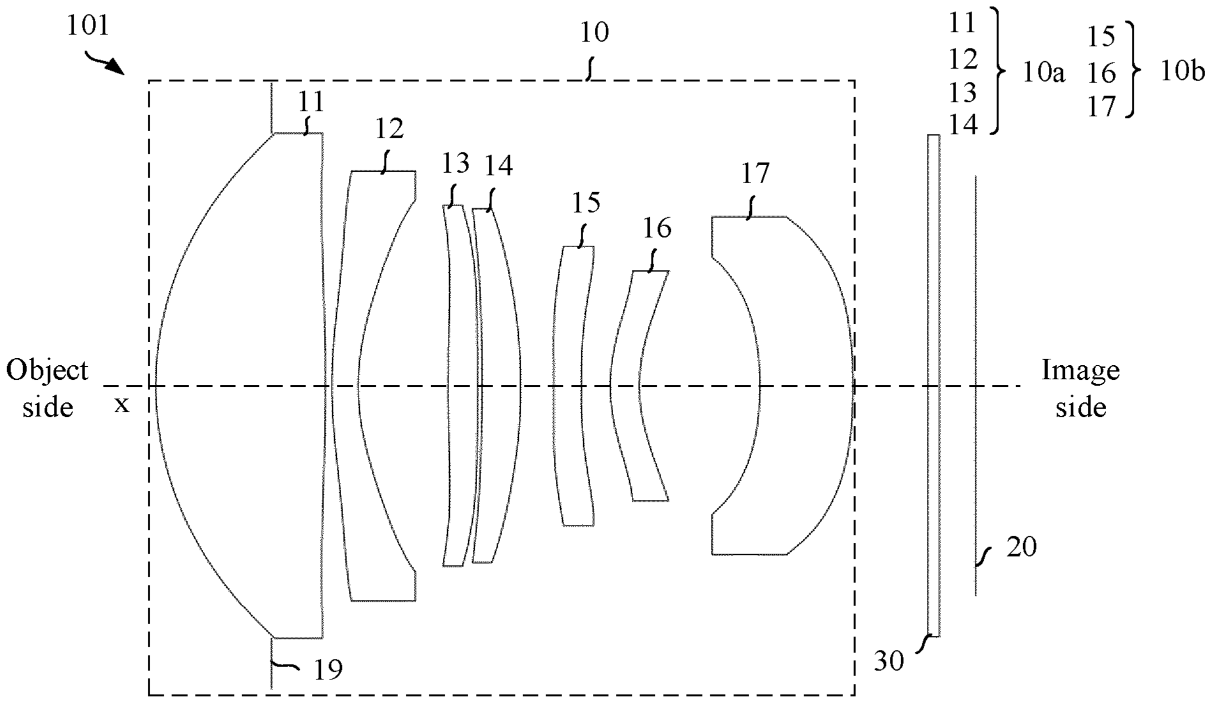
101
10
11
12
13
14
15
16
17
Object side
x
Image side
20
30
19
10a
10b

[FIG. 21]

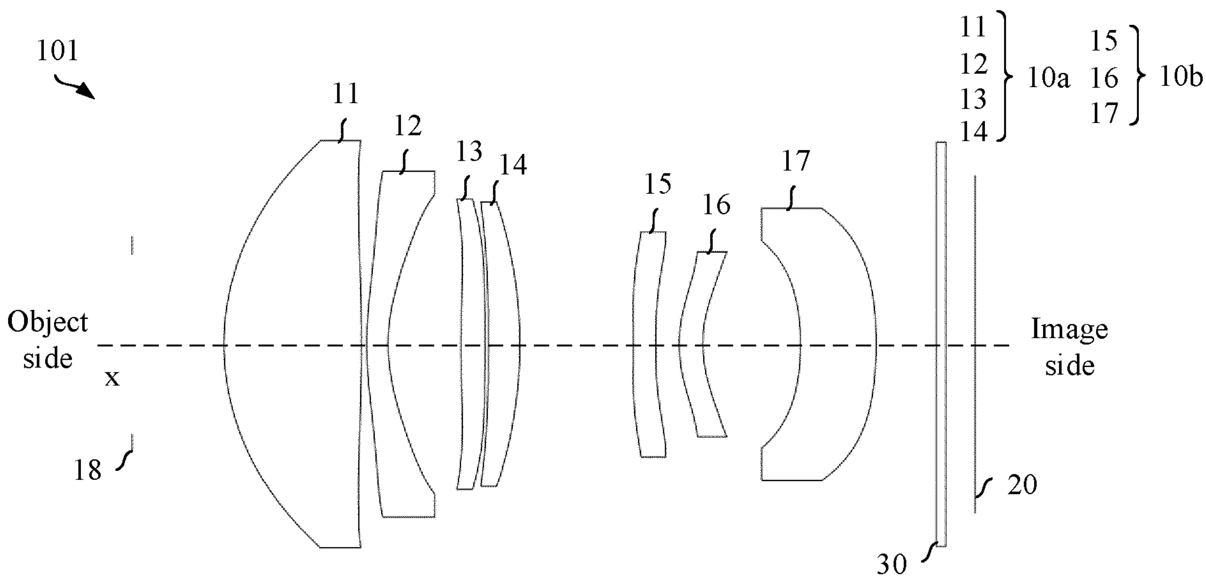
101
11
12
13
14
15
16
17
Object side
x
Image side
18
20
30
10a
10b

[FIG. 22]

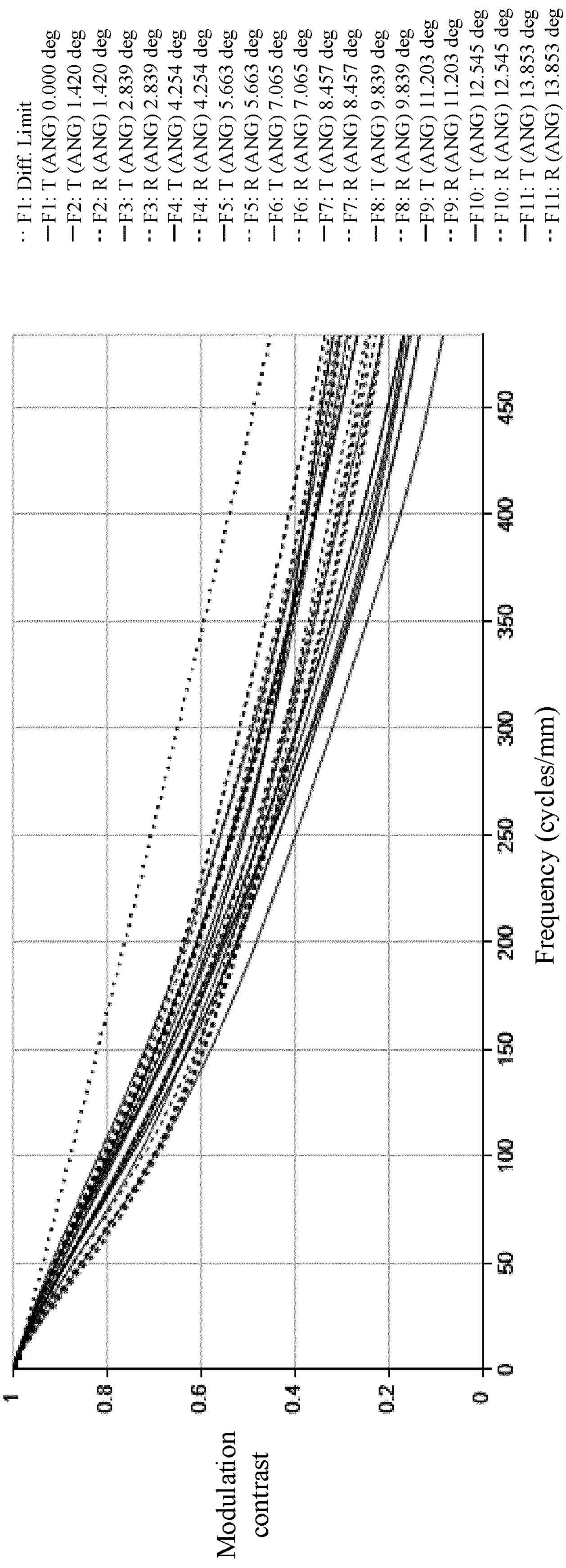


Rule 26,
15.03.2024

[FIG. 23]

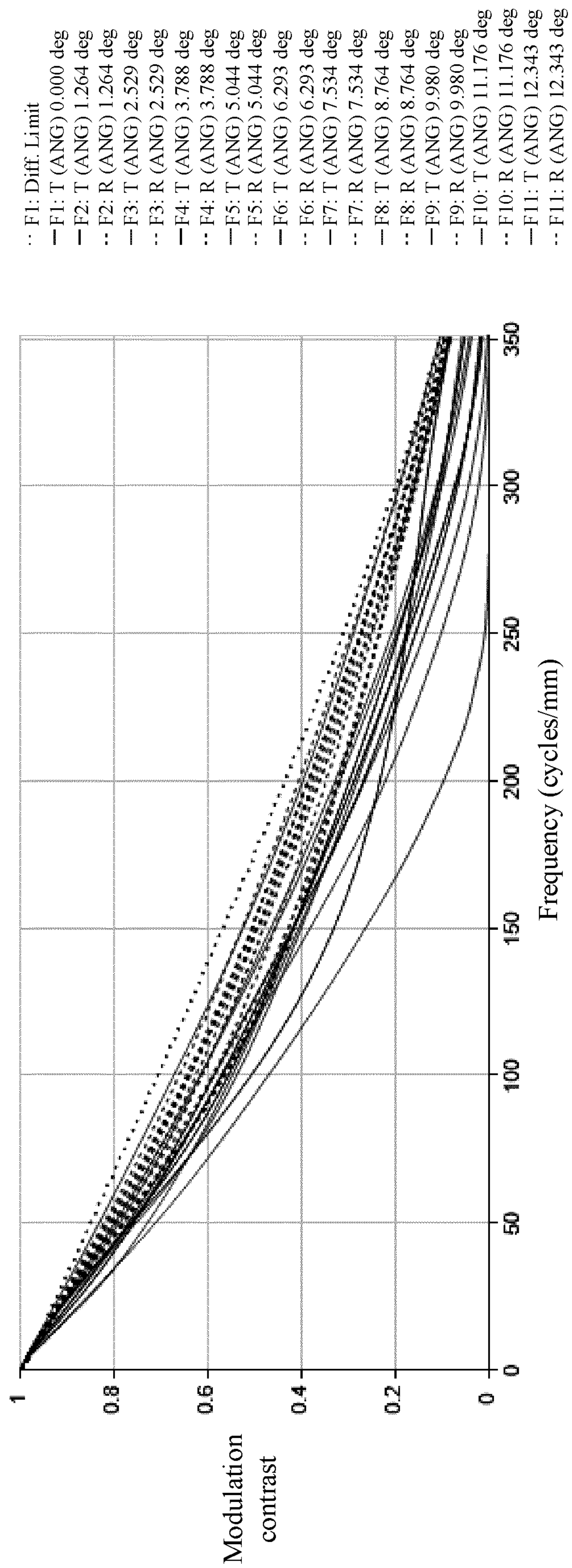


Rule 26,
15.03.2024

[FIG. 24]

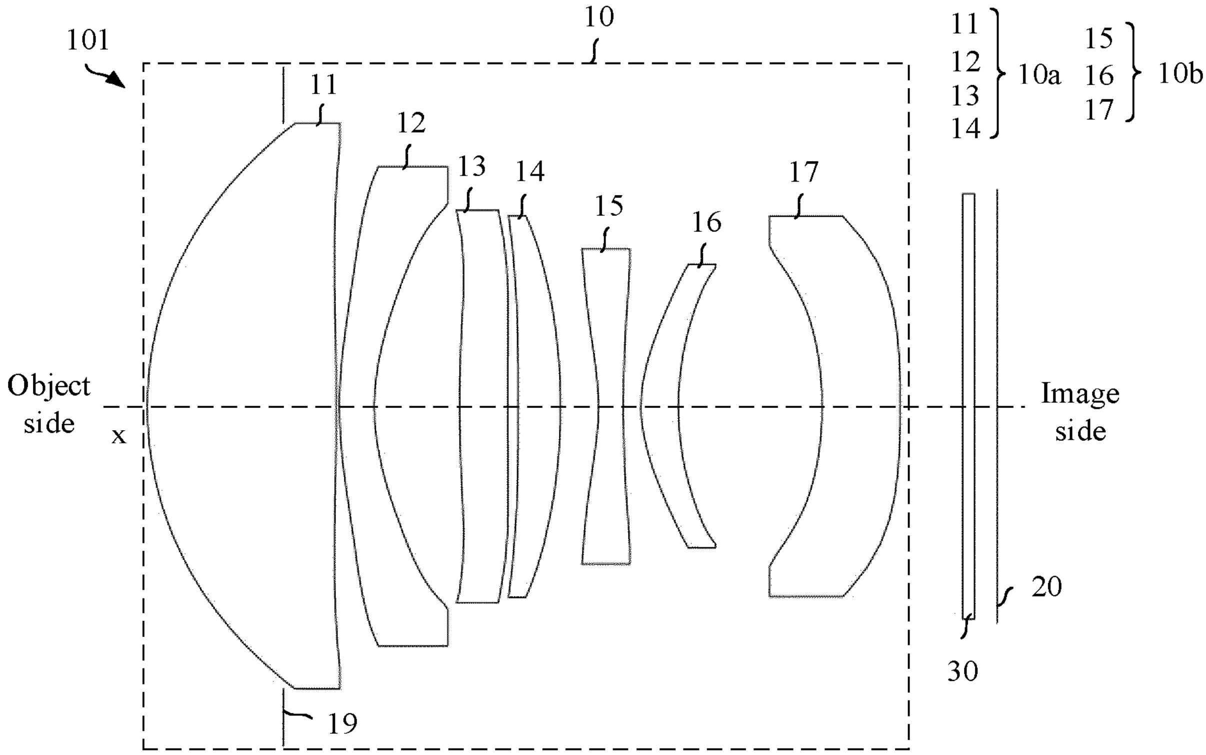
101
10
11
12
13
14
15
16
17
19
Object side
x
Image side
20
30
11
12
13
14
10a
15
16
17
10b

[FIG. 25]

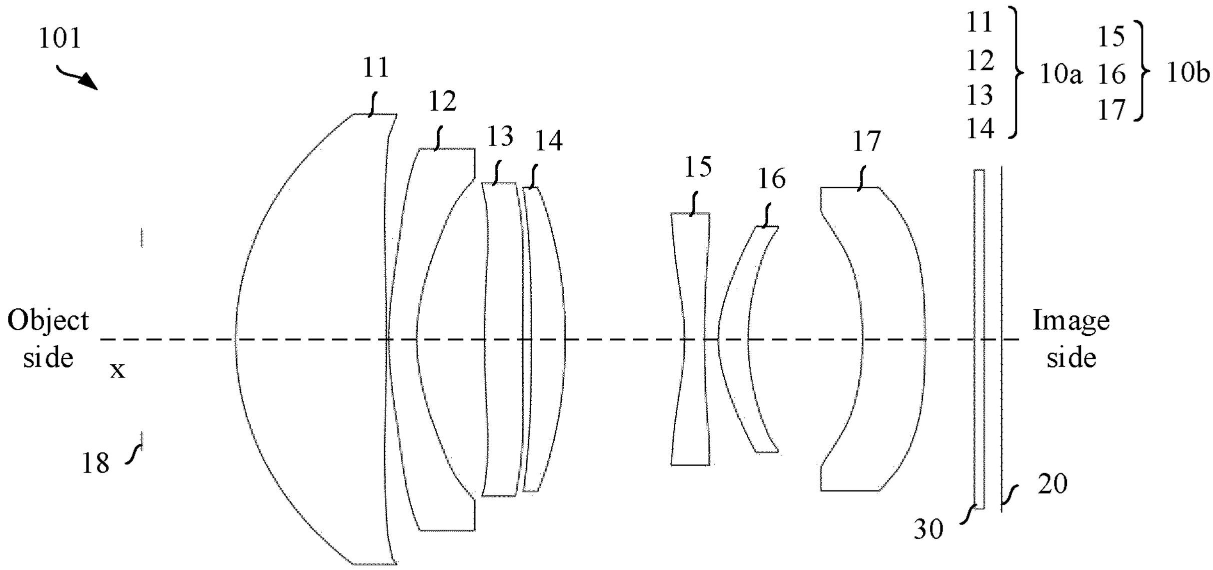
101
11
12
13
14
15
16
17
18
Object side
x
Image side
20
30
11
12
13
14
10a
15
16
17
10b

[FIG. 26]

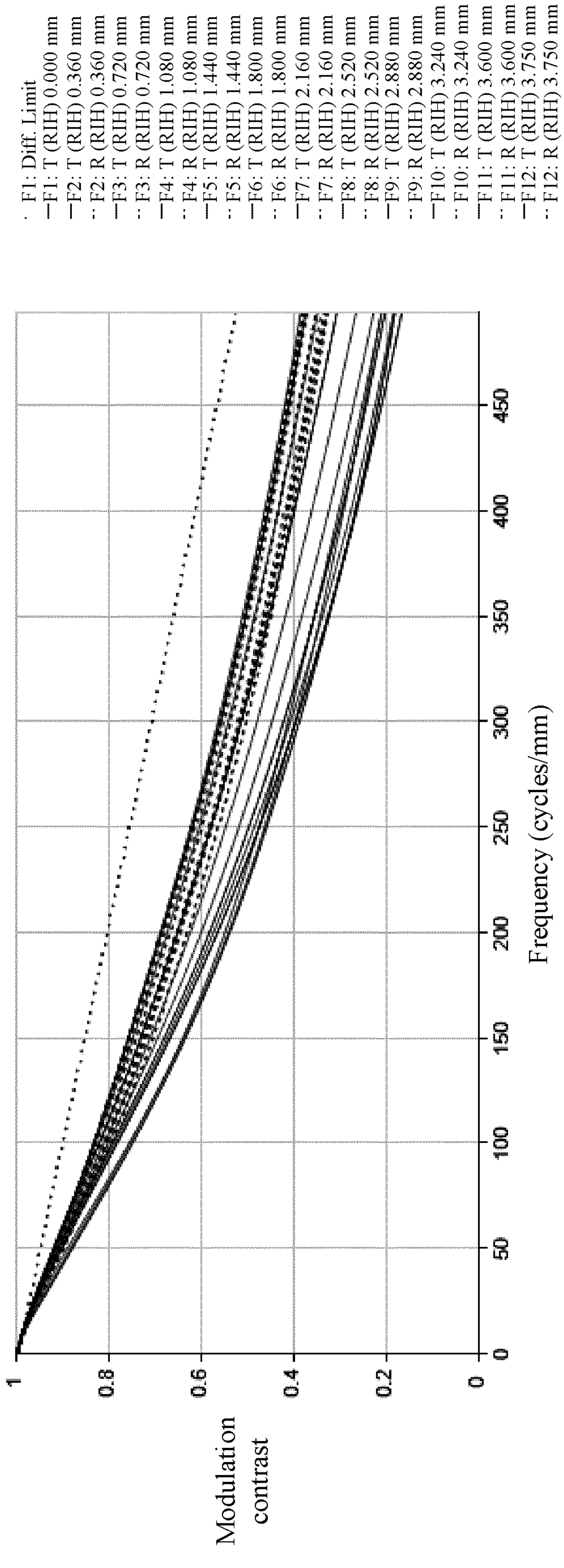


Rule 26,
15.03.2024

[FIG. 27]

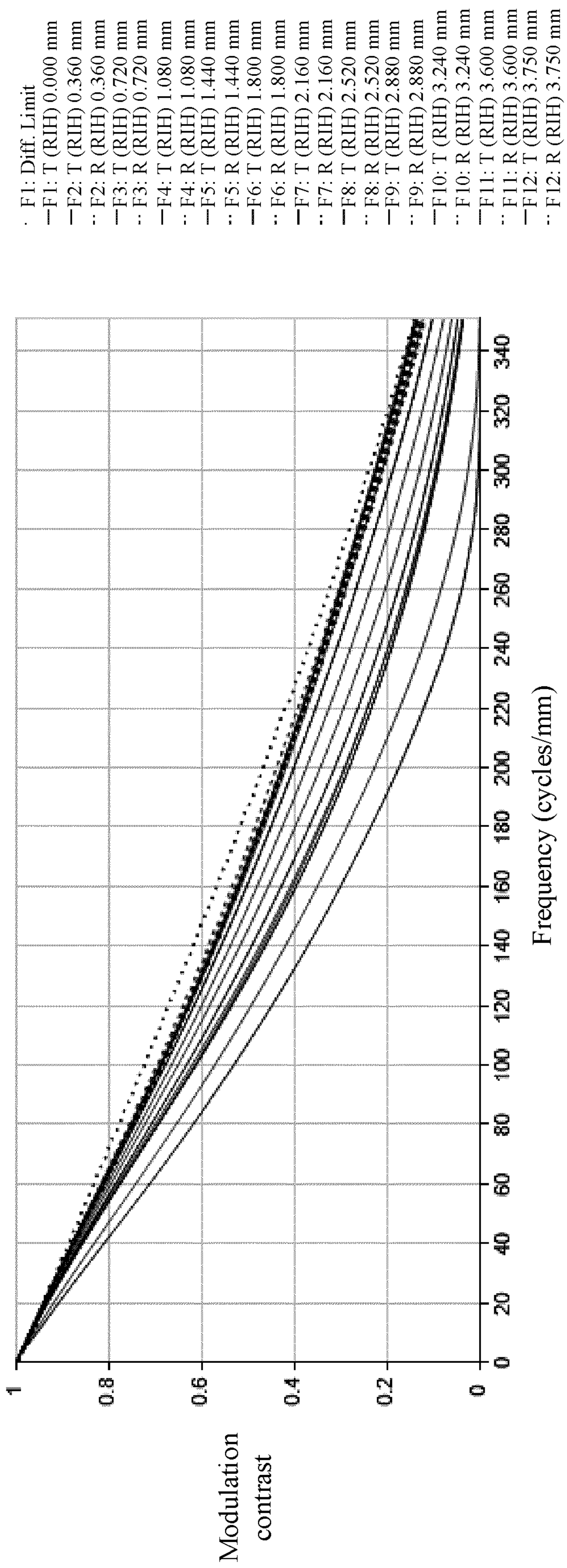


Rule 26,
15.03.2024

[FIG. 28]

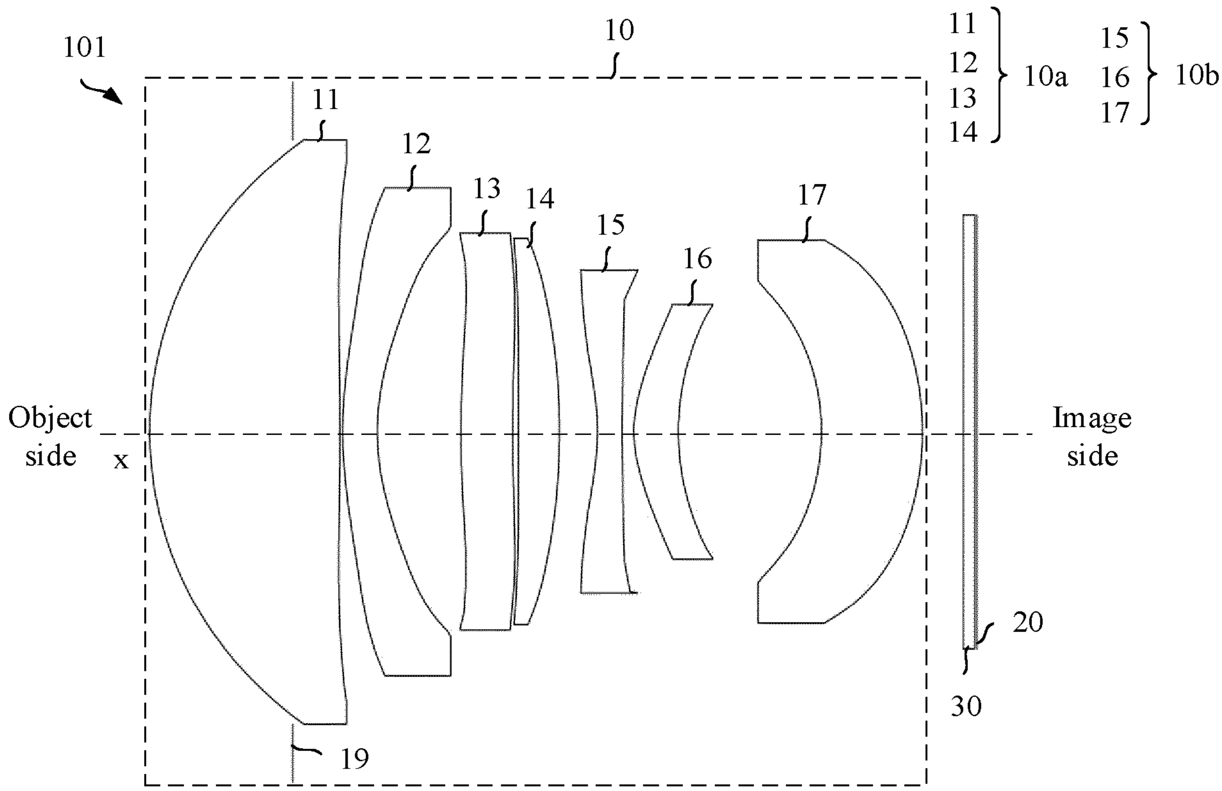
101
10
11
12
13
14
10a
15
16
17
10b
Object side
x
Image side
20
30
19

[FIG. 29]

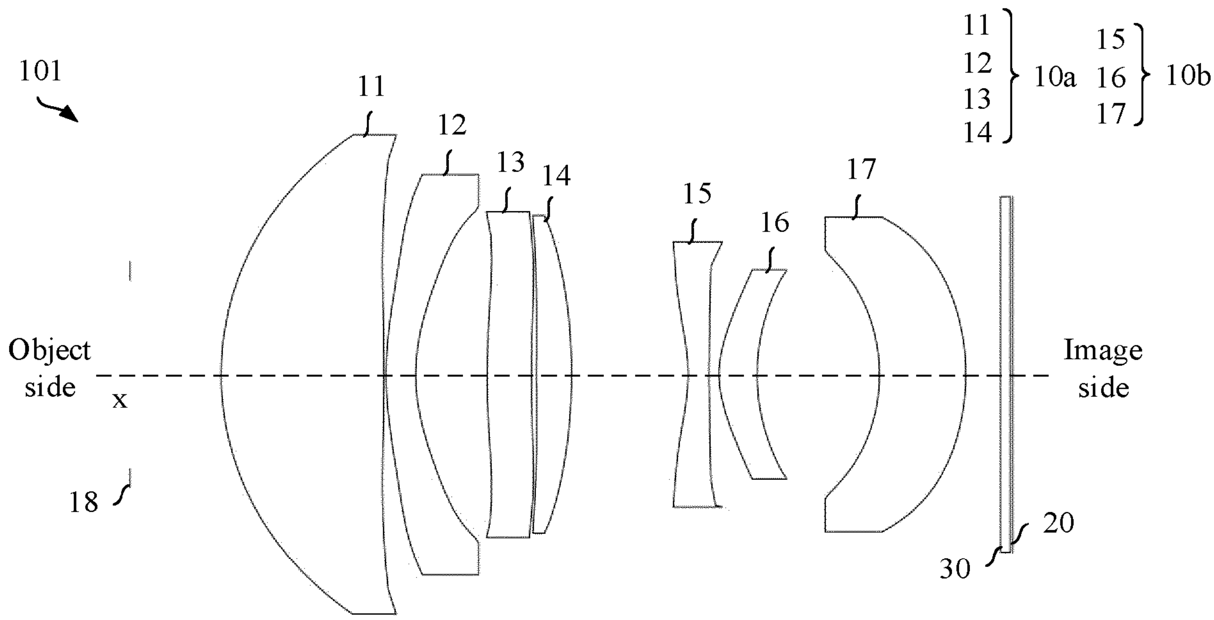
101
11
12
13
14
10a
15
16
17
10b
Object side
x
Image side
18
20
30

[FIG. 30]

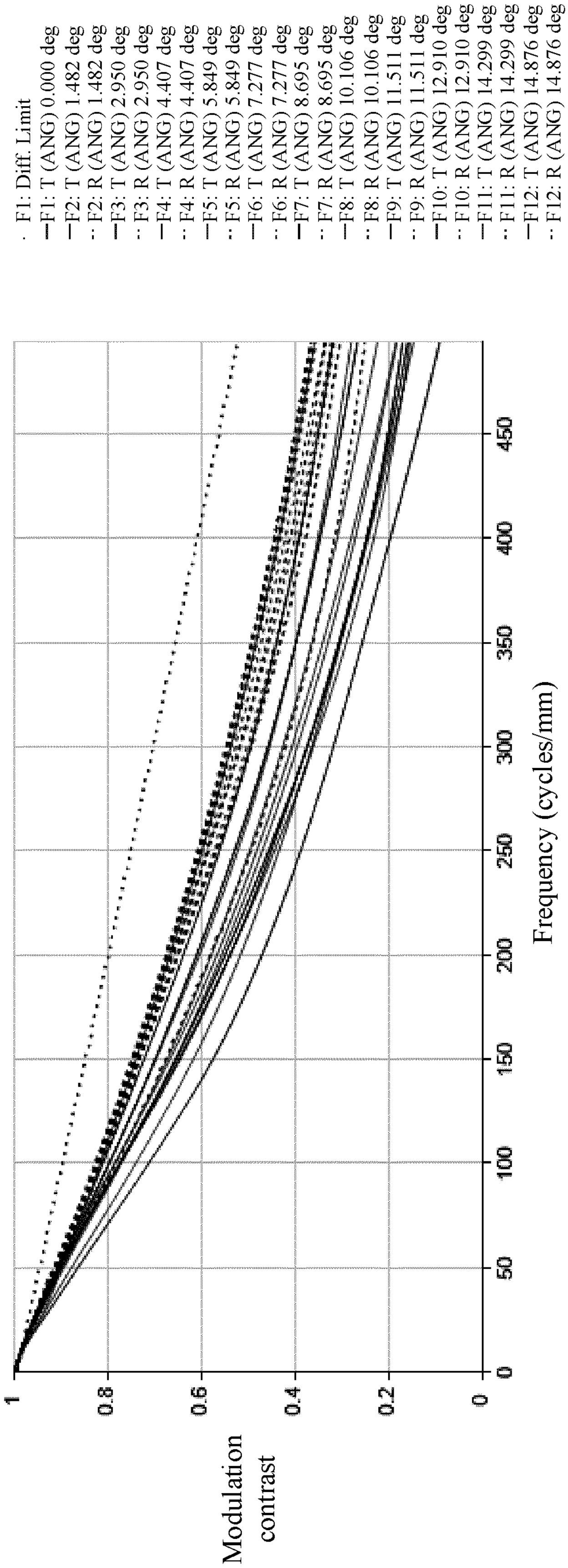


Rule 26,
15.03.2024

[FIG. 31]

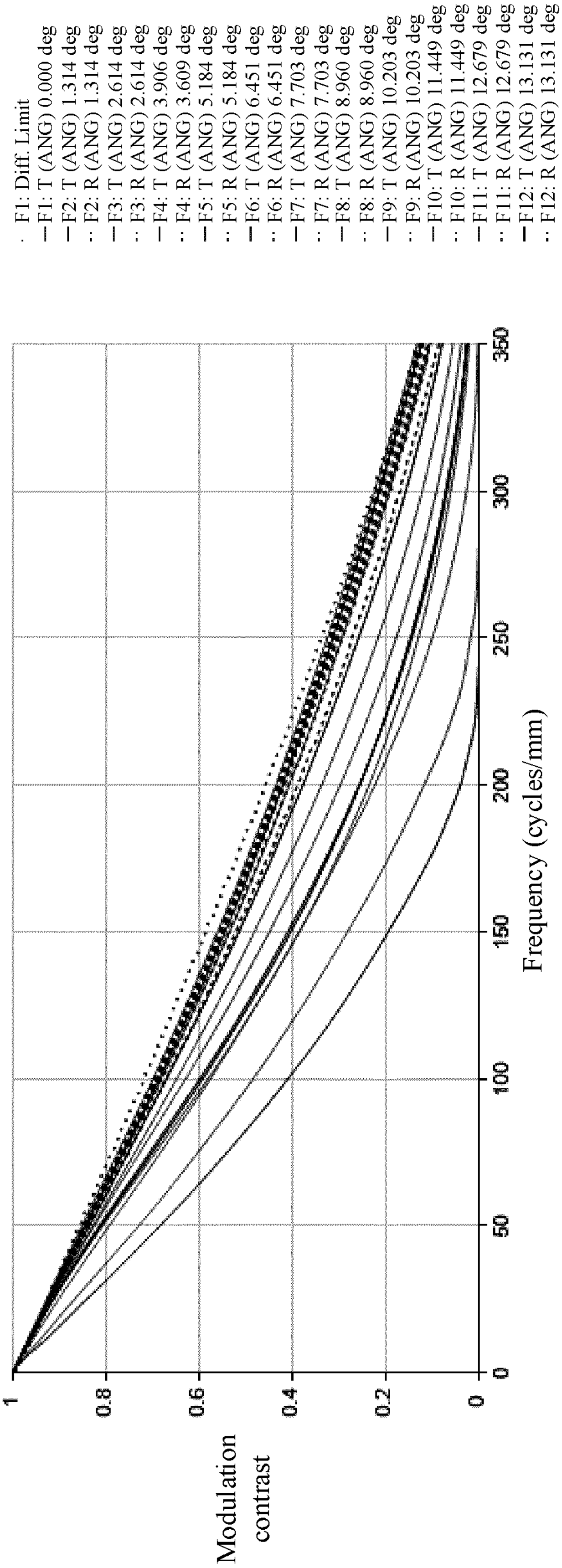


Rule 26,
15.03.2024

[FIG. 32]

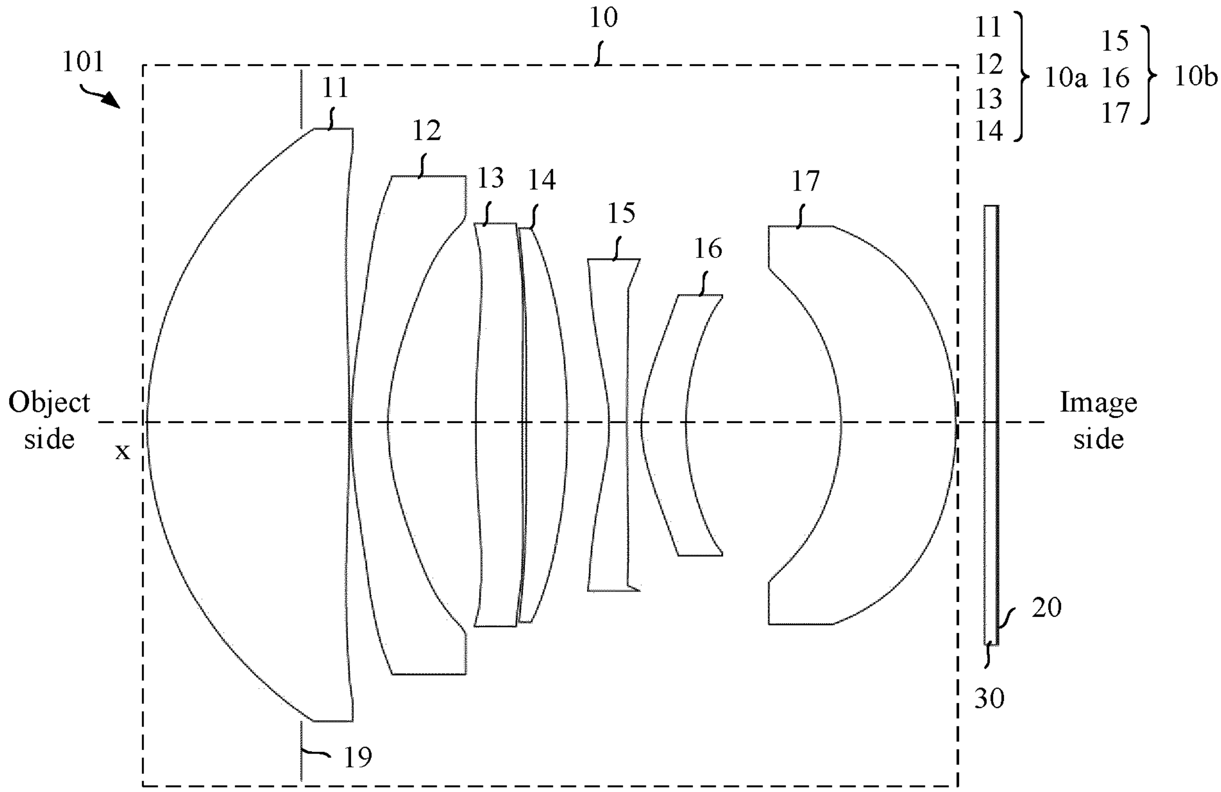
10
101
11
12
13
14
15
16
17
10a
10b
Object side
x
Image side
20
30
19

[FIG. 33]

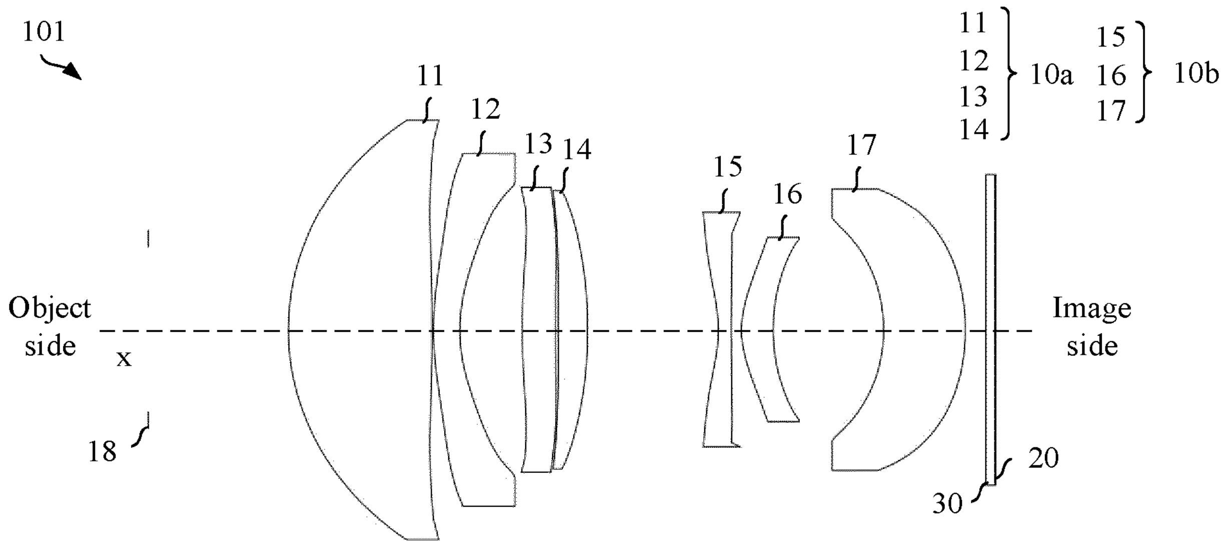
101
11
12
13
14
15
16
17
10a
10b
Object side
x
Image side
18
20
30

[FIG. 34]

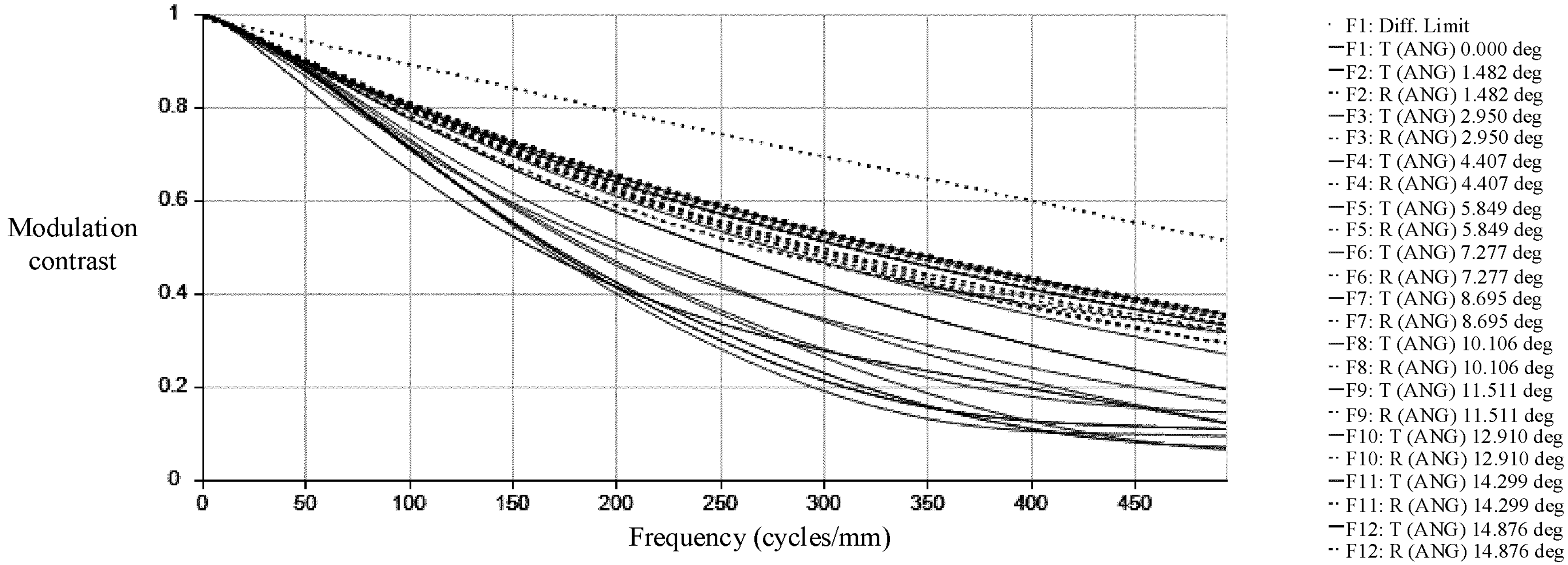


Rule 26,
15.03.2024

[FIG. 35]

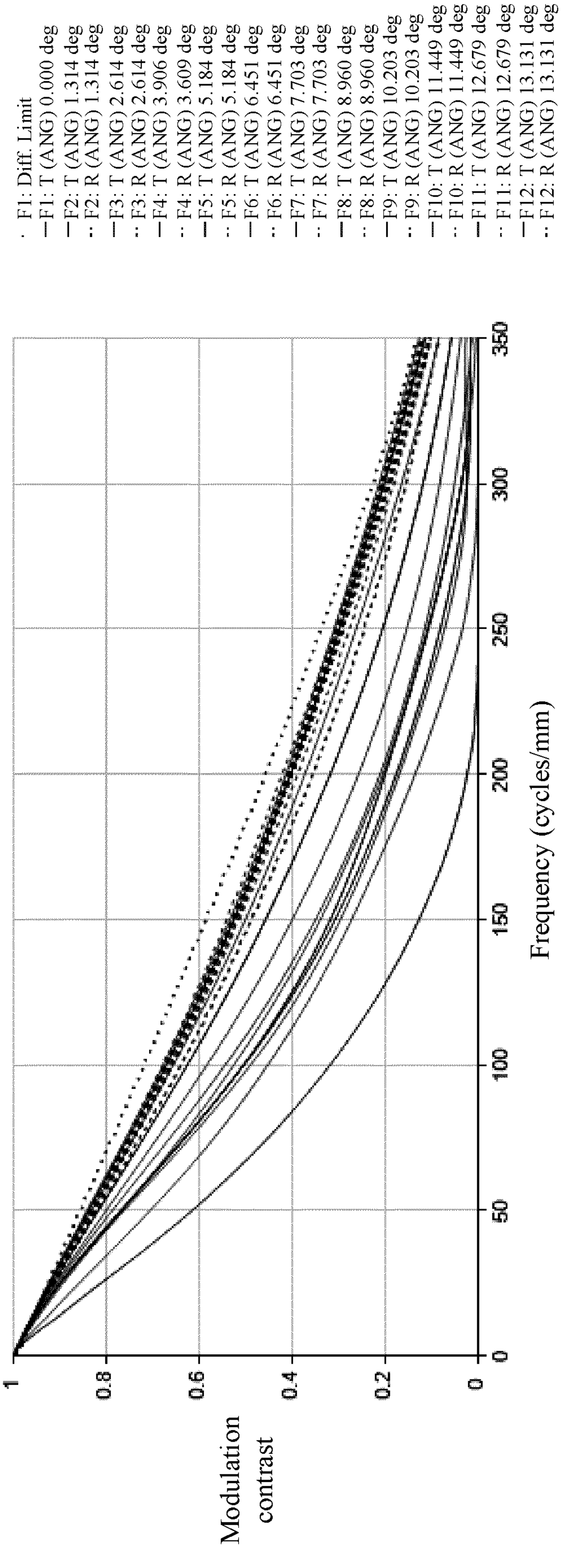


Rule 26,
15.03.2024

## INTERNATIONAL SEARCH REPORT

International application No.
**PCT/CN2023/142537**

**A. CLASSIFICATION OF SUBJECT MATTER**

G02B 13/00(2006.01)i; G02B 13/18(2006.01)i; G02B 15/14(2006.01)i; H04N 23/55(2023.01)i

According to International Patent Classification (IPC) or to both national classification and IPC

**B. FIELDS SEARCHED**

Minimum documentation searched (classification system followed by classification symbols)

IPC: G02B H04N

Documentation searched other than minimum documentation to the extent that such documents are included in the fields searched

Electronic data base consulted during the international search (name of data base and, where practicable, search terms used)

CNTXT; CNKI; VEN; ENTXT; ENTXTC; WPABS; WPABSC: 镜头, 镜组, 镜片, 光焦度, 正, 负, 第一, 第1, 第二, 第2, 长焦, 远焦, 长距, 远距, 远景, 短焦, 近焦, 近距, 近景, 微距, lens, group, first, 1st, second, 2nd, positive, negative, long, far, near, short, close

**C. DOCUMENTS CONSIDERED TO BE RELEVANT**

| Category* | Citation of document, with indication, where appropriate, of the relevant passages | Relevant to claim No. |
|---|---|---|
| X | CN 115616750 A (JIANGXI LIANYI OPTICAL CO., LTD.) 17 January 2023 (2023-01-17) description, paragraphs [0026]-[0097], and figures 1-32 | 1-17 |
| X | CN 115561881 A (HUAWEI TECHNOLOGIES CO., LTD.) 03 January 2023 (2023-01-03) description, paragraphs [0052]-[0286], and figures 1-14 | 1-17 |
| X | CN 115696007 A (HUAWEI TECHNOLOGIES CO., LTD.) 03 February 2023 (2023-02-03) description, paragraphs [0080]-[0223], and figures 1A-6D | 1-17 |
| A | CN 113946029 A (ZHEJIANG SUNNY OPTICS CO., LTD.) 18 January 2022 (2022-01-18) entire document | 1-17 |
| A | CN 216792547 U (UNION OPTECH CO., LTD.) 21 June 2022 (2022-06-21) entire document | 1-17 |
| A | JP H07181389 A (MINOLTA CO., LTD.) 21 July 1995 (1995-07-21) entire document | 1-17 |

☐ Further documents are listed in the continuation of Box C.　　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **01 March 2024** | **18 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/142537**

| Patent document cited in search report | Publication date (day/month/year) | Patent family member(s) | Publication date (day/month/year) |
|---|---|---|---|
| CN 115616750 A | 17 January 2023 | None | |
| CN 115561881 A | 03 January 2023 | None | |
| CN 115696007 A | 03 February 2023 | None | |
| CN 113946029 A | 18 January 2022 | None | |
| CN 216792547 U | 21 June 2022 | None | |
| JP H07181389 A | 21 July 1995 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310190080